(19) **Europäisches Patentamt / European Patent Office / Office européen des brevets**

(11) **EP 4 603 886 A1**

(12) **EUROPEAN PATENT APPLICATION**
published in accordance with Art. 153(4) EPC

(43) Date of publication:
20.08.2025 Bulletin 2025/34

(21) Application number: 23877723.9

(22) Date of filing: 12.10.2023

(51) International Patent Classification (IPC):
$G02B\ 13/00^{(2006.01)}$    $G01S\ 7/481^{(2006.01)}$
$G02B\ 3/00^{(2006.01)}$    $G02B\ 13/18^{(2006.01)}$
$G02B\ 5/20^{(2006.01)}$    $G02B\ 26/02^{(2006.01)}$

(52) Cooperative Patent Classification (CPC):
G01S 7/481; G02B 3/00; G02B 5/20; G02B 13/00;
G02B 13/18; G02B 26/02

(86) International application number:
PCT/KR2023/015767

(87) International publication number:
WO 2024/080800 (18.04.2024 Gazette 2024/16)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 12.10.2022 KR 20220130662
12.10.2022 KR 20220130664

(71) Applicant: **LG INNOTEK CO. LTD**
**Gangseo-gu**
**Seoul 07796 (KR)**

(72) Inventors:
• **KIM, Jin Young**
**Seoul 07796 (KR)**
• **LEE, Chang Hyuck**
**Seoul 07796 (KR)**

(74) Representative: **Plasseraud IP**
**104 Rue de Richelieu**
**CS92104**
**75080 Paris Cedex 02 (FR)**

(54) **RECEIVING OPTICAL SYSTEM, TRANSMITTING OPTICAL SYSTEM, SENSOR SYSTEM, AND LIDAR DEVICE**

(57) An receiving optical system disclosed in an embodiment of the invention includes a first lens closest to an object side; an n-th lens closest to an image sensor (n is 6 or less); a plurality of lenses disposed between the first lens and the n-th lens and aligned in an optical axis; and an optical filter disposed in one of regions between the plurality of lenses, wherein an optical axis distance from the optical filter to a surface of the image sensor is D1, and an optical axis distance from a sensor-side surface of the n-th lens closest to the image sensor to the surface of the image sensor is BFL, and may satisfy the following Equation: BFL < D1.

FIG. 1

## Description

[Technical Field]

An embodiment of the invention relates to a receiving optical system and a sensor system having the same. An embodiment of the invention relates to a transmitting optical system and a sensor system having the same. An embodiment of the invention relates to a receiving optical system and transmitting optical system for LiDAR (Light detection and ranging) and a device having the same. An embodiment of the invention relates to a receiving optical system and transmitting optical system for LiDAR and a moving object having the system.

[Background Art]

ADAS (Advanced driving assistance system) is an advanced driver assistance system that assists the driver in driving. It consists of sensing the situation ahead, judging the situation based on the sensed results, and controlling the vehicle's behavior based on the situation judgment. For example, the ADAS sensor device detects the vehicle ahead and recognizes the lane. Afterwards, when the target lane, target speed, and target ahead are determined, the vehicle's ESC (Electrical stability control), EMS (Engine management system), and MDPS (Motor driven power steering) are controlled. Representative examples of ADAS include automatic parking systems, low-speed city driving assistance systems, and blind spot warning systems.

Recently, as interest in autonomous vehicles has increased, demand for LiDAR (Light detection and ranging) sensors, which are its core components, is increasing. Currently, LiDAR is only used for high-spec, expensive vehicles, but it is expected to be applied to general vehicles as well due to reduced manufacturing costs. Ultra-small and ultra-light LiDAR technology can be used not only as a sensor for unmanned mobile devices, but also in satellites and aerospace for observing the Earth's topography and environment, unmanned vehicles, transporters, cranes, and robots used in factories and shipyards, and is expected to emerge as a complex or cooperative operation between mobile devices through an integrated approach in the land, aviation, and marine industries, and as a result, it is urgent to develop an optical system for ultra-small and ultra-light LiDAR to implement ultra-small and ultra-light LiDAR.

[Disclosure]

[Technical Problem]

An embodiment provides a receiving optical system having improved optical characteristics and a sensor system having the same. An embodiment provides a wide-angle receiving optical system and a sensor system having the same. An embodiment provides a receiving optical system, a sensor system, and a LiDAR device having improved thermal compensation characteristics.

An embodiment provides a transmitting optical system having improved optical characteristics and a sensor system having the same. An embodiment provides a wide-angle transmitting optical system and a sensor system having the same. An embodiment provides a transmitting optical system, a sensor system, and a Lidar device having improved thermal compensation characteristics.

[Technical Solution]

A receiving optical system according to an embodiment of the invention comprises a first lens closest to an object; an n-th lens closest to an image sensor (n is 6 or less); a plurality of lenses disposed between the first lens and the n-th lens and aligned in an optical axis; and an optical filter disposed in one of regions between the plurality of lenses, wherein an optical axis distance from the optical filter to a surface of the image sensor is D1, and an optical axis distance from a sensor-side surface of the n-th lens closest to the image sensor to the surface of the image sensor is BFL, and may satisfy the following Equation: BFL < D1.

According to an embodiment of the invention, the receiving optical system includes an aperture stop disposed between a lens disposed on an object side of the optical filter and the optical filter and around of the lens disposed the object side of the optical filter, wherein SD is an optical axis distance from the aperture stop to the surface of the image sensor, and may satisfy the following Equation: 1 < SD / D1 < 1.2.

According to an embodiment of the invention, CTn is a center thickness of the n-th lens, CTn-1 is a center thickness of an n-1th lens disposed on the object side of the n-th lens, and TTL is an optical axis distance from a center of an object-side surface of the first lens to the surface of the image sensor, and may satisfy the following Equation: (CTn+CTn-1) < D1 < TTL/2.

According to an embodiment of the invention, the optical filter may be a bandpass filter that passes a range of 890 nm to 960 nm.

The first lens may include a convex object-side surface and a concave sensor-side surface on the optical axis. The second lens spaced apart from the first lens toward the sensor side may have a flat object-side surface and a concave sensor-side surface. The third lens spaced apart from the optical filter toward the object side may have a shape in which both sides are convex on the optical axis, and the fourth lens spaced apart from the optical filter toward the sensor side may have a shape in which both sides are convex on the optical axis. The n-th lens may have a convex object-side surface and a convex sensor-side surface on the optical axis.

According to an embodiment of the invention, the first lens has negative refractive power, the n-th lens has positive refractive power, and a number of lenses having positive refractive power among the plurality of lenses may be greater than a number of lenses having negative refractive power among the plurality of lenses. The object-side surface of the first lens has a maximum effective diameter among the lenses of the optical system, and a sensor-side surface of the second lens disposed on the sensor side of the first lens has a minimum effective diameter among the lenses of the optical system, and the first lens is a spherical lens, and the n-th lens is a fifth lens and may be an aspherical lens.

A transmitting optical system of according to an embodiment of the invention comprises a first lens closest to an object; an n-th lens closest to a light source (n is 6 or less); and a plurality of lenses arranged between the first lens and the n-th lens and aligned along the optical axis, wherein the first lens has a meniscus shape convex toward the object side, the n-th lens has a shape in which both sides are convex on the optical axis, and an n-1th lens disposed an object side of the n-th lens has a shape in which both sides are convex on the optical axis, the first lens is made of glass, and an object-side surface and a light source-side surface of the first lens on the optical axis may be spherical, and the n-th lens may be made of glass, and the object-side surface and the light source-side surface of the n-th lens on the optical axis may be aspherical.

According to an embodiment of the invention, the second lens disposed on the light source side of the first lens may have a flat object-side surface and a concave light source-side surface on the optical axis.

According to an embodiment of the invention, the third lens disposed on the light source side of the second lens has a shape in which both sides are convex on the optical axis, the fourth lens disposed on the light source side of the third lens has a shape in which both sides are convex on the optical axis, the third lens may have a shape in which both sides are spherical on the optical axis, and the fourth lens may have a shape in which both sides are spherical on the optical axis.

According to an embodiment of the invention, the first lens may have negative refractive power, the n-th lens may be a fifth lens and have positive refractive power, and a number of lenses having positive refractive power may be greater than a number of lenses having negative refractive power.

A Lidar device according to an embodiment of the invention includes a receiving optical system having an image sensor, and first to fifth lenses aligned along a first optical axis from an object toward the image sensor; a transmitting optical system having a light source and sixth to tenth lenses aligned along a second optical axis toward the light source from an object, wherein the first to fifth lenses include a spherical lens and an aspherical lens, the sixth to tenth lenses include a spherical lens and an aspherical lens, the receiving optical system includes an optical filter disposed between the spherical lens and the aspherical lens, each of the first lens and the sixth lens has a meniscus shape convex toward the object side, an object-side surface and a sensor-side surface of the fifth lens have a convex shape and an aspherical shape on the first optical axis, an object-side surface and a light source-side surface of the tenth lens have a convex shape and an aspherical shape on the second optical axis, the light source generates light in a range of 890 nm to 960 nm, and the optical filter may transmit light in the range of 890 nm to 960 nm.

[Advantageous Effects]

According to an embodiment, it may have improved optical characteristics. In detail, in the receiving optical system according to the embodiment, a position of the bandpass filter can be positioned near the aperture stop to minimize the incident angle of light incident on the filter. Accordingly, a transmittance range of the bandpass filter can be widely utilized according to the incident angle of light of the bandpass filter. The receiving optical system in Lidar device of the invention can maximize the effect of receiving light emitted from the transmitting optical system.

The receiving optical system in Lidar device of the invention may have good optical performance in a temperature range from low to high temperature. In detail, a plurality of lenses included in the receiving optical system may have set materials, refractive powers, and refractive indices. Accordingly, when the refractive index of each lens changes according to a temperature change and the focal length of each lens changes due to this, mutual compensation can be made by the glass mold lens and the glass lens. That is, the receiving optical system can effectively perform distribution of refractive power in a temperature range from low to high temperature, and can prevent or minimize changes in optical characteristics in a temperature range from low to high temperature. Therefore, the optical system and sensor system according to the embodiment can maintain improved optical characteristics in various temperature ranges.

The lenses of the receiving optical system in Lidar device of the invention may have set thicknesses, refractive powers, and spacings with adjacent lenses. Accordingly, the optical system and sensor system according to the embodiment may have improved MTF characteristics, aberration control characteristics, resolution characteristics, etc. in the set field of view range, and may have good optical performance in the periphery of the field of view.

The receiving optical system and sensor system according to the embodiment may satisfy the set field of view and implement excellent optical characteristics through a mixture of glass mold lenses and glass lenses. As a result, the optical system can provide a slimmer vehicle sensor system. Therefore, the optical system and sensor system can be provided for various applications and devices, and may have excellent optical characteristics even in harsh temperature environments, such as when exposed to the outside of a vehicle or inside a vehicle at high temperatures in summer.

The transmitting optical system in Lidar device of the invention can maximize the extraction efficiency of light emitted from the transmitting optical system. The lidar transmitting optical system of the invention may have good optical performance in a temperature range from low to high temperatures. In detail, the plurality of lenses included in the transmitting optical system may have set materials, refractive powers, and refractive indices. Accordingly, when the refractive index of each lens changes due to temperature change and the focal length of each lens changes due to this, the glass mold lens and the glass lens can mutually compensate for each other. That is, the transmitting optical system can effectively perform distribution of refractive power in a temperature range from low to high temperature, and can prevent or minimize changes in optical characteristics in a temperature range from low to high temperature. Accordingly, the optical system and the sensor system according to the embodiment can maintain improved optical characteristics in various temperature ranges.

The lenses of the lidar transmitting optical system of the invention may have set thicknesses, refractive powers, and distances with adjacent lenses. Accordingly, the optical system and the sensor system according to the embodiment may have improved MTF characteristics, aberration control characteristics, resolution characteristics, etc. in a set field of view range, and may have good optical performance in the periphery of the field of view. The transmitting optical system and the sensor system according to the embodiment may satisfy the set field of view and implement excellent optical characteristics through a mixture of the glass mold lens and the glass lens. This allows the optical system to provide a slimmer vehicle sensor system. Accordingly, the optical system and sensor system can be provided for various applications and devices, and may have excellent optical properties even in harsh temperature environments, such as when exposed to the outside of a vehicle or inside a vehicle at high temperatures in the summer.

[Description of Drawings]

FIG. 1 is a cross-sectional view of a receiving optical system of a lidar according to an embodiment.

FIG. 2 is a table showing lens characteristics of the receiving optical system of FIG. 1.

FIG. 3 is a table showing aspherical coefficients of lenses in the receiving optical system of FIG. 1.

FIG. 4 is a table comparing changes in refractive index of each lens according to temperature in the receiving optical system of FIG. 1.

FIG. 5 is a graph showing data of diffraction MTF (Modulation Transfer Function) according to low temperature, room temperature, and high temperature in the receiving optical system of FIG. 1.

FIG. 6 is a graph showing data on aberration characteristics of the receiving optical system of FIG. 1 at low temperature.

FIG. 7 is a graph showing data on aberration characteristics of the receiving optical system of FIG. 1 at room temperature.

FIG. 8 is a graph showing data on aberration characteristics of the receiving optical system of FIG. 1 at high temperature.

FIG. 9 is a graph comparing the transmittance curves when the incident angle of the main beam measured by the automatic optical inspection (AOI) equipment is 0 degrees, 20 degrees, and 40 degrees by the filter according to the embodiment of the invention.

FIG. 10 is a cross-sectional view of the transmitting optical system of the lidar according to the embodiment.

FIG. 11 is a table showing the lens characteristics of the transmitting optical system of FIG. 10.

# EP 4 603 886 A1

FIG. 12 is a table showing the aspherical coefficients of the lenses in the transmitting optical system of FIG. 10.

FIG. 13 is a table comparing the refractive index change of each lens according to temperature in the transmitting optical system of FIG. 10.

FIG. 14 is a graph showing the data of the diffraction MTF according to the temperature of low temperature, room temperature, and high temperature in the transmitting optical system of FIG. 10.

FIG. 15 is a graph showing the data on the aberration characteristics of the transmitting optical system of FIG. 10 at low temperature.

FIG. 16 is a graph showing data on the aberration characteristics of the transmitting optical system of FIG. 10 at room temperature.

FIG. 17 is a graph showing data on the aberration characteristics of the transmitting optical system of FIG. 10 at high temperature.

FIG. 18 is a block diagram showing a sensor system having the transmitting optical system of FIG. 10.

FIG. 19 is a diagram showing an example of measuring an object in a vehicle having the sensor system of the invention.

FIG. 20 is a diagram showing an example of surrounding surveillance in a vehicle having the sensor system of the invention.

[Best Mode]

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology.

The terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the description of the invention, "object-side surface" may refer to a surface of the lens facing the object side with respect to the optical axis OA, and "sensor-side surface" may refer to a surface of the lens facing the imaging surface (image sensor) with respect to the optical axis. A convex surface of the lens may mean that the lens surface on the optical axis or the paraxial region has a convex shape, and a concave surface of the lens may mean that the lens surface on the optical axis or the paraxial region has a concave shape. A curvature radius, center thickness, and distance between lenses described in the table for lens data may mean values on the optical axis, and the unit is mm. The vertical direction may mean a direction perpendicular to the optical axis, and an end of the lens or the lens surface may mean the end or edge of the effective region of the lens through which the incident light passes. The effective diameter on the lens surface may have a measurement error of up to $\pm 0.4$ mm depending on the measurement method. The paraxial region refers to a very narrow region near the optical axis, and is a region in which a distance at which a light ray falls from the optical axis OA is almost zero. Hereinafter, the optical axis may include the center of each lens or a very narrow area near the optical axis.

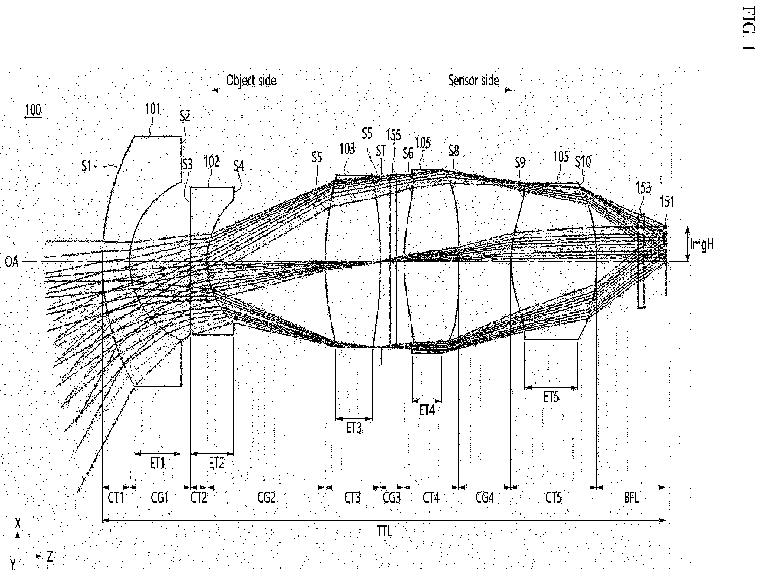

FIG. 1 is a cross-sectional view showing a receiving optical system according to an embodiment of the invention.

Referring to FIG. 1, a receiving optical system 100 and a sensor system having the same are mounted inside or outside a vehicle to monitor a driver or sense external objects or lanes. The material of the lenses may be selected from glass or plastic, and the coefficient of linear expansion of glass is smaller than that of plastic. In order to suppress the change in the focal imaging position due to temperature change, a glass lens is used. However, when the optical system is configured with spherical glass lenses, there is a limit to reducing the number of lenses, and there is a limit to reducing the size and weight. The receiving optical system 100 of the embodiment of the invention may include a spherical lens and an aspherical lens. Here, the spherical lens is a lens in which at least one or both of the object-side surface and the sensor-side surface of the lens is spherical. The aspherical lens is a lens in which at least one or both of the object-side surface and the sensor-side surface of the lens is aspherical. The receiving optical system 100 may include a spherical glass lens and an aspherical glass lens. In addition, since the aspherical lens is employed, the optical system 100 may have a reduced overall length (TTL), and may be capable of good correction for various aberrations such as spherical aberration and chromatic aberration due to the aspherical lens. In addition, the aspherical lenses may minimize distortion in the peripheral portion.

The optical system 100 may include n lenses, and the n-th lens may be the last lens adjacent to the image sensor 151, and the n-1-th lens may be the lens closest to the last lens. The n is an integer greater than or equal to 4, and may be, for example, in the range of 4 to 7 or in the range of 4 to 6. The ratio of the spherical lens to the aspherical lens in the n lenses may be any one of 3:1, 4:1, 3:2, 2:3, 3:3, 5:2, or 4:2.

The receiving optical system 100 may have the first lens 101 made of glass. The glass material has a small amount of expansion and contraction change due to external temperature changes, and the surface is not easily scratched, thereby preventing surface damage. Accordingly, in the optical system 100, the object-side lenses may be arranged as spherical lenses, and the sensor-side lens(es) may be arranged as aspherical lenses. At least one lens adjacent to the image sensor 151 in the optical system 100 may be an aspherical lens. For example, at least two lenses adjacent to the image sensor 151 may be aspherical lenses, and preferably, two lenses adjacent to the image sensor 151 may be aspherical lenses. That is, since the n-th and n-1th lenses in the optical system 100 are arranged as aspherical lenses, various aberrations can be corrected for the incident-side lights of the image sensor 151.

At least two lenses adjacent to the object in the optical system 100 may be made of glass. Two or more lenses, for example, two to four lenses, adjacent to the object may be made of glass. Since the rate of the change in contraction and expansion of the lenses made of glass is smaller than that of the plastic material due to temperature change, the lenses made of glass may be disposed in a region adjacent to the outside within the lens barrel. In the optical system 100, at least two lenses adjacent to the image sensor may be made of glass mold. The glass mold may be made of the same material as the glass material and may have an aspherical surface. Since the rate of the change in contraction and expansion of the lenses made of glass is smaller than that of the plastic material due to temperature change, the lenses made of glass may be disposed in a region adjacent to the outside within the lens barrel.

Each lens 101-105 of the optical system 100 may have an object-side surface and a sensor-side surface. The lenses 101-105 may include an object-side spherical lens and a sensor-side spherical lens, and an object-side aspherical lens and a sensor-side aspherical lens. The number of aspherical lenses in the optical system may be smaller than the number of spherical lenses. Since the optical system 100 arranges the aspherical lenses adjacent to the image sensor 151, various aberrations can be corrected. The spherical lenses may be made of glass, and the aspherical lenses may be made of glass mold material. Among the lenses of the optical system 100, the lens having the maximum refractive index may be a spherical lens, and the lens having the maximum Abbe number may be a spherical lens. Accordingly, since the lens having the maximum refractive index is disposed on the object side, it is easy to change the curvature radius of the second and subsequent lenses, and the center thickness can be increased.

The lens having the maximum effective diameter in the optical system 100 is located closest to the object, and may be made of glass and a spherical lens. In the optical system 100, a lens having a minimum effective diameter is positioned between the aperture stop and the first lens 101, and may be a glass lens. In addition, the average effective diameter of the aspherical lenses may be smaller than the average effective diameter of the spherical lenses. Here, the effective diameter of the lens is an average value of the effective diameter of the object-side surface and the effective diameter of the sensor-side surface of each lens. By adjusting the effective diameter of each lens, the optical system 100 may be miniaturized. Each of the lenses 101-105 may include an effective region and an ineffective region. The effective region may be an area through which light incident on each of the lenses passes. That is, the effective region may be defined as an effective region or an effective diameter in which the incident light is refracted to implement optical characteristics. The ineffective region may be arranged around the effective region. The ineffective region may be a region in which effective light is not incident on the plurality of lenses. That is, the ineffective region may be a region unrelated to the optical characteristics. In addition, an end of the ineffective region may be a region fixed to a lens barrel (not shown) that accommodates the lens.

Among the lenses 101-105 of the optical system 100, a lens having a maximum center thickness may be an aspherical lens, and a lens having a maximum edge thickness may be an aspherical lens. Accordingly, various aberrations may be corrected, and optical performance may be improved to the periphery. The center thickness of the aspherical lenses may be greater than the center thickness of the spherical lenses. These aspherical lenses may be arranged adjacent to the image sensor 151 to refract incident light to the entire region of the image sensor 151.

Within the optical system 100, the TTL (Total top length or Total track length) may be 10 times or more, for example, 10 times or more and 20 times or less, than the ImgH. The TTL is a distance from the center of the object-side surface of the first lens 101 to the imaging surface of the image sensor 151 in the optical axis OA. The ImgH is a distance from the center of the image sensor 151 to the diagonal end or 1/2 of the maximum diagonal length of the image sensor 151. In addition, the effective diameter of each lens within the optical system 100 may be larger than the diagonal length of the image sensor 151. Within the optical system 100, the effective focal length (EFL) is provided to be 10 mm or less and the field of view (FOV) is provided to be 60 degrees or more, so that the optical system can be provided as a standard receiving optical system in a vehicle sensor system. For example, the receiving optical system and sensor system according to the embodiment can be applied to a sensing device for an ADAS (Advanced driving assistance system) installed inside or outside a vehicle.

The optical system 100 satisfies the condition: 5 < TTL/(2*ImgH), and for example, 5 < TTL/(2*ImgH) < 15. Accordingly, the center thickness of each lens along the optical axis OA may be increased and the size of the image sensor 151 may be reduced, thereby providing a vehicle lens optical system. In addition, temperature compensation must be applied in the temperature range that is the temperature reliability evaluation standard for automotive electrical components in order to be used in a vehicle camera, that is, -40°C to +120°C. In other words, the lens must be configured so that the focus of the lens is maintained within the set range even when the lens expands or contracts due to a change in temperature. The total effective focal length (EFL) may be 10 mm or less, for example, in the range of 1 mm to 10 mm or 1 mm to 6 mm, and may be composed of lenses made of glass material capable of the aforementioned temperature compensation. By shortening the effective focal length of the optical system, a wide angle can be implemented.

In the optical system 100, the number of lenses having positive (+) refractive power may be equal to or greater than the number of lenses having negative (-) refractive power. The number of lenses having positive (+) refractive power may be 50% or more than the total number of lenses. The average refractive index of the lenses having negative refractive power may be greater than the average of the lenses having positive refractive power. Accordingly, the dispersion value of the lenses having positive refractive power may be greater than the dispersion value of the lenses having negative refractive power. Since the optical system 100 is a mixture of a spherical lens and an aspherical lens made of glass, various aberrations may be corrected, thereby preventing deterioration of optical performance.

The effective diameter of the first lens 101 may be larger than the effective diameter of the last lens 105. Accordingly, the brightness of the optical system may be controlled. By controlling the effective diameter size of each of the lenses 101-105, the optical system 100 can control the incident light to compensate for the resolution and the deterioration of optical characteristics due to temperature changes, improve the chromatic aberration control characteristics, and improve the vignetting characteristics of the optical system 100.

The optical system 100 may include the first lens 101 to the fifth lens 105 aligned from the object to the image sensor along the optical axis OA. The first to fifth lenses 101-105 may be defined as a lens unit. The optical system 100 may include an optical filter 155, and the optical filter 155 may be arranged within the lens unit.

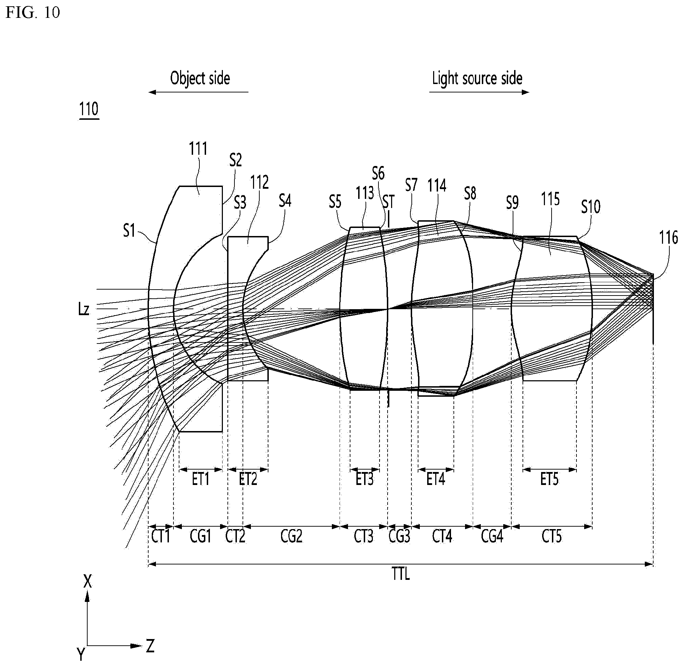

The optical filter 155 can transmit a laser beam emitted from a transmitting optical system (see 110 of FIG. 10) and block beams of other wavelengths. The transmitted laser beam may be in the range of 890 nm to 960 nm or 940 nm ±10 nm. The optical filter 155 may be disposed between two different lenses among the lenses. The fourth lens 104 is disposed on the sensor side of the optical filter 155, has a refractive index lower than that of the first lens 101, and has a center thickness greater than that of the first lens 101. The third lens 103 is disposed on the object side of the optical filter 155, and has a center thickness greater than that of the first lens 101. The center distance CG3 between the third lens 103 and the fourth lens 104 may be larger than the thickness of the optical filter 155. The center distance between the third lens 103 and the fourth lens 104 may be the smallest among the center distances between adjacent two lenses within the optical system 100.

If the radius of curvature is described as an absolute value, the lens surface having the minimum radius of curvature on the optical axis OA within the optical system 100 may be the sensor-side surface of the first or second lens 101 and 102 among the spherical surfaces. Accordingly, the center distance between the first lens 101 and the second lens 102 or the center distance between the second lens 102 and the third lens 103 may be separated. The lens surface having the maximum radius of curvature within the optical system 100 may be the object-side surface of the second lens 102 among the spherical surfaces. By adjusting the radius of curvature of the above lenses, it is possible to reduce lens ghost by preventing reflection between adjacent lens surfaces and lens surfaces, and also to prevent MPI (Multi-path interference) caused by lens ghost.

The optical system 100 or sensor system may include an image sensor 151. The image sensor 151 may detect light and convert it into an electrical signal. The image sensor 151 may detect light that has sequentially passed through the lenses. The image sensor 151 may include a device capable of detecting incident light, such as a CCD (Charge coupled device) or a CMOS (Complementary metal oxide semiconductor). Here, the length of the image sensor 151 is the maximum length in the diagonal direction orthogonal to the optical axis OA, and here, the number of lenses having an effective diameter greater than the length of the image sensor 151 is 4 to 6, and there may be no number of lenses having an effective diameter smaller than the length of the image sensor 151.

At least two lenses may be disposed between the optical filter 155 and the image sensor 151. The fourth and fifth lenses 104 and 105 may be disposed between the optical filter 155 and the image sensor 151. The lens(es) arranged between the optical filter 155 and the image sensor 151 may be aspherical lenses. The optical filter 155 may be disposed between the spherical third lens 103 and the aspherical fourth lens 104. The optical filter 155 may be disposed between the sensor-side spherical surface of the third lens 103 and the object-side aspherical surface of the fourth lens 104. The optical filter 155 may be a band pass filter that passes a laser beam in the range of 890 nm to 960 nm or 940 nm $\pm$ 10 nm. The optical filter 155 may pass light having a wavelength corresponding to a laser beam transmitted from a transmitting optical system of a Lidar device and block light corresponding to the remaining ambient light.

The cover glass 153 is disposed between the sensor-side lens of the optical filter 155 and the image sensor 151, and may protect the upper portion of the image sensor 151 and prevent the reliability of the image sensor 151 from being deteriorated. The cover glass 153 may be removed. The cover glass 153 may be a protective glass.

The optical system 100 may include an aperture stop ST. The aperture stop ST may control the amount of light incident on the optical system 100. The aperture stop ST may be disposed between the third lens 103 and the fourth lens 104. The aperture stop ST may be disposed between the spherical third lens 103 and the aspherical fourth lens 104. The aperture stop ST may be disposed between the sensor-side spherical surface of the third lens 103 and the object-side aspherical surface of the fourth lens 104. The aperture stop ST may be disposed between the third lens 103 and the optical filter 155. In the lenses arranged between the object and the aperture stop ST, the effective diameter of the lens surface tends to increase from the second lens 102 to the aperture stop ST. In the lens surfaces arranged between the above-described aperture stop ST and the image sensor 151, the effective diameter of the lens surfaces tends to decrease from the aperture stop ST toward the image sensor 151. The fact that the effective diameter of the lens surfaces tends to increase or decrease does not only mean the case where the effective diameter of the lens surfaces increases or decreases. For example, it also includes the case where the effective diameter of the lens surfaces increases and then decreases as it goes from the aperture stop ST to the sensor side.

The lens surface on which the aperture stop ST is disposed is to more efficiently control and guide the amount of light of the optical system 100. As in the embodiment, the aperture stop ST may be disposed on the sensor-side surface of the third lens 103. Alternatively, the aperture stop ST may be disposed on the periphery of the object-side surface or the sensor-side surface of the second lens 102. Alternatively, at least one lens selected from the plurality of lenses, for example, the object-side surface or the sensor-side surface of the third lens 103, may function as an aperture.

In the optical system 100 of the embodiment, the sum of the refractive indices of the lenses may be 8.0 or more, for example, in the range of 8.0 to 12.0, and the average of the refractive indices may be in the range of 1.70 to 1.80. The sum of the Abbe numbers of each of the lenses may be 200 or less, for example, in the range of 130 to 200, and the average of the Abbe numbers may be 50 or less, for example, in the range of 25 to 50. By controlling the refractive indices of the lenses in the optical system 100, it is possible to prevent degradation of optical performance for temperature changes from -45 to 120 degrees and optimize thermal compensation. In addition, by controlling the Abbe number, it is possible to minimize the deviation of the spot size of incident light, that is, to minimize the spot diagram size. The sum of the center thicknesses of the entire lens may be 15 mm or more, for example, in the range of 15 mm to 25 mm, and the average of the center thicknesses may be 4.9 mm or less, for example, in the range of 2.9 mm to 4.9 mm. The sum of the center distances between the lenses on the optical axis OA may be 15 mm or more, for example, in the range of 15 mm to 30 mm, and may be greater than the sum of the center thicknesses of the lenses. In addition, the average value of the effective diameter of each lens surface of the optical system 100 may be provided as 20 mm or less, for example, in the range of 9 mm to 20 mm. By controlling the thickness of each lens within the optical system 100, the optical performance may be prevented from deteriorating for temperature changes from -45 to 120 degrees, and the thermal compensation may be optimized.

In the optical system according to the embodiment of the invention, the field of view may be in the range of more than 100 degrees, for example, more than 110 degrees, for example, 120 $\pm$ 10 degrees. The F number of the optical system or the camera module may be 1.2 or less, for example, in the range of 0.7 to 1.2 or 0.7 to 0.9. The diagonal length of the image sensor 151 may be 6.041 mm $\pm$ 0.5 mm and may be greater than the sensor height in the vertical direction. The invention can provide a vehicle Lidar device that suppresses changes in the focus image position due to temperature changes by stacking glass lenses and corrects various aberrations by providing an aspherical lens.

Since the embodiment is an optical system applied to the Lidar device, the first lens 101 may be provided with a glass material. This has the advantage that the glass material is resistant to scratches and is not sensitive to external temperature compared to a plastic material. In order to more effectively prevent scratches caused by foreign substances or placed inside a vehicle, a glass lens may be used as the first lens 101, and the object-side surface of the first lens 101 may have a convex shape so that foreign substances do not accumulate. The Lidar device can detect the distance, direction, speed, temperature, material distribution, and concentration characteristics to an object when the vehicle is driving. Such a Lidar device may be used for an advanced driver assistance system (ADAS). The optical system 100 according to the embodiment may further include a reflective member (not shown) for changing the path of light. The reflective member may be implemented as a prism that reflects incident light toward the lenses. Hereinafter, the optical system according to the embodiment will be described in detail.

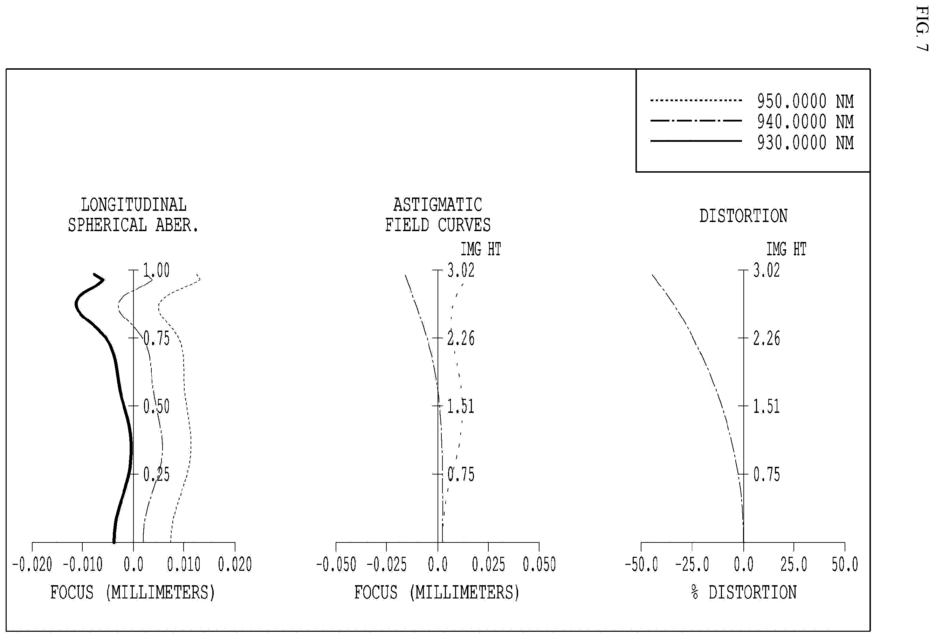

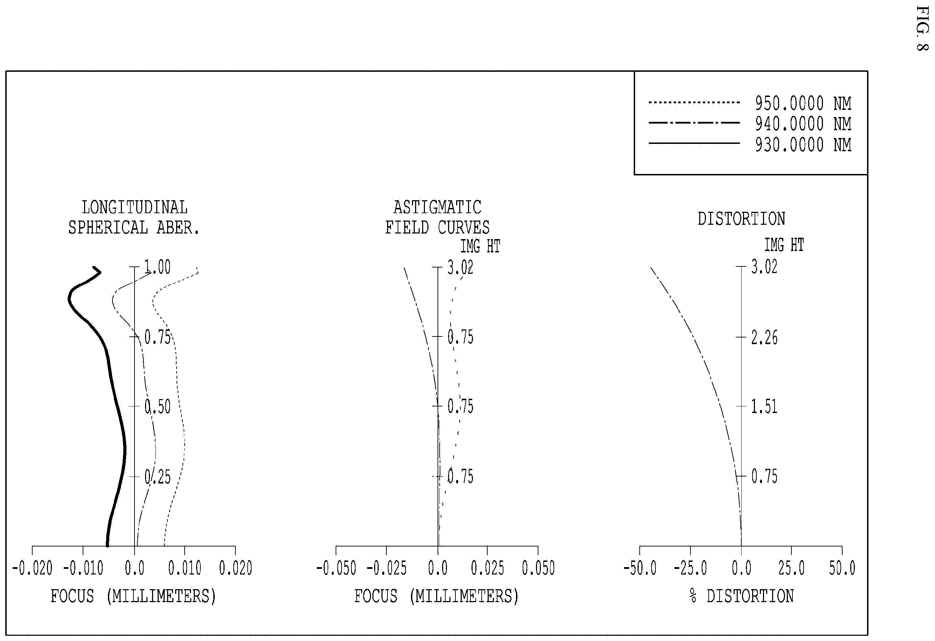

The receiving optical system according to the embodiment of the invention will be described with reference to FIGS. 1 to 8. Referring to FIGS. 1 to 4, the first to fifth lenses 101-105 of the receiving optical system 100 may transmit light reflected by an object to an image sensor 151. The optical filter 155 is located on the object side relative to the fifth lens 105, which is the last lens, to pass a required wavelength band and block other wavelength bands. The aperture stop ST may be disposed around the sensor-side surface of the third lens 103.

The first lens 101 may have positive (+) or negative (-) refractive power on the optical axis OA. The first lens 101 may have negative (-) refractive power. The first lens 101 may include a plastic material or a glass material, and may be, for example, a glass material. The first lens 101 made of a glass material may reduce changes in the center position and the radius of curvature due to temperature changes according to the surrounding environment, and may protect the incident side surface of the optical system 100. The first lens 101 is made of a glass material that is not injection molded. The object-side first surface S1 of the first lens 101 on the optical axis may be convex, and the sensor-side second surface S2 may be concave. The first surface S1 and the second surface S2 may have a spherical surface. The first lens 101 may have a meniscus shape that is convex toward the object side. In contrast, the first surface S1 may have a concave shape and the second surface S2 may have a convex shape in the optical axis OA. Since the first surface S1 is convex and the second surface S2 is concave, the incident light may be refracted in a direction close to the optical axis OA, the gap between the first and second lenses 101 and 102 may be reduced, and the effective diameter of the second lens 102 may be reduced. The effective diameter of the sensor-side surface of the second lens 102 may be designed to be smaller than the effective diameter of the object-side surface by the shape of the lens surface of the first lens 101. The first surface S1 of the first lens 101 may be provided without a critical point from the optical axis OA to the end of the effective region, that is, the edge. The second surface S2 of the first lens 101 may be provided without a critical point. When the refractive index of the first lens 101 is n1, the following condition may satisfy: 1.7 < n1 or 1.75 < n1 < 2.1. Since the refractive index n1 of the first lens 101 is higher than that of other lenses, the radius of curvature of the first surface S1 of the first lens 101 may be increased, and lens manufacturing may be easy. When the refractive index n1 of the first lens 101 is lower than the above condition, the lens surface must be formed to be sharply concave or convex in order to increase the refractive power of the first and second lenses 101 and 102. In this case, lens manufacturing is not easy, the lens defect rate increases, and it may cause a decrease in yield.

The second lens 102 may be disposed between the first lens 101 and the third lens 103. The second lens 102 may have positive (+) or negative (-) refractive power on the optical axis OA. The second lens 102 may have negative (-) refractive power. The second lens 102 may include a plastic or glass material, and may be provided as a glass material, for example. The second lens 102 is a glass material that is not injection molded. The object-side third surface S3 of the second lens 102 on the optical axis OA may be flat, and the sensor-side fourth surface S4 may be concave. The fourth surface S4 may be spherical. The fourth surface S4 may be provided without a critical point from the optical axis OA to the end of the effective region. In contrast, the third surface S3 may be convex and the fourth surface S4 may be concave. In contrast, the second lens 102 may be concave on both sides. When the refractive index of the second lens 102 is n2, the following condition may satisfy: 1.7 < n2 or 1.75 < n2 < 2.1. Since the refractive index n2 of the second lens 102 is higher than that of other lenses, the radius of curvature of the third surface S3 of the second lens 102 may be increased, and the lens may be easily manufactured.

Since the fourth surface S4 on the sensor side of the second lens 102 is concave and the radius of curvature is small, the center distance between the second lens 102 and the third lens 103 may be separated. In addition, when the radius of curvature of the third surface S3 of the second lens 102 is L2R1 and the radius of curvature of the fourth surface S4 is L2R2, the following condition may satisfy: L2R1 > L2R2. When this condition is satisfied, the light may be efficiently refracted by the fourth surface S4, so that the effective diameter of the third to fifth lenses 103 to 105 may be guided so as not to increase, and the TTL may be reduced. If the following condition: L2R1 < L2R2, a lot of aberration may occur on the object-side surface of the second lens 102, the refractive efficiency of light may decrease on the sensor-side surface, and the effective diameter of the rear lenses may increase and the TTL may also increase.

The third lens 103 may have positive (+) or negative (-) refractive power on the optical axis OA. The third lens 103 may have positive (+) refractive power. The third lens 103 may include a plastic or glass material, and may be, for example, a glass material. The third lens 103 is a glass material that is not injection molded. The object-side fifth surface S5 of the third lens 103 on the optical axis may be convex, and the sensor-side sixth surface S6 may be convex. The third lens 103 may have a shape in which both sides are convex on the optical axis OA. At least one or both of the fifth surface S5 and the sixth surface S6 may be spherical. At least one or both of the fifth surface S5 and the sixth surface S6 may be provided without a critical point from the optical axis OA to the end of the effective region. Alternatively, the third lens 103 may have a meniscus shape that is convex on the object side or the sensor side. Alternatively, the third lens 103 may have a concave shape on both sides of the optical axis. When the refractive index of the third lens 103 is n3, the following conditions may satisfy: n3 < n1 and n3 < n2. When the Abbe number of the third lens 103 is v3, the following conditions may satisfy: v3 < v1 and v3 < v2.

The aperture stop ST may be disposed around the sensor-side sixth surface S6 of the third lens 103. Since the third lens 103 adjacent to the object side of the aperture stop ST has positive refractive power (F3 > 0), the third lens 103 may refract incident light in the direction of the optical axis, and may suppress an increase in the effective diameter of the sensor-side or rear-side lenses of the third lens 103. Accordingly, a decrease in the yield by weight of the optical system may be prevented by the third lens 103, and production efficiency may be improved. Here, the focal lengths of the fourth and fifth lenses 104 and 105 disposed on the sensor side of the aperture stop ST may have positive values, and may reduce the TTL within the field of view range.

Since the sensor-side sixth surface S6 of the third lens 103 has a convex shape, the effective diameter of the optical filter 155 disposed on the sensor side of the third lens 103 may be larger than the effective diameter of the sixth surface S6 of the third lens 103. The optical filter 155 transmits the laser beam emitted from the transmitting optical system of the Lidar device and blocks beams of other wavelengths.

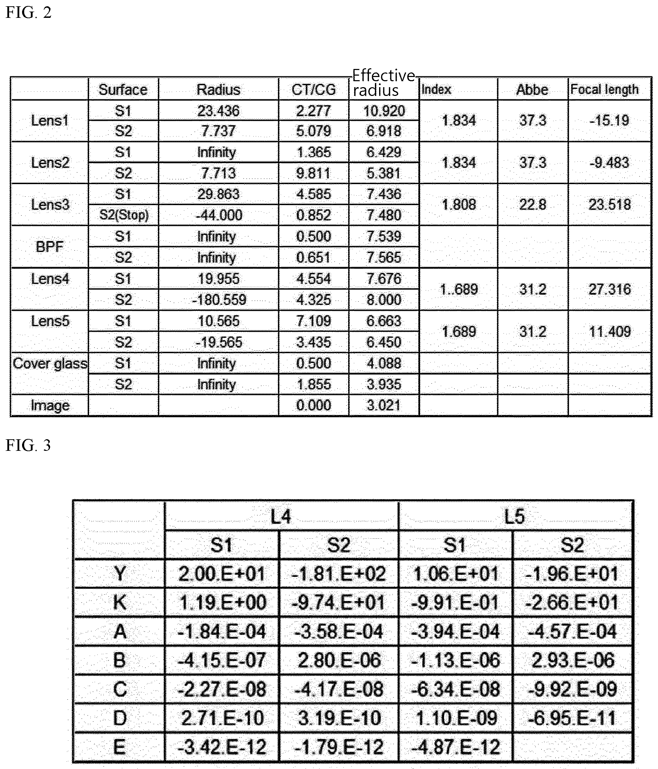

The fourth lens 104 may have positive (+) or negative (-) refractive power on the optical axis OA. The fourth lens 104 may have positive (+) refractive power. The fourth lens 104 may include a plastic or glass material, and may be provided as a glass material. The fourth lens 104 may be injection molded. On the optical axis, the object-side seventh surface S7 of the fourth lens 104 may be convex, and the sensor-side eighth surface S8 may be convex. The fourth lens 104 may be convex on both sides. At least one or both of the seventh surface S7 and the eighth surface S8 may be aspherical. The aspherical coefficients of the seventh and eighth surfaces S7 and S8 may be provided as S1 and S2 of L4 of FIG. 3. The seventh surface S7 may have a critical point from the optical axis OA to the end of the effective region. The eighth surface S8 may be provided without a critical point from the optical axis OA to the end of the effective region. Both the seventh surface S7 and the eighth surface S8 may have no critical point or may have a critical point. Here, the critical point may mean a point where the sign of the slope value with respect to the optical axis OA and the direction perpendicular to the optical axis OA changes from positive (+) to negative (-) or from negative (-) to positive (+), and may mean a point where the slope value is 0. In addition, the critical point may be a point where the slope value of the tangent line passing through the lens surface increases and decreases or a point where it decreases and then increases. Differently, the fourth lens 104 may have a convex meniscus shape toward the object side or the sensor side. Differently, the fourth lens 104 may have a concave shape on both sides in the optical axis OA.

The fifth lens 105 may have positive (+) or negative (-) refractive power on the optical axis OA. The fifth lens 105 may have positive (+) refractive power. The fifth lens 105 may include a plastic or glass material, and may be provided as a glass material. The fifth lens 105 may be injection molded. The object-side ninth surface S9 of the fifth lens 105 on the optical axis may be convex, and the sensor-side tenth surface S10 may be convex. The fifth lens 105 may be convex on both sides. Alternatively, the fifth lens 105 may have a concave shape on both sides on the optical axis OA. At least one or both of the ninth surface S9 and the tenth surface S10 may be aspherical. Aspherical coefficients of the ninth and tenth surfaces S9 and S10 may be provided as L1 and L2 of L5 in FIG. 3. Both the ninth surface S9 and the tenth surface S10 may have no critical point. In contrast, at least one or both of the ninth and tenth surfaces S9 and S10 may have a critical point from the optical axis OA to the end of the effective region.

The effective diameter of the fifth lens 105 may be smaller than that of the fourth lens 104. The fifth lens 105 may have a lower refractive index than that of the first and second lenses 101 and 102 and an Abbe number lower than that of the first and second lenses 101 and 102. The third lens 103, the fourth lens 104, and the fifth lens 105 may have a biconvex shape, and may all have positive refractive power. In addition, the third lens 103, the fourth lens 104, and the fifth lens 105 may have a lower refractive index than the refractive indices of the first and second lenses 101 and 102, and may have an Abbe number lower than the Abbe number of the first and second lenses 101 and 102. At least one of the object-side surface and the sensor-side surface of the fourth and fifth lenses 104 and 105 may have a free curved surface, i.e., a non-rotationally symmetrical curved surface.

The fifth lens 105 may be an aspherical lens closest to the image sensor 151. By arranging two or more aspherical lenses adjacent to the image sensor 151, aberrations such as spherical aberration and chromatic aberration may be improved by the lens surface having an aspherical surface, and the influence on the resolution can be controlled. The optical performance can be improved by the aspherical lens surface of the lenses adjacent to the image sensor 151, and for example, the aberration characteristics can be improved and the resolution can be prevented from being degraded.

When the lenses having negative refractive power are the first lens group and the lenses having positive refractive power are the second lens group, the aperture stop ST and the optical filter 155 may be arranged in the second lens group. The aperture stop ST and the optical filter 155 may be disposed between the first lens group in which at least one of the object-side surface and the sensor-side surface is spherical and the second lens group in which at least one of the object-side surface and the sensor-side surface is aspherical. The aperture stop ST and the optical filter 155 may be disposed between the first lens group having non-injection-molded lenses and the second lens group having injection-molded lenses. The aperture stop ST and the optical filter 155 may be disposed between a first lens group having lenses disposed on the object side of the aperture stop ST and a second lens group having lenses disposed on the sensor side of the optical filter 155.

FIG. 2 is an example of lens data of the optical system of the embodiment of FIG. 1. As shown in FIG. 2, the radius of curvature of the optical axis OA of the first to fifth lenses 101, 102, 103, 104, and 105, the center thickness CT of the lenses, the center distance or center distance CG between the lenses, the refractive index at the d-line, the Abbe number, and the size of the effective radius may be set.

As shown in FIG. 1 and FIG. 2, the center thickness of the first to fifth lenses 101 to 105 is represented by CT1 to CT5, the edge thickness at the end of the effective region of each lens is represented by ET1 to ET5, and the center distance between two adjacent lenses is represented by CG1 to CG4.

The first to fifth lenses 101 to 105 may satisfy the following conditions.

| | | | |
|---|---|---|---|
| Condition 1: | CT2 < CT1 < CT3 | Condition 2: | CT4 < CT5 < (CT3+CT4) |
| Condition 3: | CT3-CT4 < CT2 | Condition 4: | ET3 < ET2 < ET1 |
| Condition 5: | ET4 < ET3 < ET5 <CT5 | Condition 6: | CT2 < CT1 < ET2 < ET1 |
| Condition 7: | CG1 < CT4 < CT5 < CG2 | Condition: | CT1 < CG3 < CG4 < CG1 |

The center thickness CT5 of the fifth lens 105 is the largest among the lenses, and the center thickness CT2 of the second lens 102 is the smallest among the lenses. The maximum center thickness may be at least twice the minimum center thickness, and the difference between the maximum center thickness and the minimum center thickness may be at least 4 mm. That is, even if the spherical material lenses provide a thin center thickness, the optical performance may not be degraded, and the sensor system may be provided with a slim thickness. By controlling the thickness of these lenses, thermal compensation can be provided for temperatures that change from low to high temperatures.

In terms of the center distance CG between adjacent lenses, the center distance CG2 between the second lens 102 and the third lens 103 is maximum and is greater than the center distance CG1 between the first and second lenses 101 and 102. The center distance between the third and fourth lenses 103 and 104 may be minimum. Here, the difference between the maximum center distance and the minimum center distance may be 5 mm or more, for example, in the range of 5 mm to 8 mm. In addition, by providing the maximum center distance between the lenses to be greater than the maximum center thickness of each lens, a receiving optical system in which the center distance between the aspherical lenses does not increase may be provided. In addition, since the maximum center distance between the lenses is provided to be greater than the minimum center thickness of each lens, the optical path can be controlled.

In the effective diameter, the lens having the maximum effective diameter may be the first lens 101 closest to the object. The lens having the maximum effective diameter may be a spherical lens made of glass. The lens surface having the maximum effective diameter may be the first surface S1 of the first lens 101. The lens having the minimum effective diameter may be the second lens 102 adjacent to the first lens 101. The lens surface having the minimum effective diameter may be the fourth surface S4 of the second lens 102, and may be less than 70% of the first surface S1. The effective diameter of each of the first to fifth lenses 101-105 may be greater than the diagonal length of the image sensor 151. Here, the sum of the center thicknesses of the first to third lenses 101 to 103 may be less than the sum of the center thicknesses of the fourth and fifth lenses 104 and 105. The average effective diameter of the first to third lenses 101-103 may be greater than the average effective diameter of the fourth and fifth lenses 104 and 105. The fourth and fifth lenses 104 and 105 have an aspherical surface and can guide light incident through the spherical lens to the image sensor 151.

When comparing the focal lengths as absolute values, the focal length of the fourth lens 104 is the largest among the lenses and may be 20 mm or more and 40 mm or less. Accordingly, it may have improved MTF characteristics, aberration control characteristics, resolution characteristics, etc. in the field of view range set in the optical system, and may have good optical performance in the periphery of the field of view.

As shown in FIG. 3, the lens surfaces of the fourth and fifth lenses 104 and 105 may include an aspherical surface having an aspherical coefficient of 12th or more, for example, 30th. That is, the object-side surface and the sensor-side surface of the fourth and fifth lenses 104 and 105 may be lens surfaces having a 12th-order aspherical coefficient. In FIG. 3, Y is a radius of curvature, and K is a conic constant. Since an aspherical surface having at least a 12th-order aspherical coefficient A, B, C, D, and E (a non-zero value) can significantly change the aspherical shape of the periphery, the optical performance of the periphery of the FOV may be well compensated.

The focal lengths F1 and F2 of the first and second lenses 101 and 102 may have negative refractive power, and the focal lengths F3, F4, and F5 of the third, fourth, and fifth lenses 103, 104, and 105 may have positive refractive power. In addition, the second lens 102 and the third lens 103, which are adjacently arranged lenses, may satisfy the following conditions.

Condition 1: Refractive index of lens with positive refractive power < Refractive index of lens with negative refractive power

Condition 2: Dispersion of lens with positive refractive power > Dispersion of lens with negative refractive power

Here, among the lenses, the second lens 102 has negative refractive power and the third lens 103 has positive refractive power, so according to the conditions 1 and 2, the refractive index of the third lens is greater than the refractive index of the second lens, and the dispersion value of the third lens is less than the dispersion value of the second lens. The chromatic aberration occurring in the spherical lens may be corrected by the spherical lens. In addition, by satisfying the refractive index difference between the second lens 102 and the third lens 103, which are spherical lenses arranged in succession, of 0.1 or more and 0.15 or less and the Abbe number difference of 10 or more and 20 or less, the chromatic aberration occurring in the spherical lens may be compensated by the spherical lens.

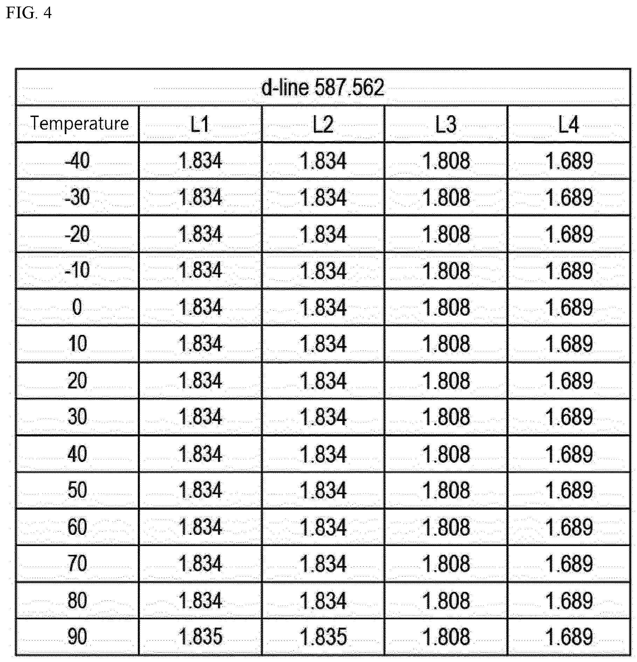

The optical system generates chromatic aberration, and chromatic aberration is corrected using sequentially arranged aspherical lenses. As the temperature changes from low temperature to high temperature, the lens repeatedly contracts and expands. Since the lens characteristics of lenses of the same material change the same amount according to the temperature change, it is effective to correct chromatic aberration between lenses of the same material even if the temperature changes. For example, as shown in FIG. 4, when the temperature of the lens barrel or the receiving optical system changes from -40 degrees to 90 degrees, it can be seen that the refractive index of the first to fourth lenses in the d-line hardly changes. Therefore, in the embodiment of the invention, the fourth lens 104 and the fifth lens 105 can correct chromatic aberration occurring in a spherical lens made of glass.

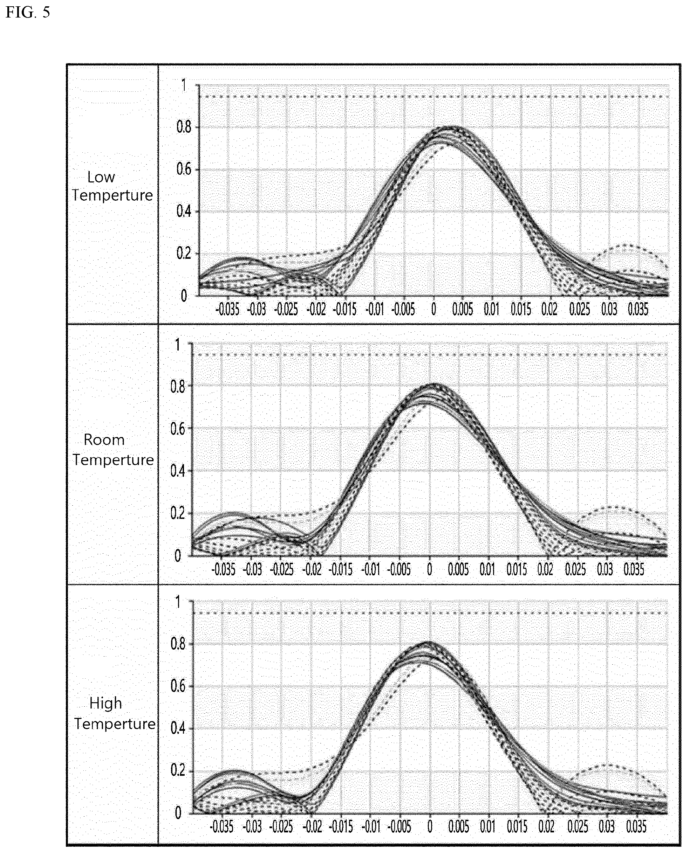

FIG. 5 is a graph showing the diffraction MTF at low temperature, room temperature, and high temperature in the optical system of FIG. 1, and is a graph showing the modulation ratio according to the spatial frequency. As shown in FIG. 5, in the embodiment of the invention, the deviation of the MTF with respect to the room temperature and the low temperature or high temperature may be less than 10%, that is, 7% or less. Here, each MTF curve was measured from 0.000 mm to 3.020 mm in units of 0.302 mm.

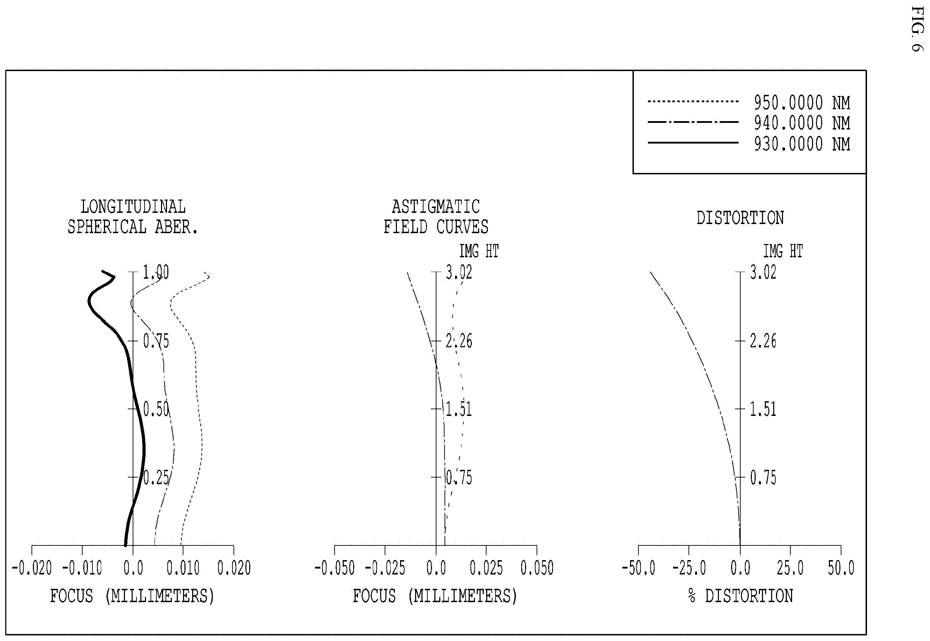

FIGS. 6 to 9 are graphs showing the aberration characteristics at low temperature, room temperature, and high temperature in the optical system of FIG. 1. The graphs of the aberration graphs of FIGS. 6 to 9 are graphs measuring spherical aberration (Longitudinal Spherical Aberration), astigmatic field curves, and distortion from left to right. In FIGS. 6 to 9, the X-axis may represent the focal length (mm) and the distortion (%), and the Y-axis may represent the height of the image. In addition, the graph for spherical aberration is a graph for light in wavelength bands of about 930 nm, about 940 nm, and about 950 nm, and the graph for astigmatism and distortion is a graph for light in wavelength bands of about 940 nm. In the aberration diagrams of FIGS. 6 to 9, it can be interpreted that the closer the respective curves at low temperature, room temperature, and high temperature are to the Y-axis, the better the aberration correction function is. That is, the optical system 100 according to the embodiment has improved resolution and may have good optical performance in the center and periphery of the FOV. Here, the low temperature is -20 degrees or lower, for example, in the range of -20 to -50 degrees, the room temperature is in the range of 22 degrees ± 5 degrees or in the range of 18 degrees to 27 degrees, and the high temperature can be 85 degrees or higher, for example, in the range of 85 degrees to 120 degrees. Accordingly, it may be seen that the reduction in the modulation ratio from low to high temperature in FIGS. 6 to 9 is less than 10%, for example, less than 5%, or is almost unchanged. The MTF deviation according to temperature is as shown in Table 1.

[Table 1]

| Temperature | MTF deviation |
|---|---|
| -45 | 76.300 |
| 22 | 80.700 |
| 90 | 81.100 |

Accordingly, Table 2 compares the changes in optical characteristics such as EFL, BFL, F number (F#), TTL, and FOV at room temperature, low temperature, and high temperature in the receiving optical system according to the embodiment, and it may be seen that the change rate of optical characteristics at low temperature is 5% or less, for example, 3% or less or 2% or less, based on room temperature, and the change rate of optical characteristics at high temperature is 5% or less, for example, 3% or less or 2% or less, based on room temperature.

[Table 2]

| | Room temperature | Low temperature | High temperature | Low temperature/ Room temperature | High temperature/ Room temperature |
|---|---|---|---|---|---|
| EFL(F) | 2.821 | 2.822 | 2.820 | 100.05% | 99.96% |
| BFL | 5.790 | 5.781 | 5.798 | 99.85% | 100.15% |

(continued)

|  | Room temperature | Low temperature | High temperature | Low temperature/ Room temperature | High temperature/ Room temperature |
|---|---|---|---|---|---|
| F# | 0.802 | 0.802 | 0.802 | 99.93% | 99.96% |
| TTL | 46.900 | 46.846 | 46.946 | 99.89% | 100.10% |
| FOV | 62.603 | 62.575 | 62.625 | 99.95% | 100.03% |

Therefore, as shown in Table 2, the change in optical characteristics according to the temperature change from low temperature to high temperature, for example, the change rate of effective focal length (EFL), TTL, BFL, F number, and FOV is less than 10%, that is, less than 5%, for example, in the range of 0 to 5%. This means that even if at least one or two or more aspherical lenses are used, the design enables temperature compensation for the aspherical lenses, thereby preventing a decrease in reliability of optical characteristics. The optical system of the embodiment disclosed above can effectively control aberration characteristics such as chromatic aberration and distortion aberration, and may have good optical performance even in the center and periphery of the FOV.

The receiving optical system can prevent a decrease in optical performance from low temperature to high temperature by considering the characteristics of the vehicle optical system. For example, after designing a lens at room temperature, the value of dn/dt, which is a temperature-dependent refractive index change coefficient, is assembled by considering the power combination of each lens, and the value of the temperature coefficient dn/dt according to the refractive index of the lens and the defocus for the thickness variable at low, room, and high temperatures may be set to $5\mu$m or less. To this end, the first to third lenses 101, 102, and 103 are made of a spherical glass material, and the fourth and fifth lenses 104 and 105 are made of an aspherical glass material. The existing filter is arranged between the image sensor and the last lens. In the embodiment of the invention, the optical filter 155 may be arranged close to the aperture stop ST, that is, between the aperture stop ST and the fourth lens 104. Accordingly, the incident angle of light incident on the optical filter 155 may be minimized. That is, the incident angle of the main beam incident on the optical filter 155 may be less than 20 degrees at most, that is, less than 18 degrees.

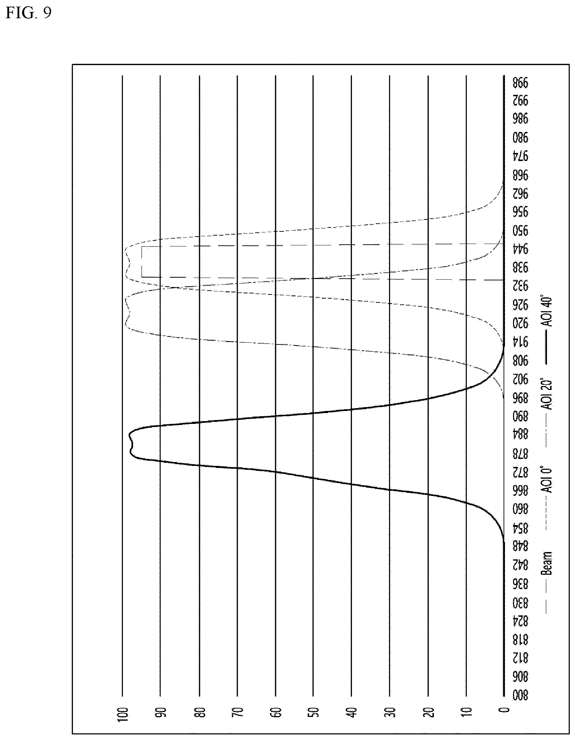

It is possible to overcome the material limitation that the filter transmittance range shifts depending on the incident angle incident on the optical filter 155. For example, when the existing filter is arranged between the image sensor and the last lens, the incident angle of the main beam incident on the filter is about 45 degrees, but the optical filter 155 of the invention is arranged around the aperture stop ST, so that the incident angle of the main beam is reduced to less than 20 degrees, for example, less than 18 degrees. When considering the transmittance curve when the main beam is incident at a 0-degree angle on the optical filter 155 and the transmittance curve when it is 20 degrees and 40 degrees, there is an effect that the filter area may be utilized more widely from the incident angle of the main beam at 0 degrees to a maximum angle of less than 20 degrees. FIG. 9 is a graph showing a curve of transmittance (%) when the incident angle of the main beam incident on the filter of the invention is 0 degrees, 20 degrees, and 40 degrees. The incident angle of the main beam on the incident surface of the optical filter 155 is as shown in Table 3. As shown in the data of the incident angle (AOI: Angle of incidence) in Table 3, it may be seen that the incident angle of the main beam (chief ray) incident on the filter from 0 field to 1.05 field and in different directions ($\pm$Y direction, $\pm$X direction) is incident from 0 degree to a maximum of 17.55 degrees. Accordingly, the problem of the incident angle (AOI) of the main beam shifting at low and high temperatures compared to room temperature may be minimized.

[Table 3]

| | | AOI | | | | |
|---|---|---|---|---|---|---|
| Field | Chief ray | +Y | -Y | +X | -X |
| 0.0F | 0.00 | 4.25 | 4.25 | 4.25 | 4.25 |
| 0.1F | 1.66 | 5.28 | 3.23 | 4.49 | 4.49 |
| 0.2F | 3.33 | 6.33 | 2.2 | 5.14 | 5.14 |
| 0.3F | 4.99 | 7.40 | 1.17 | 6.07 | 6.07 |
| 0.4F | 6.66 | 8.47 | 0.15 | 7.18 | 7.18 |
| 0.5F | 8.33 | 9.55 | 0.89 | 8.38 | 8.38 |
| 0.6F | 10.00 | 10.72 | 1.93 | 9.65 | 9.65 |
| 0.7F | 11.67 | 12.03 | 2.99 | 10.97 | 10.97 |

(continued)

| Field | Chief ray | +Y | -Y | +X | -X |
|---|---|---|---|---|---|
| | | | AOI | | |
| 0.8F | 13.35 | 13.38 | 4.06 | 12.32 | 12.32 |
| 0.9F | 16.05 | 15.60 | 5.8 | 14.52 | 14.52 |
| 1.0F | 16.71 | 16.17 | 6.24 | 15.07 | 15.07 |
| 1.05F | 17.55 | 16.88 | 6.8 | 15.76 | 15.76 |
| Max | 17.55 | | | | |

The optical system 100 according to the embodiment disclosed above may satisfy at least one or two or more of the mathematical equations described below. Accordingly, the optical system 100 according to the embodiment may have improved optical characteristics. For example, when the optical system 100 satisfies at least one equation, the optical system 100 can effectively control aberration characteristics such as chromatic aberration and distortion aberration, and may have good optical performance in the center and periphery of the FOV. In addition, the optical system 100 may have improved resolution. In addition, the thickness of the lens in the optical axis OA and the distances of adjacent lenses in the optical axis OA described in the equations can refer to the embodiment disclosed above.

$$[\text{Equation 1}]\ 0 < CT1 / CT2 < 3$$

In Equation 1, by setting the center thickness CT1 of the first lens 101 and the center thickness CT2 of the second lens 102, the rigidity of the first lens 101 may be prevented from decreasing and the factors affecting the aberration may be controlled. Preferably, Equation 1 may satisfy: 1 < CT1 / CT2 < 3.

$$[\text{Equation 2}]\ 5 < CA11 / CT1 < 15$$

CA11 is the effective diameter of the object-side surface S1 of the first lens 101. In Equation 2, the center thickness CT1 of the first lens 101 and the effective diameter CA11 of the object-side surface S1 of the first lens 101 may be set, and when this is satisfied, the strength and optical characteristics of the glass lens may be prevented from decreasing. If it is lower than the range of Equation 1, the lens may be damaged or the incident efficiency may be reduced, and if it is higher than the above range, the TTL may increase and the weight of the optical system may become heavier. Preferably, Equation 2 may satisfy: 7 < CA11/CT1 < 12.

$$[\text{Equation 3}]\ 0 < CT5 / CT4 < 3$$

In Equation 3, the center thickness CT5 of the fifth lens 105 and the center thickness CT4 of the fourth lens 104 may be set, so that thermal compensation may be optimized according to temperature changes from low temperature to high temperature, and deterioration of optical performance may be prevented. Preferably, Equation 3 may satisfy: 1 < CT5/CT4 < 2.

$$[\text{Equation 3-1}]\ 0 < CT5 / CT3 < 3$$

In Equation 3-1, by setting the center thickness CT3 and CT5 of the third and fifth lenses 103 and 105, light refracted from the object-side lenses may be guided to the image sensor 151. Preferably, Equation 3-1 may satisfy: 1 < CT5/CT3 < 2. Accordingly, the fifth lens 105 closest to the image sensor 151 may thicken the center thickness CT5 and refract light refracted through the object-side lenses to the entire region of the image sensor 151 without significantly increasing the effective diameter.

$$[\text{Equation 4}]\ 0 < CT5 / (CT1+CT2) < 3$$

In Equation 4, the center thickness CT5 of the fifth lens 105 is set to be larger than the sum of the center thicknesses CT1 and CT2 of the first and second lenses 101 and 102, so that light refracted from the object-side lens may be guided to the image sensor 151. Preferably, Equation 4 may satisfy: 1 < CT5 / (CT1+CT2) < 2. Accordingly, the fifth lens 105 closest to the image sensor 151 may have a thick center thickness CT5 and not significantly increase the effective diameter.

$$[Equation\ 5]\ 0 < CT5\ /\ CG2 < 1.5$$

In Equation 5, the center distance CG2 between the second and third lenses 102 and 103 is set to be larger than the center thickness CT5 of the fifth lens 105, so that the second lens 102 may be set to have a sensor-side concave surface and a lens with a minimum effective diameter. In addition, the effective diameter of the third lens 103 may be increased more than that of the second lens 102. Preferably, 0.5 < CT5 / CG2 < 1 may be satisfied.

$$[Equation\ 6]\ 0 < CG4\ /\ CG1 < 1.5$$

In Equation 6, the center distance CG1 between the first and second lenses 101 and 102 and the center distance CG4 between the fourth and fifth lenses 104 and 105 may be set to set the center distance between the spherical lenses and the center distance between the aspherical lenses. Preferably, 0.5 < CG4 / CG1 < 1 may be satisfied.

$$[Equation\ 6\text{-}1]\ 0 < CG4\ /\ CG2 < 1$$

In Equation 6-1, the center distance CG2 between the second and third lenses 102 and 103 may be set to be larger than the center distance CG4 between the fourth and fifth lenses 104 and 105, so that the center distance between the sensor-side aspherical lenses may be reduced by the center distance between the object-side spherical lenses. Preferably, 0.3 < CG4 / CG2 < 0.8 may be satisfied.

$$[Equation\ 7]\ 1 < CG3\ /\ FT < 7$$

FT is the thickness of the optical filter 155. In Equation 7, by making the center distance CG3 between the third and fourth lenses 103 and 104 larger than the thickness of the optical filter 155, a space may be secured in which the optical filter 155 may be disposed in the region between the third and fourth lenses 103 and 104. Preferably, 3 < CG3 / FT < 5 may be satisfied.

$$[Equation\ 8]\ 0.5 < CG2\ /\ (CT1{+}CG1{+}CT2) < 1.5$$

In Equation 8, the center distance CG2 between the second and third lenses 102 and 103 may be set to be greater than the optical axis distance between the object-side surface of the first lens 101 and the sensor-side surface of the second lens 102. Accordingly, the effective diameter of the object-side surface of the first lens 101 may be set to the maximum, and the second lens 102 may be set as a lens having a concave sensor-side surface and a minimum effective diameter. Preferably, 1 < CG2 / (CT1+CG1+CT2) < 1.5 may be satisfied.

$$[Equation\ 10]\ 1.70 < n1$$

n1 is the refractive index of the d-line of the first lens 101. In Equation 10, by setting the refractive index of the first lens 101 high, the factor affecting the reduction of the third aberration (Seidel aberration) of the optical system may be adjusted, and the aberration that may occur when the TTL is somewhat longer may be reduced. Equation 10 preferably satisfies: 1.75 < n1 < 2.1. If it is designed to be lower than the lower limit of Equation 10, the performance of reducing aberration may be obtained, and the refractive power of the first lens becomes weak, so that light cannot be collected efficiently, and the performance of the optical system may be degraded. If it is designed to be higher than the upper limit of Equation 10, there is a disadvantage in that it becomes difficult to obtain materials. In addition, if the refractive index of the first lens 101 is designed to be lower than the lower limit of Equation 10, the radius of curvature of the first and second lenses may be increased in order to increase the refractive power of the first and second lenses.

$$[Equation\ 10\text{-}1]\ 1.7 < Aver(n1{:}n5) < 1.8$$

Aver(n1:n5) is the average of the refractive index values of the d-line of the first to fifth lenses. When Equation 10-1 is satisfied, the optical system 100 can set the resolution and suppress the influence on TTL.

$$[Equation\ 10\text{-}2]\ GMn\_Aver < GLn\_Aver$$

GLn_Aver is the average of the refractive index values of the d-line of the spherical glass lenses, and GMn_Aver is the average of the refractive index values of the d-line of the aspherical glass lenses, which are glass molds. The spherical lens is a lens made of a glass material that is not injection molded, and the aspherical lens is a lens made of an injection molded glass material. The spherical lenses with high refractive index are positioned on the object side of the aspherical lens, which can increase the color dispersion.

$$[Equation\ 11]\ 0 < n1/n3 < 1.5$$

n1 and n3 are the refractive indices of the d-line of the first and third lenses 101 and 103. In Equation 11, the difference in the refractive indices of the first lens 101 and the third lens 103 may be reduced to prevent the degradation of color dispersion by the lenses made of glass. Preferably, Equation 11 may satisfy: $1 < n1/n3 < 1.3$.

$$[Equation\ 12]\ 0 < n3/n4 < 1.5$$

n3 and n4 are the refractive indices of the d-line of the third and fourth lenses 103 and 104. In Equation 12, the refractive indices of the third lens 103 are set higher than the refractive indices of the fourth lens 104, so that the color dispersion by the lenses made of spherical materials and the color dispersion by the aspherical lenses may be controlled. Preferably, Equation 12 may satisfy: $1 < n3/n4 < 1.2$.

$$[Equation\ 13]\ (v4*n4) < (v1*n1)$$

n1 and n4 are refractive indices of the d-line of the first and fourth lenses 101 and 104, and v1 and v4 are Abbe numbers of the first and fourth lenses. In Equation 13, the product of the refractive index and Abbe number of the first lens 101 is set to be greater than the product of the refractive index and Abbe number of the fourth lens 104, so that the color dispersion by the lenses of the spherical material and the color dispersion by the aspherical lenses can be controlled.

$$[Equation\ 14]\ BFL < D1$$

BFL is the optical axis distance from the surface of the image sensor 151 to the center of the sensor-side surface of the last lens, i.e., the fifth lens, and D1 is an optical axis distance from the surface of the image sensor 151 to the surface of the optical filter 155. By satisfying Equation 14, the optical filter 155 may be disposed in an area adjacent to the aperture stop ST or positioned around a lens closer to the object side than the last lens.

$$[Equation\ 14\text{-}1]\ 1 < SD/D1 < 1.2$$

SD is a distance in the optical axis direction from the aperture stop ST to the surface of the image sensor 151. When Equation 14-1 is satisfied, the optical filter 155 is adjacent to the aperture stop ST and may be arranged closer to the image sensor 151 than the aperture stop ST.

$$[Equation\ 15]\ (CTn+CTn\text{-}1) < D1$$

CTn is a center thickness of the n-th lens adjacent to the image sensor 151, CTn-1 means the center thickness of the n-1th lens, and D1 is the optical axis distance from the surface of the image sensor 151 to the optical filter 155. In Equation 15, the optical axis distance between the optical filter 155 and the image sensor 151 may be set to be greater than the sum of the center thicknesses of the n-th lens and the n-1th lens adjacent to the image sensor 151. The n-th lens may be the fifth lens, and the n-1th lens may be the fourth lens. Accordingly, the incident angle of the main beam incident on the optical filter 155 may be reduced to less than 20 degrees, and the problem of the incident angle shifting at low and high temperatures compared to room temperature may be minimized.

$$[Equation\ 15\text{-}1]\ (CTn+CTn\text{-}1) < D1 < TTL/2$$

TTL is the optical axis distance from the center of the object-side surface of the first lens 101 to the surface of the image sensor 151. In Equation 15-1, the optical axis distance between the optical filter 155 and the image sensor 151 may be set to less than 1/2 of the total optical axis length (TTL). Accordingly, the incident angle of the main beam incident on the optical filter 155 may be reduced to less than 20 degrees, and the problem of the incident angle shifting at low and high temperatures compared to room temperature may be minimized. Preferably, D1 satisfies: 18 mm < D1 < 25 mm.

$$[\text{Equation 16}]\ D1 < D2$$

D1 is the optical axis distance from the surface of the image sensor 151 to the optical filter 155, and D2 is the optical axis distance from the center of the object-side surface of the first lens 101 to the object-side surface of the optical filter 155. When Equation 16 is satisfied, the optical filter 155 may be disposed between the lenses, or may be arranged at a position adjacent to the aperture stop ST between the third and fourth lenses. Accordingly, the incident angle of the main beam incident on the optical filter 155 may be reduced to less than 20 degrees, and the problem of the incident angle shifting at low and high temperatures compared to room temperature may be minimized.

$$[\text{Equation 17}]\ 0 < FT < CG3$$

If Equation 17 is satisfied, the filter may be disposed between the third and fourth lenses. In addition, $0 < FT < EG3$ may be satisfied, and EG3 is the edge distance between the third and fourth lenses. In addition, $0 < FT < CG\_Min$ may be satisfied, and CG_Min means the minimum distance among the center distances between two adjacent lenses.

$$[\text{Equation 18}]\ 1 < CA11 / CA21 < 5$$

CA21 means the effective diameter of the third surface S3 of the second lens 102. When Equation 18 is satisfied, the optical system 100 can control the incident light and set the factor affecting the aberration, and preferably, $1 < CA11 / CA21 < 2.5$ may be satisfied.

$$[\text{Equation 19}]\ 0 < CA22 / CA31 < 1.5$$

CA22 means the effective diameter of the fourth surface S4 of the second lens 102, and CA31 means the effective diameter of the fifth surface S5 of the third lens 103. When Equation 19 is satisfied, the optical system 100 can control the incident light path and set the sensor-side surface of the second lens 102 to a concave shape. Preferably, Equation 19 may satisfy: $0.5 < CA22 / CA31 < 1$.

$$[\text{Equation 20}]\ 0.5 < CA42 / CA51 < 2$$

CA42 means the effective diameter of the eighth surface S8 of the fourth lens 104, and CA51 means the effective diameter of the ninth surface S9 of the fifth lens 105. When Equation 20 is satisfied, the optical system 100 can set the light path incident on the image sensor 151 through the fourth lens 104 and the fifth lens 105. Equation 20 may preferably satisfy: $1 < CA42 / CA51 < 1.5$.

$$[\text{Equation 21}]\ 1 < CA11 / CA51 < 5$$

When the optical system 100 satisfies Equation 21, the incident amount of the first lens, the spherical lens, may be increased, and the light path toward the image sensor may be set through the last lens, the aspherical lens. Equation 21 preferably satisfies: $1 < CA11 / CA51 < 2.5$.

$$[\text{Equation 22}]\ 1 < CG2 / (CT2+CT3) < 3$$

If Equation 22 is satisfied, the concave curvature radius of the sensor-side surface of the second lens 102 may be set, and the optical path between the second and third lenses 102 and 103 may be set. Preferably, $1 < CG2 / (CT2+CT3) < 2$ may be satisfied.

$$[\text{Equation 23}]\ 0 < CG4 / (CT4+CT5) < 1$$

If Equation 23 is satisfied, the curvature radius of the sensor-side surface of the fourth lens 104 may be reduced, and the optical path may be set according to the center distance between the fourth and fifth lenses 104 and 105. Preferably, 0 < CG4 / (CT4+CT5) < 0.7 may be satisfied.

$$[Equation\ 24]\ 1 < CG\_Max / CG4 < 4$$

CG_Max means the maximum of the center distance between the lenses in the optical system. When Equation 24 is satisfied, the maximum center distance between the lenses is positioned closer to the object side than the center distance between the fourth lens 104 and the fifth lens 105, so that the size of the fourth lens 104 may be suppressed from increasing. Preferably, 1.5 < CG_Max / CG4 < 3 may be satisfied.

$$[Equation\ 25]\ 0 < CT5 / BFL < 4$$

CT5 is the center thickness of the fifth lens, and BFL is the optical axis distance from the center of the sensor-side surface of the last lens to the image sensor 151. That is, BFL is the optical axis distance from the center of the sensor-side surface of the fifth lens 105 to the surface of the image sensor 151. When Equation 25 is satisfied, the incident light may be stably transmitted to the entire region of the image sensor 151 by the fifth lens 105. Preferably, 1 < CT5 / BFL < 3 may be satisfied. Here, CT5 is the maximum of the center thicknesses of the lenses.

$$[Equation\ 26]\ 0 < CG3 / CT5 < 1.5$$

When Equation 26 is satisfied, the effective diameter of the fifth lens 105 may be adjusted. Preferably, 0.1 < CG3 / CT5 < 1 may be satisfied.

$$[Equation\ 27]\ 0 < CG4 / CT5 < 1$$

If Equation 27 is satisfied, the effective diameter of the fifth lens 105 may be adjusted and the aberration characteristics in the center and peripheral regions of the image sensor 151 may be improved. Preferably, 0.3 < CG4 / CT5 < 1 may be satisfied.

$$[Equation\ 28]\ 0 < |L5R2| / CT5 < 5$$

L5R2 is the radius of curvature of the sensor-side surface of the fifth lens. If Equation 28 is satisfied, the refractive power of the fifth lens 105 may be controlled and the optical performance may be improved.

$$[Equation\ 29]\ 0 < |L5R2| / L5R1 < 5$$

L5R1 is the radius of curvature of the object-side surface of the fifth lens. If Equation 29 is satisfied, the refractive power of the fifth lens 105 may be controlled and the optical performance may be improved.

$$[Equation\ 30]\ 0 < L1R1 / L1R2 < 5$$

L1R1 is the radius of curvature of the object-side surface of the first lens, and L1R2 is the radius of curvature of the sensor-side surface of the first lens. If Equation 30 is satisfied, the refractive power of the first lens 101 can be controlled and the optical performance can be improved.

$$[Equation\ 31]\ 500 < |L2R1| / L2R2$$

L2R1 is the radius of curvature of the object-side surface of the second lens, and L2R2 is the radius of curvature of the sensor-side surface of the second lens. If Equation 31 is satisfied, the refractive power of the second lens 102 can be controlled and the optical performance can be improved, and the effective diameter of the sensor-side lenses of the second lens 102 can be adjusted. If the object-side surface of the second lens 112 is made flat, lens processing can be easy.

$$[\text{Equation 32}] \; 0 < CT\_Max / CG\_Max < 2$$

In Equation 32, the maximum center thickness CT_Max among the lenses and the maximum center distance CG_Max between adjacent lenses may be set. If Equation 32 is satisfied, the optical system may have good optical performance at the focal length of the set field of view and can reduce TTL. Preferably, 0 < CT_Max / CG_Max < 1 may be satisfied.

$$[\text{Equation 33}] \; 0 < \Sigma CT / \Sigma CG < 2$$

$\Sigma CT$ is the sum of the center thicknesses of the lenses, and $\Sigma CG$ is the sum of the center distances between adjacent lenses. If Equation 33 is satisfied, the optical system may have good optical performance at the focal length of the set field of view and can reduce TTL. Preferably, 0 < $\Sigma CT$ / $\Sigma CG$ < 1 may be satisfied.

$$[\text{Equation 34}] \; 5 < \Sigma Index < 15$$

$\Sigma Index$ means the sum of the refractive indices of each of the plurality of lenses at the d-line. If Equation 34 is satisfied, the optical system 100 in which an aspherical lens and a spherical material lens are mixed can control TTL and have improved resolution. In addition, if the number of spherical material lenses is greater than the number of aspherical material lenses, the sum of TTL and refractive indices may be set. Equation 34 may preferably satisfy: 7 < $\Sigma Index$ < 13.

$$[\text{Equation 35}] \; 10 < \Sigma Abbe / \Sigma Index < 50$$

$\Sigma Abbe$ means the sum of the Abbe numbers of each of the plurality of lenses. If Equation 35 is satisfied, the optical system 100 may have improved aberration characteristics and resolution. Equation 35 sets the sum of the Abbe number and the sum of the refractive index of the lenses, so that the optical characteristics can be controlled, and preferably 10 < $\Sigma Abb$ / $\Sigma Index$ < 30 may be satisfied.

$$[\text{Equation 36}] \; 50 < \Sigma CT*n < 150$$

$\Sigma CT$ is the sum of the center thicknesses of the plurality of lenses, and n is the number of lenses of the optical system. If Equation 36 is satisfied, the TTL may be controlled. Preferably, 70 < $\Sigma CT*n$ < 120 may be satisfied.

$$[\text{Equation 37}] \; 0 < \Sigma CT / \Sigma ET < 2$$

$\Sigma CT$ is the sum of the center thicknesses of the lenses, and $\Sigma ET$ is the sum of the edge thicknesses of the effective regions of the lenses. If Equation 37 is satisfied, the optical system may have good optical performance at the focal length at the set field of view, and can reduce the TTL. Equation 37 preferably satisfies: 0.5 < $\Sigma CT$ / $\Sigma ET$ < 1.5.

$$[\text{Equation 38}] \; 1 < CA11 / CA\_Min < 5$$

CA11 is the effective diameter of the object-side first surface S1 of the first lens, and CA_Min means the minimum effective diameter among the object-side surfaces and the sensor-side surfaces of the lenses. When Equation 38 is satisfied, the optical system can provide a slimmer module while controlling incident light and maintaining optical performance. Equation 38 preferably satisfies: 1 < CA11 / CA_Min < 3. Here, CA11 may be the maximum effective diameter, and the sensor-side surface of the second lens 102 may be the minimum effective diameter.

$$[\text{Equation 38-1}] \; 1 < CA\_Max / CA\_Min < 5$$

CA_Max means the maximum effective diameter among the object-side surfaces and the sensor-side surfaces of the lenses. If Equation 39 is satisfied, the optical system can set a size for a slim and compact structure while maintaining optical performance. Equation 39 may preferably satisfy: 1 < CA_Max / CA_Min < 3.

$$[\text{Equation 39}] \; 0 < CG2 / CA12 < 2$$

CG2 is a center distance between the second and third lenses, and CA12 is an effective diameter of the sensor-side surface of the first lens. If Equation 39 is satisfied, the incident light of the spherical lenses may be controlled. Equation 39 may preferably satisfy: 0.5 < CG2 / CA12 < 1.

$$[\text{Equation 40}] \ 1 < CA\_Max / CA\_Aver < 3$$

CA_Aver means an average of the effective diameters of the object-side surfaces and the sensor-side surfaces of the lenses. If Equation 40 is satisfied, the optical system can set a slim and compact sensor device while maintaining optical performance. Equation 40 preferably satisfies: 1 < CA_Max / CA_Aver < 2.

$$[\text{Equation 41}] \ 0.1 < CA\_Min / CA\_Aver < 2$$

If Equation 41 is satisfied, the optical system can maintain optical performance and set a slim and compact sensor device. Equation 41 preferably satisfies: 0.5 < CA_Min / CA_Aver < 1.

$$[\text{Equation 42}] \ 1 < CA\_Max / (2*ImgH) < 6$$

Equation 42 may be set to the maximum effective diameter CA_Max and the diagonal length (2*ImgH) of the image sensor, and if this is satisfied, the optical system can maintain good optical performance and set a slim and compact sensor device. Equation 42 preferably satisfies: 3 < CA_Max / (2*ImgH) < 4.5.

$$[\text{Equation 42-1}] \ 1 < TD / CA\_Max < 4$$

TD is the optical axis distance from the center of the object-side surface of the first lens to the center of the sensor-side surface of the last lens. When Equation 42-1 is satisfied, the total optical axis distance and the maximum effective diameter of the lenses may be set, so that the size for good optical performance may be set. Equation 42-1 may preferably satisfy: 1 < TD / CA_Max < 3.

$$[\text{Equation 42-2}] \ SD < TD$$

The SD is the optical axis distance from the position of the aperture stop to the surface of the image sensor. Preferably, the following condition may satisfy: 1.5 < TD/SD < 2.5.

$$[\text{Equation 43}] \ 0 < F / |L5R2| < 1$$

F is the effective focal length of the optical system, and L5S2 is the radius of curvature of the sensor-side surface of the fifth lens. If Equation 43 is satisfied, the effective focal length and the radius of curvature of the sensor-side surface of the last aspherical lens may be set to control the influence on optical system reduction, for example, TTL. Equation 43 may preferably satisfy:

$$0 < F / |L5R2| < 0.5.$$

$$[\text{Equation 44}] \ 0 < F / L1R1 < 1$$

In Equation 44, the effective focal length of the optical system and the radius of curvature of the object-side surface of the first lens may be set to control the influence on incident light and TTL. Equation 44 may preferably satisfy: 0 < F / L1R1 < 0.5.

$$[\text{Equation 45}] \ 0 < EPD / |L5R2| < 1$$

EPD means the size (mm) of the entrance pupil diameter of the optical system 100, and L5R2 means the radius of curvature of the sensor-side surface of the fifth lens. When the optical system 100 according to the embodiment satisfies Equation 45, the optical system 100 can control the incident light. Preferably, the following condition may satisfy: 0 < EPD /

IL5R21 < 0.5.

$$[\text{Equation 46}]\ 0 < EPD / L1R1 < 1$$

In Equation 46, the size of the entrance pupil of the optical system 100 and the radius of curvature of the object-side surface of the first lens may be set, and when these are satisfied, the optical system 100 can control the incident light. Preferably, the following condition may satisfy:

$$0 < EPD / L1R1 < 0.5.$$

$$[\text{Equation 47}]\ 0 < \mid F1 / F2 \mid\ < 10$$

F1 is the focal length of the first lens, and F2 is the focal length of the second lens. When Equation 47 is satisfied, the resolution may be improved by controlling the refractive power of the first and second lenses, and the TTL and effective focal length (EFL) may be affected. Preferably, 0 < | F1 / F2 | < 2 may be satisfied.

$$[\text{Equation 48}]\ 0 < \mid F1 \mid\ / F < 10$$

In Equation 48, the focal length of the first lens and the effective focal length of the optical system may be set, and the resolution can be improved by controlling the refractive power of the first lens.

$$[\text{Equation 49}]\ 0 < \mid F1/F5 \mid\ < 10$$

In Equation 49, the focal lengths of the first and fifth lenses may be set, and the resolution may be improved by controlling the refractive power of the first and fifth lenses. Preferably, 0 < | F1/F5 | < 5 may be satisfied.

$$[\text{Equation 49-1}]\ \mid F1 \mid\ < F4$$

$$[\text{Equation 49-2}]\ F3 < F4$$

$$[\text{Equation 49-3}]\ 2* \mid F2 \mid\ < F4$$

In Equations 49-1 to 49-3, F1, F2, F3, F4, and F5 are focal lengths of the first to fifth lenses, and light can be guided to the effective region of the aspherical lens by adjusting the focal length of the spherical lens to the focal length of the last aspherical lens. Here, F1 is -10 mm or less, for example, in the range of -10 mm to -30 mm. F2 is -5 mm or less, for example, in the range of -5 mm to -20 mm. F3 is 15 mm or more, for example, in the range of 15 mm to 30 mm. F4 is 16 mm or more, for example, in the range of 16 mm to 34 mm. F5 is 5 mm or more, for example, in the range of 5 mm to 17 mm. The balance of each focal length of the above lenses can suppress the difference in the focus position due to temperature change. Accordingly, the optical characteristics of the imaging lenses may be suppressed from deteriorating due to temperature change. The aperture stop ST is disposed on the sensor-side surface of the third lens 103. The focal length of the lens disposed on the sensor-side surface more than the aperture stop ST and closest to the aperture stop ST is greater than 0. In the embodiment of the present invention, the focal length F3 of the third lens 103 should be designed to be greater than 0. In this case, since the third lens 103 gathers light, the effective diameter of the fourth lens to the fifth lens, which are lenses arranged closer to the sensor than the third lens 103, may be prevented from increasing, and the TTL may be prevented from becoming longer, thereby enabling miniaturization of the receiving optical system. In this case, a wide-angle optical system may be provided in the range of FOV exceeding 100 degrees, for example, 110 degrees to 130 degrees.

$$[\text{Equation 50}]\ Po2 * Po3 < 0$$

Po2 is the refractive power value of the second lens, and Po3 is the refractive power value of the third lens. That is, the refractive powers of the second and third lenses have opposite refractive powers, so that aberration may be improved, and light may be effectively guided by the aspherical lens. When the condition of Po2 * Po3 > 0, the effect of improving chromatic aberration in the two lenses does not appear significantly.

$$[\text{Equation 51}]\ 20mm < TTL < 60mm$$

TTL means the distance (mm) from the center of the first surface S1 of the first lens 101 to the imaging surface of the image sensor 151 on the optical axis OA. In Equation 51, by setting the TTL to be more than 20mm and less than 60mm, a vehicle optical system may be provided. Equation 51 may preferably satisfy the following condition: 30mm < TTL < 55mm or TD < TTL.

$$[\text{Equation 52}]$$

$$2mm < ImgH < 20mm$$

Equation 52 can set the diagonal size of the image sensor 151 and provide an optical system having a vehicle sensor size. Equation 52 may preferably satisfy: 2mm < ImgH < 5mm.

$$[\text{Equation 53}]\ 1.5\ mm < BFL < 7\ mm$$

In Equation 53, the BFL (Back focal length) is set to be greater than 1.5 mm and less than 7 mm, so that the installation space of the cover glass 153 may be secured, the assembly of components may be improved through the gap between the image sensor 151 and the last lens, and the bonding reliability can be improved. Equation 53 preferably satisfies 4 mm < BFL < 7 mm. When the BFL is less than the range of Equation 53, some of the light that proceeds to the image sensor may not be transmitted to the image sensor, which may be a cause of resolution degradation. When the BFL exceeds the range of Equation 53, stray light may be introduced, which may deteriorate the aberration characteristics of the optical system.

$$[\text{Equation 54}]\ 1\ mm < F < 10\ mm$$

Equation 54 can set the total focal length (F) to suit the vehicle optical system. Equation 54 may satisfy: 1 < F < 5.

$$[\text{Equation 55}]\ 100\ degrees < FOV$$

In Equation 55, FOV means the field of view (Degree) of the optical system 100, and a vehicle optical system having an FOV exceeding 100 degrees may be provided. The FOV may preferably satisfy: 110 degrees ≤ FOV ≤ 130 degrees. In Equation 55, the range of the vehicle optical system may be set by the FOV. The sensor length in the horizontal direction is based on 6.041 mm ± 0.5 mm. In addition, when Equation 55 is satisfied, when the temperature changes from room temperature to high temperature, the change rate of the effective focal length and the change rate of the field of view may be set to 5% or less, for example, 0 to 5%. In addition, even if two or more aspherical lenses are mixed with spherical lenses and used in the optical system 100, the deterioration of optical characteristics can be prevented through temperature compensation and aberration correction by the aspherical lens made of glass.

$$[\text{Equation 56}]\ 1 < TTL\ /\ CA\_Max < 7$$

In Equation 56, CA_Max means the largest effective diameter (mm) among the object-side and sensor-side surfaces of the plurality of lenses, and TTL means the distance (mm) from the apex of the first surface S1 of the first lens to the imaging surface of the image sensor 151 in the optical axis OA. Equation 56 can provide an improved vehicle optical system by setting the relationship between the total optical axis length of the optical system and the maximum effective diameter. Equation 56 may preferably satisfy: 1 < TTL / CA_Max < 3.

$$[\text{Equation 57}]\ 10 < TTL\ /\ ImgH < 30$$

Equation 57 can set the total optical axis length (TTL) of the optical system and the diagonal length (ImgH) from the optical axis of the image sensor 151. When the optical system 100 according to the embodiment satisfies Equation 57, the optical system 100 may have TTL for application to the vehicle image sensor 151, thereby providing improved image quality. Equation 57 may preferably satisfy: 10 < TTL / ImgH < 20.

$$[\text{Equation 58}] \ 0 < BFL / ImgH < 3$$

Equation 58 can set the optical axis interval between the image sensor 151 and the last lens and the diagonal length from the optical axis of the image sensor 151. When the optical system 100 according to the embodiment satisfies the Equation 58, the optical system 100 can secure a BFL for applying the size of the vehicle image sensor 151, set the distance between the last lens and the image sensor 151, and have good optical characteristics at the center and periphery of the FOV. The Equation 58 may preferably satisfy: 1.5 < BFL / ImgH < 2.5.

$$[\text{Equation 58-1}] \ ImgH < BFL < D1$$

BFL is the optical axis distance from the sensor side of the n-th lens or the fifth lens 105 to the image sensor 151, and may be greater than a value (ImgH) that is 1/2 of the diagonal length of the image sensor 151 and smaller than the optical axis distance from the optical filter 155 to the surface of the image sensor 151.

$$[\text{Equation 59}] \ 5 < TTL / BFL < 20$$

Equation 59 can set the total optical axis length (TTL) of the optical system and the optical axis distance (BFL) between the image sensor 151 and the last lens. When the optical system 100 according to the embodiment satisfies Equation 59, the optical system 100 can secure BFL. Equation 59 may preferably satisfy: 5 < TTL / BFL < 12.

$$[\text{Equation 60}] \ 10 < TTL/F < 30$$

Equation 60 can set the total focal length (F) and the total optical axis length (TTL) of the optical system 100. Accordingly, an optical system for a driver assistance system can be provided. Equation 60 may preferably satisfy: $10 \le$ TTL/F < 25 or 12 < TTL/F < 20. When the optical system 100 according to the embodiment satisfies the Equation 60, the optical system 100 may have an appropriate focal length in the set TTL range, and can provide an optical system that can maintain an appropriate focal length and form an image even when the temperature changes from low to high. When it is less than the lower limit of the Equation 60, it is necessary to increase the refractive power of the lenses, so that correction of spherical aberration or distortion aberration becomes difficult, and when it exceeds the upper limit of the Equation 60, the effective diameter or TTL of the lenses becomes longer, so that the problem of the imaging lens system becoming larger may occur.

$$[\text{Equation 61}] \ 0 < F / BFL < 3$$

Equation 61 can set the total focal length (F) of the optical system 100 and the optical axis distance (BFL) between the image sensor 151 and the last lens. When the optical system 100 according to the embodiment satisfies the Equation 61, the optical system 100 may have a set field of view and an appropriate focal length, and can provide a vehicle optical system. In addition, the optical system 100 can minimize the distance between the last lens and the image sensor 151, so that it may have good optical characteristics in the periphery of the FOV. The Equation 61 may preferably satisfy: 0 < F / BFL < 1.

$$[\text{Equation 62}] \ 0.5 < F / ImgH < 1.5$$

The Equation 62 can set the total focal length (F) of the optical system 100 and the diagonal length (ImgH) from the optical axis of the image sensor 151. Such an optical system 100 may have improved aberration characteristics in the size of the vehicle image sensor 151. Equation 62 preferably satisfies: 0.7 < F / ImgH < 1.

$$[\text{Equation 63}] \ 0.5 < F / EPD < 1.5$$

Equation 63 can set the total focal length (F) and the entrance pupil size of the optical system 100. Accordingly, the overall brightness of the optical system can be controlled. Equation 63 preferably satisfies: 0.5 < F / EPD < 1.

$$[\text{Equation 64}] \ 0 < EPD / ImgH / FOV < 0.2$$

Equation 64 can set the relationship between the entrance pupil size (EPD), the length of 1/2 of the maximum diagonal length (ImgH) of the image sensor, and the field of view. Accordingly, the overall size and brightness of the optical system can be controlled. Equation 64 preferably satisfies: 0 < EPD / ImgH / FOV < 0.1.

$$[\text{Equation 65}] \quad 100 < FOV / F\# < 200$$

Equation 65 can set the relationship between the field of view and the F number (F#) of the optical system. Preferably, Equation 65 may satisfy: 120 < FOV / F# < 170. Here, F# is provided as 1.2 or less, so as to provide a bright image.

$$[\text{Equation 66}] \quad 50 < (CT\_Max+CG\_Max)*n < 150$$

$$[\text{Equation 67}] \quad 800 < (FOV*TTL)/n$$

Preferably, Equation 67 may satisfy the following condition: 1000 < (FOV*TTL)/n < 1500 depending on the field of view and the number of lenses (n).

$$[\text{Equation 68}] \quad FOV < (TTL*n)$$

$$[\text{Equation 69}] \quad 1 < (TD/CA\_Max)*n < 20$$

Preferably, 5 < (TD/CA_Max)*n < 15 may be satisfied.

$$[\text{Equation 70}] \quad 0 < (CA52/CA22)/(CA11/CA22) < 1$$

In Equations 66 to 70, n is the total number of lenses, and the relationship between the maximum center thickness CT_Max of the lenses, the maximum center distance CG_Max, FOV, TTL, the optical axis distance TD of the lenses, the effective diameter of the sensor-side surface of the fifth lens CA52, the effective diameter of the object-side surface of the first lens, and the effective diameter of the sensor-side surface of the second lens can be set according to the total number of lenses. Accordingly, the chromatic aberration, resolution, size, etc. of the optical system having 6 or fewer lenses can be controlled.

[Equation 71]

$$Z = \frac{cY^2}{1+\sqrt{1-(1+K)c^2Y^2}} + AY^4+BY^6+CY^8+DY^{10}+EY^{12}+FY^{14}+\cdots$$

In the Equation 71, Z may mean a distance in the direction of the optical axis from an arbitrary position on the aspherical surface to the vertex of the aspherical surface. The Y may mean a distance in the direction perpendicular to the optical axis from an arbitrary position on the aspherical surface to the optical axis. The c may mean the curvature of the lens, and K may mean the conic constant. In addition, A, B, C, D, E, and F may mean aspheric coefficients.

The optical system 100 according to the embodiment may satisfy at least one or two or more Equations among the Equations 1 to 70. In this case, the optical system 100 may have improved optical characteristics. In detail, when the optical system 100 satisfies at least one of the Equations 1 to 35 and/or at least one of the Equations 36 to 70, the optical system 100 may have improved resolution and may improve aberration and distortion characteristics. In addition, the optical system 100 can secure BFL for applying a vehicle image sensor 151, compensate for optical characteristic degradation due to temperature change, and minimize the gap between the last lens and the image sensor 151, thereby providing good optical performance at the center and periphery of the FOV.

Table 4 shows the items of the Equations described above in the optical system 100 of the embodiment, including the TTL (mm), BFL, effective focal length (F), ImgH, effective diameter CA, the sum of the center thicknesses of each lens, the sum of the center distances between adjacent lenses, the sum of Abbe numbers, the sum of refractive indices, the optical axis distance TD (mm) from the first surface S1 to the tenth surface S10, the focal length F1, F2, F3, F4, and F5 of

## EP 4 603 886 A1

each of the first to fifth lenses, the FOV, the edge thickness ET, the F number, etc. of the optical system 100.

[Table 4]

| Items | Values | Items | Values |
|---|---|---|---|
| F(EFL) | 2.821 | ET1 | 3.846 |
| F1 | -15.190 | ET2 | 3.552 |
| F2 | -9.483 | ET3 | 3.005 |
| F3 | 23.518 | ET4 | 2.499 |
| F4 | 27.316 | ET5 | 4.639 |
| F5 | 11.409 | FOV | 125.206 |
| ΣIndex | 8.854 | EPD | 3.516 |
| ΣAbbe | 159.800 | BFL | 5.790 |
| ΣCT | 19.891 | TD | 41.111 |
| ΣCG | 21.219 | ImgH | 3.021 |
| TTL | 46.900 | SD | 23.782 |
| F-number | 0.802 | | |

Table 5 shows the result values for the Equations 1 to 35 described above in the optical system 100 of the embodiment. Referring to Table 5, it may be seen that the optical system 100 satisfies at least one, two or more, or three or more of the Equations 1 to 50. In detail, it may be seen that the optical system 100 according to the embodiment satisfies all of the Equations 1 to 50. Accordingly, the optical system 100 may have good optical performance and excellent optical characteristics at the center and periphery of the FOV.

[Table 5]

| | Equations | Values |
|---|---|---|
| 1 | 0<CT1/CT2<3 | 1.668 |
| 2 | 5 < CA11/CT1 < 15 | 9.591 |
| 3 | 0 < CT5 / CT4 < 3 | 1.561 |
| 4 | 0 < CT5 / (CT1+CT2) < 3 | 1.952 |
| 5 | 0 < CT5 / CG2 < 1.5 | 0.725 |
| 6 | 0 < CG4 / CG1 < 1.5 | 0.852 |
| 7 | 1 < CG3 / FT < 7 | 4.007 |
| 8 | 0.5 < CG2 / (CT1+CG1+CT2) < 1.5 | 1.125 |
| 9 | 5 < TTL/CT_AVER < 25 | 11.789 |
| 10 | 1.7 < n1 | 1.808 |
| 11 | 0 < n1/n3 <1.5 | 1.014 |
| 12 | 0 < n3/n4 <1.5 | 1.071 |
| 13 | (v4*n4) < (v1*n1) | Satisfaction |
| 14 | BFL < D1 | Satisfaction |
| 15 | (CTn+CTn-1) < D1 | Satisfaction |
| 16 | D1 < D2 | Satisfaction |
| 17 | 0 < FT < CG3 | Satisfaction |
| 18 | 1 < CA11 / CA21 < 5 | 1.698 |
| 19 | 0 < CA22 / CA31 < 1.5 | 0.724 |

(continued)

| | Equations | Values |
|---|---|---|
| 20 | 0.5 < CA42 / CA51 < 2 | 1.201 |
| 21 | 1 < CA11/CA52 < 5 | 1.693 |
| 22 | 1 < CG2 / (CT2+CT3) < 3 | 1.649 |
| 23 | 0 < CG4 /(CT4+CT5) < 1 | 0.371 |
| 24 | 1 < CG Max / CG4 < 4 | 2.268 |
| 25 | 0 < CT5 / BFL < 4 | 1.228 |
| 26 | 0 < CG3 / CT5 < 1.5 | 0.282 |
| 27 | 0 < CG4 / CT5 < 1 | 0.608 |
| 28 | 0 < IL5R21 / CT5 < 5 | 2.752 |
| 29 | 0 < IL5R21 / L5R1 < 5 | 1.852 |
| 30 | 0 < L1R1/L1R2 < 5 | 3.029 |
| 31 | 500 < |L2R1| / L2R2 | Satisfaction |
| 32 | 0 < CT_Max / CG_Max < 2 | 0.725 |
| 33 | 0 < $\Sigma$CT / $\Sigma$CG < 2 | 0.937 |
| 34 | 5 < $\Sigma$Index <15 | 8.854 |
| 35 | 10 < $\Sigma$Abbe / $\Sigma$Index <50 | 18.048 |

Table 6 shows the result values for the Equations 36 to 70 described above in the optical system 100 of the embodiment. Referring to Table 6, it may be seen that the optical system 100 satisfies at least one, two or more, or three or more of the Equations 36 to 70. In detail, it may be seen that the optical system 100 according to the embodiment satisfies all of the Equations 1 to 70. Accordingly, the optical system 100 may have good optical performance and excellent optical characteristics at the center and periphery of the FOV.

[Table 6]

| | Equations | Values |
|---|---|---|
| 36 | 50 < $\Sigma$CT*n < 150 | 99.457 |
| 37 | 0 < LCT / LET < 2 | 1.134 |
| 38 | 1 < CA11 / CA_Min < 5 | 2.029 |
| 39 | 0 < CG2 / CA12 < 2 | 0.709 |
| 40 | 1 < CA_Max / CA_Aver < 3 | 1.489 |
| 41 | 0.1 < CA_Min / CA_Aver < 2 | 0.734 |
| 42 | 1 < CA_Max / (2*ImgH) < 6 | 3.614 |
| 43 | 0 < F / |L5R2| < 1 | 0.144 |
| 44 | 0 < F / L1R1 < 1 | 0.120 |
| 45 | 0 < EPD / |L5R2|< 1 | 0.180 |
| 46 | 0<EPD / L1R1<1 | 0.150 |
| 47 | 0 < | F1 / F2 | < 10 | 1.602 |
| 48 | 1 < | F1 | / F < 10 | 5.385 |
| 49 | 0 < |F1 / F5| < 10 | 1.331 |
| 50 | Po2 * Po3 < 0 | -0.556 |
| 51 | 20 < TTL <60 | 46.900 |

(continued)

|  | Equations | Values |
|---|---|---|
| 52 | 2 < ImgH <20 | 3.021 |
| 53 | 1.5 < BFL < 7 | 5.790 |
| 54 | 1 < F < 10 | 2.821 |
| 55 | 100 < FOV | 125.206 |
| 56 | 1 < TTL / CA_Max < 7 | 2.147 |
| 57 | 10 < TTL / ImgH < 30 | 15.523 |
| 58 | 0 < BFL /ImgH < 3 | 1.916 |
| 59 | 5< TTL / BFL < 20 | 8.101 |
| 60 | 10 < TTL / F < 30 | 16.625 |
| 61 | 0 <F / BFL < 3 | 0.487 |
| 62 | 0.5 < F / ImgH < 1.5 | 0.934 |
| 63 | 0.5 < F / EPD < 1.5 | 0.802 |
| 64 | 0 < EPD/Imgh/FOV < 0.2 | 0.009 |
| 65 | 100 < FOV / F# <200 | 156.062 |
| 66 | 50 < (CT_Max+CG_Max)*n < 150 | 84.601 |
| 67 | 800 < (FOV*TTL)/n | 1174.446 |
| 68 | FOV < (TTL*n) | Satisfaction |
| 69 | 1 < (TD / CA_Max) *n < 20 | 9.412 |
| 70 | 0 < (CA52/CA22) / (CA11/CA21) < 1 | 0.706 |

FIG. 10 is a cross-sectional view showing the transmitting optical system of the invention.

Referring to FIG. 10, the transmitting optical system 110 and the sensor system having it are mounted inside or outside the vehicle and can transmit a laser beam toward the driver monitoring or an external object or lane. The receiving optical system can sense the reflected laser beam. The material of the lenses in the transmitting optical system 110 may be selected from glass or plastic. For example, a glass lens may be selected to suppress the change in the focus position due to temperature change. However, most glass lenses are provided as spherical, but when the optical system is configured with spherical glass lenses, there is a limit to reducing the number of lenses, and there is a limit to reducing the size and weight.

The transmitting optical system 110 of the embodiment of the invention may include a spherical lens and an aspherical lens. The transmitting optical system 110 may include a spherical glass lens and an aspherical glass lens. In addition, since an aspherical lens is adopted, the optical system 110 may have a reduced overall length (TTL), and various aberrations such as spherical aberration and chromatic aberration may be well corrected due to the aspherical lens. In addition, the aspherical lenses can minimize distortion in the peripheral region. The transmitting optical system 110 may include n lenses, and the n-th lens may be the last lens adjacent to the light source 116, and the n-1th lens may be the lens closest to the last lens. The n is an integer greater than or equal to 4, and may be, for example, in the range of 4 to 7 or in the range of 4 to 6. The ratio of the spherical lens to the aspherical lens in the n lenses may be any one of 3:1, 4:1, 3:2, 2:3, 3:3, 5:2, or 4:2.

The transmitting optical system 110 may have the first lens 111 made of glass lenses. The glass material has a small amount of expansion and contraction change due to external temperature changes, and the surface is not easily scratched, so surface damage may be prevented. Accordingly, in the optical system 110, the object-side lenses may be arranged as spherical lenses, and the light source-side lenses(s) may be arranged as aspherical lenses.

At least one lens adjacent to the light source 116 in the optical system 110 may be an aspherical lens. For example, at least two lenses adjacent to the light source 116 may be aspherical lenses, and preferably, at least two lenses adjacent to the light source 116 may be aspherical lenses. That is, since the n-th and n-1th lenses in the optical system 110 are arranged as aspherical lenses, the light from the light source 116 may be emitted through various paths. At least two lenses adjacent to the object in the transmitting optical system 110 may be made of glass. Two or more lenses, for example, two to four lenses, adjacent to the object may be made of glass. Since the rate of contraction and expansion of the lenses made of glass is smaller than that of the plastic material due to temperature changes, the lenses made of glass may be arranged in an area adjacent to the outside within the lens barrel.

Each of the lenses may have an object-side surface and a light source-side surface. The lenses may include lenses having an object-side spherical surface and a light source-side spherical surface, and lenses having an object-side aspherical surface and a light source-side aspherical surface. The optical system may have a smaller number of aspherical lenses than the number of spherical lenses. The transmitting optical system 110 may provide variously refracted light by arranging aspherical lenses adjacent to the light source 116. The spherical lenses may be made of glass, and the aspherical lenses may be made of glass mold material.

Among the lenses of the optical system 110, the lens having the maximum refractive index may be a spherical lens, and the lens having the maximum Abbe number may be a spherical lens. Accordingly, since the lens having the maximum refractive index is disposed on the object side, it is easy to change the radius of curvature of the second and subsequent lenses, and the center thickness may be increased.

The lens having the maximum effective diameter in the optical system 110 is positioned closest to the object, and may be made of glass and may be a spherical lens. The lens having the minimum effective diameter in the optical system 110 is positioned between the aperture stop ST and the first lens 111, and may be a glass lens. In addition, the average effective diameter of the aspherical lenses may be smaller than the average effective diameter of the spherical lenses. Here, the effective diameter of the lens is the average value of the effective diameter of the object-side surface of each lens and the effective diameter of the light source-side surface. Each of the lenses 111-115 may include an effective region and an ineffective region.

Among the lenses of the optical system 110, the lens having the maximum center thickness may be an aspherical lens, and the lens having the maximum edge thickness may be an aspherical lens. Accordingly, various refractive surfaces may be provided, and optical performance may be improved to the periphery. The center thickness of the aspherical lenses may be greater than the center thickness of the spherical lenses. These aspherical lenses may be arranged adjacent to the light source 116 to refract laser light to the entire area of the object-side lenses. In the optical system 110, the TTL may be 10 times greater than the LsH, for example, 10 times greater and 20 times less than the LsH.

The TTL is the distance from the center of the object-side surface of the first lens 111 to the upper surface of the light source 116 along the optical axis Lz. The LsH is a distance from the center of the light source 116 to the diagonal end, or 1/2 of the maximum diagonal length of the light source 116. In addition, the effective diameter of each lens within the optical system 110 may be greater than the diagonal length of the light source 116. The effective focal length (EFL) within the optical system 110 may be provided as 10 mm or less and the FOV may be greater than 100 degrees or $120 \pm 10$ degrees, so that the optical system may be provided as a standard transmitting optical system in a vehicle sensor system. For example, the transmitting optical system and the sensor system according to the embodiment may be applied to a sensing device for an ADAS installed inside or outside a vehicle. Here, the TTL of the receiving optical system of FIG. 1 may be defined as the first TTL, and the TTL of the transmitting optical system may be defined as the second TTL. In addition, the optical axis of the receiving optical system may be the first optical axis, and the optical axis Lz of the receiving optical system may be the second optical axis.

The optical system 110 may have a condition of TTL/(2*LsH) of 5 or more, for example, in the range of 5 to 10. Accordingly, the center thickness of each lens along the optical axis Lz may be increased and the size of the light source 116 may be reduced, thereby providing a vehicle lens optical system. In addition, temperature compensation must be applied in the temperature range that serves as the temperature reliability evaluation standard for automotive electrical components in order to be used in vehicle cameras, that is, from -40°C to +120°C. In other words, the lens must be configured so that the focus of the lens remains within the set range even when the lens expands or contracts due to temperature changes. The total effective focal length (EFL) may be 10 mm or less, for example, in the range of 1 mm to 10 mm or 1 mm to 5 mm, and may be configured with lenses made of glass that may be subject to the aforementioned temperature compensation. The optical system 110 can implement a wide angle by shortening the effective focal length.

The number of lenses having positive (+) refractive power on the optical system 110 may be equal to or greater than the number of lenses having negative (-) refractive power. The number of lenses having positive (+) refractive power may be 50% or more of the total number of lenses. The average refractive index of the lenses having negative refractive power may be greater than the average of the lenses having positive refractive power. Accordingly, the dispersion value of the lenses having positive refractive power may be greater than the dispersion value of the lenses having negative refractive power. Since the optical system 110 is a mixture of a spherical lens and an aspherical lens made of glass, optical performance degradation may be prevented. The effective diameter of the lens closest to the object in the optical system 110 may be larger than the effective diameter of the lens closest to the light source 116. Accordingly, the brightness of the optical system may be controlled. By controlling the effective diameter size of each lens, the optical system 110 can control the incident light to compensate for the deterioration of optical characteristics due to resolution and temperature change, and can improve chromatic aberration control characteristics. By controlling the effective diameters of the lenses, the optical system 110 may be miniaturized.

The transmitting optical system 110 may include first lenses 111 to fifth lenses 115 aligned from the object side toward the light source side along the optical axis Lz. The first to fifth lenses 111, 112, 113, 114, and 115 may be defined as a lens unit. The light source 116 generates a laser beam, and the laser beam may have a range of 890 nm to 960 nm or 940 nm ± 10 nm. The first lens 111 of the transmitting optical system 110 may correspond to the shape of the first lens 101 of the receiving optical system 100 of FIG. 1. The second lens 112 of the transmitting optical system 110 may correspond to the shape of the second lens 102 of the receiving optical system 100 of FIG. 1. The third lens 113 of the above-described transmitting optical system 110 may correspond to the shape of the third lens 103 of the receiving optical system 100 of FIG. 1. The fourth lens 114 of the above-described transmitting optical system 110 may correspond to the shape of the fourth lens 104 of the receiving optical system 100 of FIG. 1 or the first aspherical lens. The fifth lens 115 of the above-described transmitting optical system 110 may correspond to the shape of the first lens 105 of the receiving optical system 100 of FIG. 1 or the second aspherical lens.

When the radius of curvature is described as an absolute value, the lens surface having the minimum radius of curvature based on the optical axis Lz within the above-described optical system 110 may be the light source-side surface of the first or second lens 111 and 112 among the spherical surfaces. Accordingly, the center distance between the first lens 111 and the second lens 112 or the center distance between the second lens 112 and the third lens 113 may be separated. The lens surface having the maximum radius of curvature within the optical system 110 may be the object-side surface of the second lens 114 among the spherical surfaces. By adjusting the radius of curvature of each lens, the CRA (Chief ray angle) from the optical axis to the end of the effective region, that is, in the entire field, may be minimized to 0.5 degrees or less, thereby maximizing the transmission efficiency. Here, as the CRA increases, the asymmetry of the divergence angle based on the center of the light source 116 of the transmitting optical system 110 increases, which may reduce the transmission efficiency.

The transmitting optical system 110 or the sensor system may include a light source 116. The light source 116 generates a wavelength of laser light, and the laser light may be in the range of 890 nm to 960 nm or 940 nm ± 10 nm. The light source 116 may be implemented as a semiconductor diode laser based on InGaAs/GaAs and may emit high power laser light. The light source 116 may include a single emitter and/or multiple emitters. The light source 116 generates laser light in the form of a line light source or a point light source. Here, the length of the light source 116 is the maximum length in the diagonal direction orthogonal to the optical axis Lz, and here, the number of lenses having an effective diameter larger than the length of the light source 116 is 4 to 6, and there may be no number of lenses having an effective diameter smaller than the length of the light source 116.

The transmitting optical system 110 may include an aperture stop ST. The aperture stop ST may control the amount of light emitted from the transmitting optical system 110. The aperture stop ST may be disposed on the periphery between the third lens 113 and the fourth lens 114. The aperture stop ST may be disposed between the spherical third lens 113 and the aspherical fourth lens 114. The aperture stop ST may be disposed between the light source-side spherical surface of the third lens 113 and the object-side aspherical surface of the fourth lens 114. Here, the aperture stop of the receiving optical system 100 mentioned in the drawing may be defined as the first aperture stop, and the aperture stop of the transmitting optical system 110 may be defined as the second aperture stop.

At least two lenses may be disposed between the aperture stop ST and the light source 116. For example, the fourth and fifth lenses 114 and 115 may be disposed between the aperture stop ST and the light source 116. An aspherical lens may be disposed between the aperture stop ST and the light source 116. The aperture stop ST may be disposed between the light source-side spherical surface of the third lens 113 and the object-side aspherical surface of the fourth lens 114.

In the lenses arranged between the object and the aperture stop ST, the effective diameter of the lens surfaces tends to increase from the second lens 112 to the aperture stop ST. In the lens surfaces arranged between the aperture stop ST and the light source 116, the effective diameter of the lens surfaces tends to decrease from the aperture stop ST toward the light source 116. The fact that the effective diameter of the lens surfaces tends to increase or decrease does not mean only the case where the effective diameter of the lens surfaces increases or decreases. For example, it also includes a case where the effective diameter of the lens surfaces increases and then decreases toward the light source side in the aperture stop ST.

The lens surface on which the aperture stop ST is arranged is for more efficiently controlling and guiding the amount of light of the optical system 110. As in the embodiment, the aperture stop ST may be disposed on the light source-side surface of the third lens 113. Alternatively, the aperture stop ST may be arranged around the object-side surface or the light source-side surface of the second lens 112. Alternatively, at least one lens selected from the plurality of lenses, for example, the object-side surface or the light source-side surface of the third lens 113, may function as an aperture stop. The aperture stop ST may be removed from the transmitting optical system 110.

In the optical system 110 of the embodiment, the sum of the refractive indices of the lenses of the lens section may be 8 or more, for example, in the range of 8 to 12, and the average of the refractive indices may be in the range of 1.70 to 1.80. The sum of the Abbe numbers of each of the lenses may be 200 or less, for example, in the range of 130 to 200, and the average of the Abbe numbers may be 50 or less, for example, in the range of 25 to 50. By controlling the refractive index of the lenses in the optical system 100, the transmission efficiency may be prevented from decreasing due to temperature changes from -45 to 120 degrees, and the thermal compensation may be optimized. In addition, by controlling the Abbe numbers of the lenses, the deviation of the transmission efficiency according to the wavelength may be minimized.

The sum of the center thicknesses of the entire lens may be 15 mm or more, for example, in the range of 15 mm to 25 mm, and the average of the center thicknesses may be 3.9 mm or less, for example, in the range of 2.9 mm to 3.9 mm. The sum of the center distances between the lenses on the optical axis Lz may be 15 mm or more, for example, in the range of 15 mm to 30 mm, and may be greater than the sum of the center thicknesses of the lenses. In addition, the average value of the effective diameter of each lens surface of the optical system 110 may be provided in the range of 20 mm or less, for example, 10 mm to 20 mm. The optical system 110 can prevent the degradation of optical performance for temperature changes from -45 degrees to 120 degrees and optimize thermal compensation by adjusting the thickness of the lenses.

In the optical system according to the embodiment of the invention, the field of view may be more than 100 degrees, for example, in the range of 110 degrees to 130 degrees. The F number of the optical system or the camera module may be 1.2 or less, for example, in the range of 0.7 to 1.2 or in the range of 0.7 to 0.9. The diagonal length of the light source 116 may be 6.80 mm ± 0.5 mm and may be greater than the sensor height in the vertical direction. The invention can suppress the change of the focal image position due to temperature change by stacking glass lenses, and can provide a vehicle Lidar device that corrects various aberrations by providing an aspherical lens.

Since the embodiment is a transmitting optical system applied to a Lidar device, the first lens 111 may be provided with a glass material. This has the advantage that the glass material is scratch-resistant and insensitive to external temperature compared to a plastic material. In order to more effectively prevent scratches caused by foreign substances or placed inside a vehicle, a glass lens is used as the first lens 111, and the object-side surface of the first lens 111 may have a convex shape so that external foreign substances do not accumulate. The Lidar device can detect the distance, direction, speed, temperature, material distribution, and concentration characteristics to an object when the vehicle is running. Such a Lidar device can be used for an advanced driver assistance system (ADAS). The transmitting optical system 110 according to the embodiment can further include a reflective member (not shown) for changing the path of light. The reflective member may be implemented as a prism that reflects the emitted light toward the lenses. Hereinafter, an optical system according to an embodiment will be described in detail.

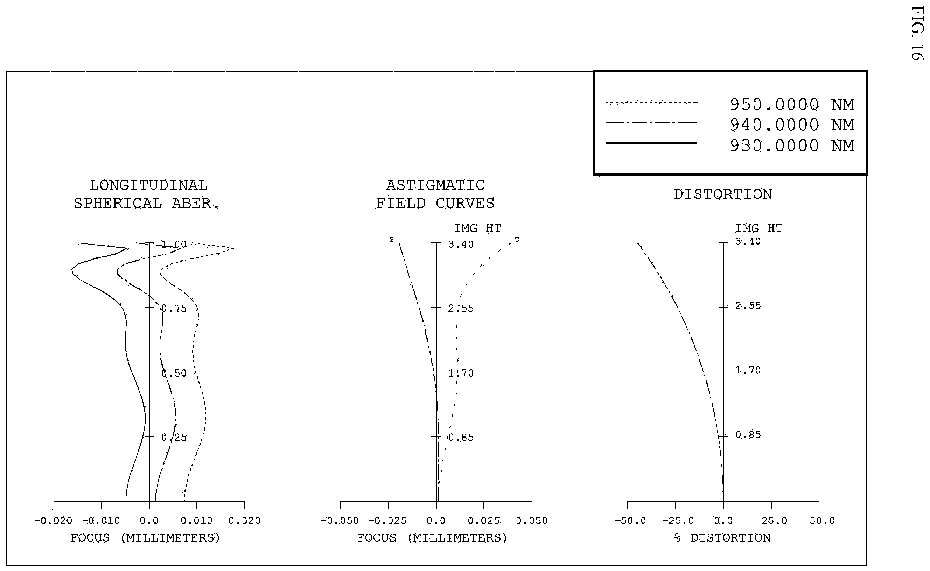

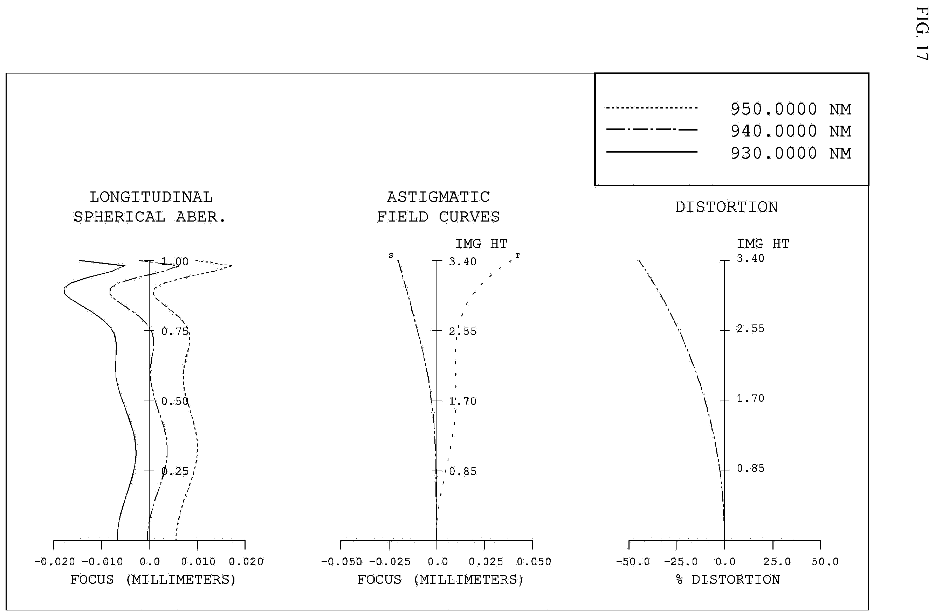

The transmitting optical system according to the embodiment of the invention will be described with reference to FIGS. 10 to 17.

Referring to FIGS. 10 to 13, the optical system 110 may include a first lens 111 to a fifth lens 115. The first to fifth lenses 111-115 may be sequentially arranged along the optical axis Lz of the optical system 110. The laser beam generated from the light source 116 may be emitted through the fifth lens 115, the fourth lens 114, the third lens 113, the second lens 112, and the first lens 111. The aperture stop ST may be arranged around the periphery of the light source-side surface of the third lens 113. The lenses of the above transmitting optical system are described as the first to fifth lenses for convenience of explanation, but when applied to a Lidar device having lenses of the receiving optical system, they may be defined as the sixth to tenth lenses.

The first lens 111 may have positive (+) or negative (-) refractive power on the optical axis Lz. The first lens 111 may have negative (-) refractive power. The first lens 111 may include a plastic material or a glass material, and may be, for example, a glass material. The first lens 111 made of a glass material may reduce changes in the center position and the radius of curvature due to temperature changes according to the surrounding environment, and may protect the output side surface of the optical system 110. The object-side first surface S1 of the of the first lens 111 on the optical axis may be convex, and the light source-side second surface S2 may be concave. The first surface S1 and the second surface S2 may have spherical surfaces. The first lens 111 may have a meniscus shape that is convex toward the object side. Alternatively, the first surface S1 may have a concave shape and the second surface S2 may have a convex shape on the optical axis Lz. Since the first surface S1 is convex and the second surface S2 is concave, the emitted light may be refracted in a direction away from the optical axis Lz, a distance between the first and second lenses 111 and 112 may be reduced, and the effective diameter of the second lens 112 may be reduced. By the shape of the lens surface of the first lens 111, the effective diameter of the light source-side surface of the second lens 112 may be designed to be smaller than the effective diameter of the object-side surface. The first surface S1 of the first lens 111 may be provided without a critical point from the optical axis Lz to the end of the effective region, i.e., the edge. The second surface S2 of the first lens 111 may be provided without a critical point.

When the refractive index of the first lens 111 is n1, the following condition may satisfy: n1>1.7 or 2.0>n1>1.75. Since the refractive index n1 of the first lens 111 is higher than that of other lenses, the radius of curvature of the first surface S1 of the first lens 111 may be increased, and lens manufacturing may be facilitated. If the refractive index n1 of the first lens 111 is smaller than the above condition, the lens surface must be formed sharply concave or convex in order to increase the refractive power of the first and second lenses 111 and 112. In this case, lens manufacturing is not easy, the lens defect rate increases, and it may cause a decrease in yield.

The second lens 112 may be disposed between the first lens 111 and the third lens 113. The second lens 112 may have positive (+) or negative (-) refractive power on the optical axis Lz. The second lens 112 may have negative (-) refractive power. The second lens 112 may include a plastic or glass material, and may be provided as a glass material, for example. The object-side third surface S3 of the second lens 112 on the optical axis Lz may be flat, and the light source-side fourth surface S4 may be concave. The fourth surface S4 may be spherical. The fourth surface S4 may be provided without a critical point from the optical axis Lz to the end of the effective region. Alternatively, the third surface S3 may be convex, and the fourth surface S4 may be concave. Alternatively, the second lens 112 may be concave on both sides.

When the refractive index of the second lens 112 is n2, the following condition may satisfy: n2>1.7 or 2.0>n2>1.75 may be satisfied. Since the refractive index n2 of the second lens 112 is higher than that of the other lenses, the radius of curvature of the third surface S3 of the second lens 112 may be increased, and lens manufacturing may be facilitated. Since the fourth surface S4 on the light source side of the second lens 112 is concave and has a small radius of curvature, the center distance between the second lens 112 and the third lens 113 may be spaced apart. In addition, when the radius of curvature of the third surface S3 of the second lens 112 is L2R1 and the radius of curvature of the fourth surface S4 is L2R2, the following condition may satisfy: L2R1 > L2R2. If this condition is satisfied, the light emitted by the third and fourth surfaces S3 and S4 may be efficiently refracted, so that the effective diameter of the third to fifth lenses 114 to 115 does not increase, and the TTL may be reduced. If the following condition may satisfy: L2R1 < L2R2, a lot of aberration may occur on the object-side surface of the second lens 112, the refractive efficiency of light may decrease on the light source-side surface, and the effective diameter of the rear lenses may increase and the TTL may also increase.

The third lens 113 may have positive (+) or negative (-) refractive power on the optical axis Lz. The third lens 113 may have positive (+) refractive power. The third lens 113 may include a plastic or glass material, and may be made of glass, for example. On the optical axis, the object-side fifth surface S5 of the third lens 113 may be convex, and the light source-side sixth surface S6 may be convex. The third lens 113 may have a convex shape on both sides on the optical axis Lz. At least one or both of the fifth surface S5 and the sixth surface S6 may be spherical. At least one or both of the fifth surface S5 and the sixth surface S6 may be provided without a critical point from the optical axis Lz to the end of the effective region. Alternatively, the third lens 113 may have a convex meniscus shape on the object side or the light source side. Alternatively, the third lens 113 may have a concave shape on both sides on the optical axis. When the refractive index of the third lens 113 is n3, the following conditions may satisfy: n3 < n1 and n3 < n2. When the Abbe number of the third lens 113 is v3, the following conditions may satisfy: v3 < v1, v3 < v2.

The aperture stop ST may be arranged around the sixth surface S6 on the light source side of the third lens 113. Since the third lens 113 adjacent to the object side of the aperture stop ST has positive refractive power (F3 > 0), the third lens 113 may refract the emitted light in the direction of the optical axis, and can suppress the increase in the effective diameter of the light source side or rear side lenses of the third lens 113. Accordingly, the yield by weight of the optical system may be prevented from decreasing by the third lens 113, and the production efficiency may be improved. Here, the focal length of the fourth and fifth lenses 114 and 115 disposed on the light source side of the aperture stop ST may have a positive value, and may reduce the TTL within the field of view range. Since the sixth surface S6 on the light source side of the third lens 113 has a convex shape, the effective diameter of the optical filter 155 disposed on the light source side of the third lens 113 may be larger than the effective diameter of the sixth surface S6 of the third lens 113.

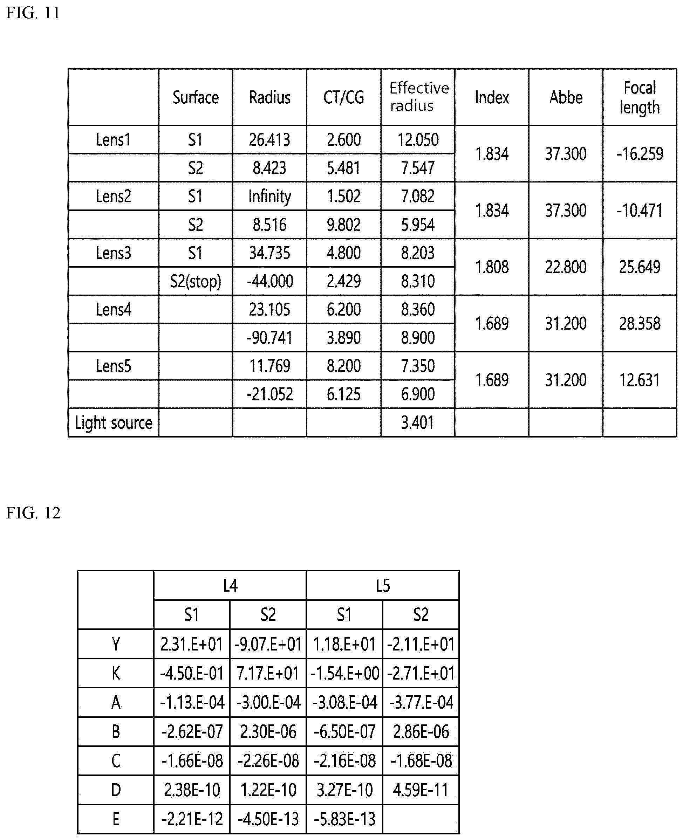

The fourth lens 114 may have positive (+) or negative (-) refractive power on the optical axis Lz. The fourth lens 114 may have positive (+) refractive power. The fourth lens 114 may include a plastic or glass material, and may be provided as a glass material. The fourth lens 114 may be an injection-molded glass mold. On the optical axis, the object-side seventh surface S7 of the fourth lens 114 may be convex, and the light source-side eighth surface S8 may be convex. The fourth lens 114 may be convex on both sides. At least one or both of the seventh surface S7 and the eighth surface S8 may be aspherical. The aspherical coefficients of the seventh and eighth surfaces S7 and S8 may be provided as S1 and S2 of L4 of FIG. 12. The seventh surface S7 may have a critical point from the optical axis Lz to the end of the effective region. The eighth surface S8 may be provided without a critical point from the optical axis Lz to the end of the effective region. Both the seventh surface S7 and the eighth surface S8 may have no critical point or may have a critical point. Here, the critical point is a point where the sign of the slope value with respect to the optical axis Lz and the direction perpendicular to the optical axis Lz changes from positive (+) to negative (-) or from negative (-) to positive (+), and may mean a point where the slope value is 0. In addition, the critical point may be a point where the slope value of the tangent line passing through the lens surface increases and decreases or a point where it decreases and then increases. Differently, the fourth lens 114 may have a convex meniscus shape toward the object side or the light source side. Differently, the fourth lens 114 may have a shape in which both sides are concave on the optical axis Lz.

The fifth lens 115 may have positive (+) or negative (-) refractive power on the optical axis Lz. The fifth lens 115 may have positive (+) refractive power. The fifth lens 115 may include a plastic or glass material and may be provided as a glass material. The fifth lens 115 may be an injection-molded glass mold.

On the optical axis, the object-side ninth surface S9 of the fifth lens 115 may be convex, and the light source-side tenth surface S10 may be convex. The fifth lens 115 may be convex on both sides. At least one or both of the ninth surface S9 and the tenth surface S10 may be aspherical. The aspherical coefficients of the ninth and tenth surfaces S9 and S10 may be provided as L1 and L2 of L5 of FIG. 12. At least one of the ninth and tenth surfaces S9 and S10 may have a critical point from the optical axis Lz to the end of the effective region. Both the ninth surface S9 and the tenth surface S10 may not have a critical point. Alternatively, the fifth lens 115 may have a meniscus shape that is convex on the object side or the light source side. In contrast, the fifth lens 115 may have a concave shape on both sides in the optical axis Lz. The effective diameter of the fifth lens 115 may be smaller than that of the fourth lens 114. The fifth lens 115 may have a lower refractive index than that of the first and second lenses 111 and 112, and may have an Abbe number lower than that of the first and second lenses 111 and 112.

The third lens 113, the fourth lens 114, and the fifth lens 115 may have a convex shape on both sides, and may all have positive refractive power. In addition, the third lens 113, the fourth lens 114, and the fifth lens 115 may have a lower refractive index than the refractive indices of the first and second lenses 111 and 112, and may have an Abbe number lower than the Abbe number of the first and second lenses 111 and 112. At least one of the object-side surface and the light source-side surface of the fourth and fifth lenses 114 and 115 may have a free-form surface, i.e., a non-rotationally symmetrical curved surface.

The fifth lens 115 may be an aspherical lens closest to the light source 116. By arranging two or more aspherical lenses adjacent to the light source 116, aberrations such as spherical aberration and chromatic aberration can be improved by the lens surfaces having aspherical surfaces.

When the lenses having negative refractive power are the first lens group and the lenses having positive refractive power are the second lens group, the aperture stop ST may be arranged within the second lens group. The aperture stop ST may be disposed between a first lens group having at least one of an object-side surface and a light source-side surface as a spherical surface, and a second lens group having at least one of an object-side surface and a light source-side surface as an aspherical surface. The aperture stop ST may be disposed between a first lens group having non-injection-molded lenses and a second lens group having injection-molded lenses. The aperture stop ST may be disposed between a first lens group having lenses disposed on the object side of the aperture stop ST and a second lens group having lenses disposed on the light source side of the optical filter 155.

As shown in FIGS. 10 and 11, the center thicknesses of the first to fifth lenses 111 to 115 are represented by CT1 to CT5, the edge thicknesses at the ends of the effective regions of each lens are represented by ET1 to ET5, and the center distance between adjacent two lenses is represented by CG1 to CG4.

The first to fifth lenses 111 to 115 may satisfy the following conditions.

Condition 1: CT2 < CT1 < CT3          Condition 2: CT4 < CT5 < (CT3+CT4)
Condition 3: CT4-CT3 < CT2            Condition 4: ET3 < ET2 < ET1
Condition 5: ET4 < ET3 < ET5 < CT5   Condition 6: CT2 < CT1 < ET2 < ET1
Condition 7: CG1 < CT4 < CT5 < CG2    Condition 8: CG3 < CT1 < CG4 < CG1

The center thickness CT5 of the fifth lens 115 is the largest among the lenses, and the center thickness CT2 of the second lens 112 is the smallest among the lenses. The maximum center thickness may be at least twice, for example, at least three times, the minimum center thickness, and the difference between the maximum center thickness and the minimum center thickness may be at least 4 mm. That is, even if the spherical material lenses provide a thin center thickness, the optical performance may not deteriorate, and the sensor system may be provided with a slim thickness.

Regarding the center distance CG between adjacent lenses, the center distance CG2 between the second lens 112 and the third lens 113 is the maximum and is larger than the center distance CG1 between the first and second lenses 111 and 112. The center distance CG3 between the third and fourth lenses 113 and 114 may be the minimum among the lens spacings. Here, the difference between the maximum center distance and the minimum center distance may be 5 mm or more, for example, in the range of 5 mm to 8 mm. In addition, by providing the maximum center distance between the lenses to be larger than the maximum center thickness of each lens, a transmitting optical system that does not increase the center distance between the aspherical lenses can be provided. In addition, since the maximum center distance between the lenses is provided to be larger than the minimum center thickness of each lens, the optical path can be controlled.

In terms of the effective diameter, the lens having the maximum effective diameter may be the first lens 111 closest to the object. The lens having the maximum effective diameter may be a spherical lens made of glass. The lens surface having the maximum effective diameter may be the first surface S1 of the first lens 111. The lens having the minimum effective diameter may be the second lens 112 adjacent to the first lens 111. The lens surface having the minimum effective diameter may be the fourth surface S4 of the second lens 112, and may be less than 70% of the first surface S1. The effective diameter of each of the first to fifth lenses 111-115 may be greater than the diagonal length of the light source 116. Here, the sum of the center thicknesses of the first to third lenses 111 to 113 may be less than the sum of the center thicknesses of the fourth and fifth lenses 114 and 115. The average effective diameter of the first to third lenses 111-113 may be greater than the average effective diameter of the fourth and fifth lenses 114 and 115. The fourth and fifth lenses 114 and 115 have an aspherical surface and can guide the incident light to a spherical lens.

FIG. 11 is an example of lens data of the optical system of the embodiment of FIG. 10. As shown in FIG. 11, the radius of curvature of the optical axis Lz of the first to fifth lenses 111, 112, 113, 114, and 115, the center thickness CT of the lenses, the center distance CG between the lenses, the refractive index at the d-line, the Abbe number, and the size of the effective radius may be set.

As shown in FIG. 12, the lens surfaces of the fourth and fifth lenses 114 and 115 of the embodiments may include aspherical surfaces having an aspherical coefficient A, B, C, D, and E of the 12th or higher, where Y is a radius of curvature and K is a conic constant. For example, the object-side surface and the light source-side surface of the fourth and fifth lenses 114 and 115 may be lens surfaces having an aspherical coefficient of the 12th or higher, for example, the 30th order.

The focal lengths F1 and F2 of the first and second lenses 111 and 112 may have negative refractive power, and the focal lengths F3, F4, and F5 of the third, fourth, and fifth lenses 113, 114, and 115 may have positive refractive power. In addition, the second lens 112 and the third lens 113, which are adjacently arranged lenses, may satisfy the following conditions.

| | |
|---|---|
| Refractive index of lens with positive refractive power < Refractive index of lens with negative refractive power | Condition 1: |

| | |
|---|---|
| Dispersion of lens with positive refractive power > Dispersion of lens with negative refractive power | Condition 2: |

Here, among the lenses, the second lens 112 has negative refractive power and the third lens 113 has positive refractive power, so according to the conditions 1 and 2, the refractive index of the third lens is smaller than the refractive index of the second lens, and the dispersion value of the third lens is larger than the dispersion value of the second lens. Chromatic aberration occurring in a spherical lens can be corrected by a spherical lens. In addition, the refractive index difference between the second lens 112 and the third lens 113, which are spherical lenses arranged in succession, may be satisfied as being 0.1 or more and 0.15 or less, and the Abbe number difference as being 10 or more and 20 or less.

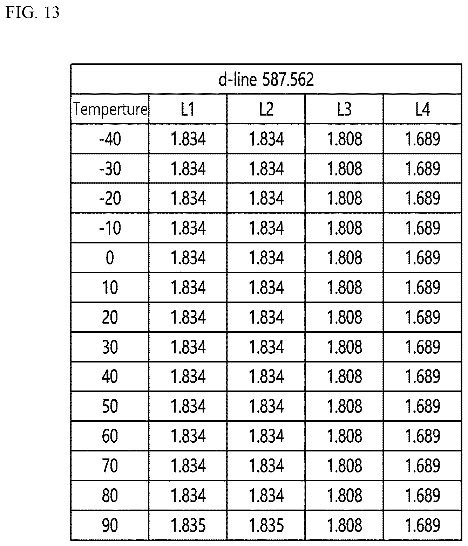

As the temperature changes from low temperature to high temperature, the lens repeatedly contracts and expands. Since the lens characteristics of the same material change the same amount according to the temperature change, it is effective to correct the chromatic aberration between the lenses of the same material even if the temperature changes. For example, as shown in FIG. 13, when the temperature of the lens barrel or the transmitting optical system changes from -40 degrees to 90 degrees, it may be seen that the refractive index of the first to fourth lenses in the d-line hardly changes. Therefore, in the embodiment of the invention, the fourth lens 114 and the fifth lens 115 may correct the chromatic aberration occurring in the spherical lens of the glass material.

When the focal lengths are compared in absolute values, the focal length of the fourth lens 114 is the largest among the lenses, and may be 20 or more and 40 or less. Accordingly, it may have improved MTF characteristics, aberration control characteristics, etc. in the field of view range set in the optical system, and may have good optical performance.

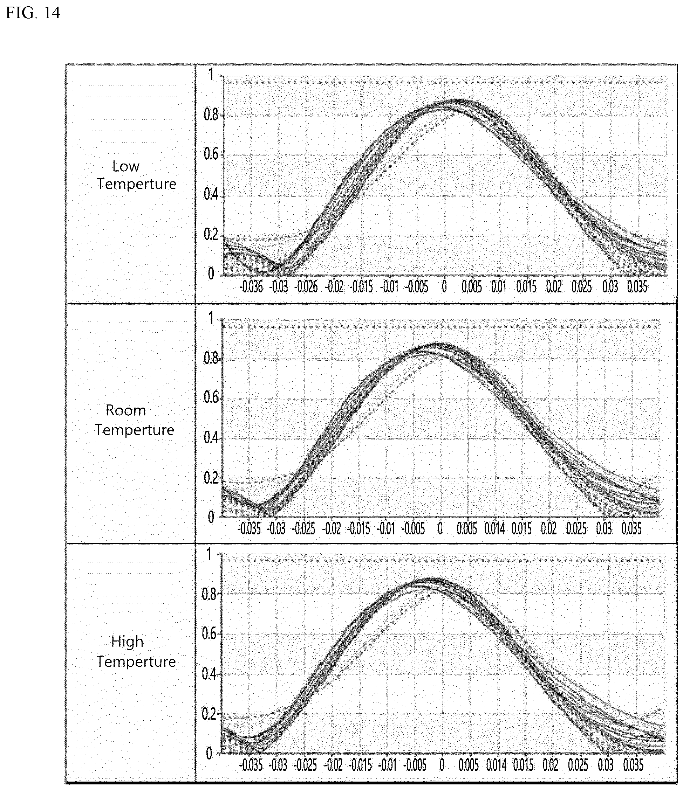

FIG. 14 is a graph showing the diffraction MTF at low temperature, room temperature, and high temperature in the optical system of FIG. 10, and is a graph showing the modulation according to the spatial frequency. As shown in FIG. 14, in the embodiment of the invention, the deviation of the MTF between the low temperature and the high temperature based on the room temperature may be less than 10%, that is, 7% or less. Here, each MTF curve was measured in units of 0.340 mm from 0.000 mm to 3.550 mm.

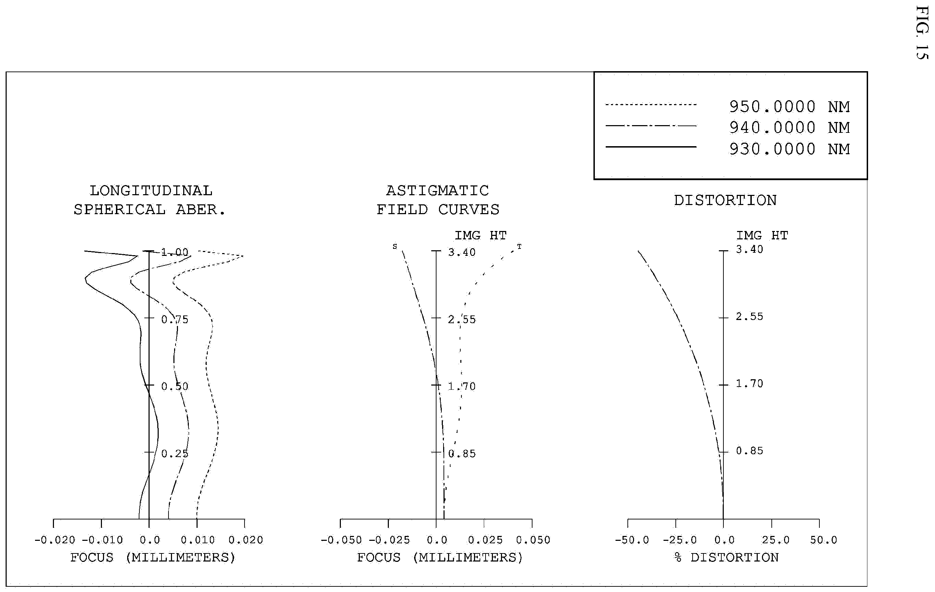

FIGS. 15 to 17 are graphs showing the aberration characteristics at low temperature, room temperature, and high temperature in the optical system of FIG. 10. The graphs of the aberration graphs of FIGS. 15 to 17 are graphs measuring spherical aberration (Longitudinal Spherical Aberration), astigmatic field curves, and distortion from left to right. In FIGS. 15 to 17, the X-axis may represent a focal length (mm) and a distortion degree (%), and the Y-axis may represent the height of the image. In addition, the graph for spherical aberration is a graph for light having a wavelength band of about 930 nm, about 940 nm, and about 950 nm, and the graphs for astigmatism and distortion aberration are graphs for light having a wavelength band of about 940 nm. In the aberration diagrams of FIGS. 15 to 17, it may be interpreted that the closer the respective curves at low temperature, room temperature, and high temperature are to the Y-axis, the better the aberration correction function is. Here, the low temperature is -20 degrees or lower, for example, in the range of -20 to -50 degrees, the room temperature is in the range of 22 degrees ± 5 degrees or in the range of 18 degrees to 27 degrees, and the high temperature may be 85 degrees or higher, for example, in the range of 85 degrees to 120 degrees. Accordingly, it may be seen that the decrease in the modulation ratio from low to high temperature in FIGS. 15 to 17 is less than 10%, for example, less than 5%, or is almost unchanged. The MTF deviation according to temperature is as shown in Table 7.

[Table 7]

| Temperature | MTF deviation |
|---|---|
| -45 | 87.500 |
| 22 | 88.300 |

(continued)

| Temperature | MTF deviation |
|---|---|
| 90 | 87.700 |

Table 8 compares the changes in optical characteristics such as EFL, BFL, F number F#, TTL, and FOV at room temperature, low temperature, and high temperature in the transmitting optical system according to the embodiment, and it may be seen that the change rate of optical characteristics at low temperature is 5% or less, for example, 3% or less or 2% or less, based on room temperature, and it may be seen that the change rate of optical characteristics at low temperature is 5% or less, for example, 3% or less or 2% or less, based on room temperature.

[Table 8]

| | Room temperature | Low temperature | High temperature | Low temperature/ Room temperature | High temperature/ Room temperature |
|---|---|---|---|---|---|
| EFL(F) | 3.173 | 3.171 | 3.171 | 100.06% | 100.00% |
| BFL | 6.120 | 6.125 | 6.135 | 99.92% | 100.16% |
| F# | 0.802 | 0.802 | 0.803 | 100.00% | 100.12% |
| TTL | 50.970 | 51.028 | 51.087 | 99.89% | 100.12% |
| FOV | 62.658 | 62.687 | 62.708 | 99.95% | 100.03% |

Therefore, as shown in Table 8, it may be seen that the change in optical characteristics according to the temperature change from low temperature to high temperature, for example, the change rate of effective focal length (EFL), TTL, BFL, F number (F#), and FOV, is 10% or less, that is, 5% or less, for example, in the range of 0 to 5%. This means that even if at least one or two or more aspherical lenses are used, the design enables temperature compensation for the aspherical lenses, thereby preventing a decrease in the reliability of the optical characteristics. The optical system of the embodiment disclosed above can effectively control aberration characteristics such as chromatic aberration and distortion aberration, and may have good optical performance at the center and periphery of the FOV. In addition, the transmitting optical system may prevent a decrease in optical performance from low temperature to high temperature in consideration of the characteristics of the vehicle optical system. For example, after designing a lens at room temperature, the value of dn/dt, which is a temperature-dependent refractive index change coefficient, is assembled by considering the power combination of each lens, and the value of the temperature coefficient (dn/dt) according to the refractive index of the lens and the defocus for the thickness variable according to low temperature, room temperature, and high temperature may be set to 5 $\mu$m or less. To this end, the first to third lenses 111, 112, and 113 are made of spherical glass material, and the fourth and fifth lenses 114 and 115 are made of aspherical glass material.

The optical system 110 according to the embodiment disclosed above may satisfy at least one or two or more of the mathematical equations described below. Accordingly, the optical system 110 according to the embodiment may have improved optical characteristics. For example, when the optical system 110 satisfies at least one Equation, the optical system 110 can effectively control aberration characteristics such as chromatic aberration and distortion aberration, and may have good optical performance in the center and periphery of the FOV. In addition, the receiving optical system 110 may have improved resolution. In addition, the thickness of the lens on the optical axis Lz described in the Equations and the spacing between adjacent lenses on the optical axis Lz can refer to the embodiments disclosed above.

$$[Equation 1]\ 0 < CT1 / CT2 < 3$$

In Equation 1, by setting the center thickness CT1 of the first lens 111 and the center thickness CT2 of the second lens 112, the rigidity of the first lens 111 may be prevented from decreasing, and factors affecting aberration may be controlled. Preferably, Equation 1 may satisfy:

$$1 < CT1 / CT2 < 3.$$

$$[Equation 2]\ 5 < CA11/CT1 < 15$$

CA11 is the effective diameter of the object-side surface S1 of the first lens 111. In Equation 2, the center thickness CT1 of the first lens 111 and the effective diameter CA11 of the object-side surface S1 of the first lens 111 may be set, and if this is satisfied, the strength and optical characteristics of the glass lens may be prevented from being deteriorated. If it is lower than the range of Equation 1, the lens may be damaged or the emission efficiency may be reduced, and if it is larger than the above range, the TTL may increase and the weight of the optical system may become heavier. Preferably, Equation 2 may satisfy: 7 < CA11/CT1 < 12.

$$[\text{Equation 3}]\ 0 < CT5 / CT4 < 3$$

In Equation 3, the center thickness CT5 of the fifth lens 115 and the center thickness CT4 of the fourth lens 114 may be set, so that thermal compensation may be optimized according to temperature changes from low to high temperatures, and optical performance degradation may be prevented. Preferably, Equation 3 may satisfy: 1 < CT5 / CT4 < 2.

$$[\text{Equation 3-1}]\ 0 < CT5 / CT3 < 3$$

In Equation 3-1, the center thicknesses CT3 and CT5 of the third and fifth lenses 113 and 115 may be set, so that light refracted from the light source side lenses may be guided toward the object. Preferably, Equation 3-1 may satisfy: 1 < CT5 / CT3 < 2. Accordingly, the fifth lens 115 closest to the light source 116 can thicken the center thickness CT5 and refract light through the object-side lenses without significantly increasing the effective diameter.

$$[\text{Equation 4}]\ 0 < CT5 / (CT1+CT2) < 3$$

In Equation 4, the center thickness CT5 of the fifth lens 115 is set to be larger than the sum of the center thicknesses CT1 and CT2 of the first and second lenses 111 and 112, so that light refracted through the object-side lenses may be guided. Preferably, Equation 4 may satisfy: 1 < CT5 / (CT1+CT2) < 2.5. Accordingly, the fifth lens 115 closest to the light source 116 may thicken the center thickness CT5 and not significantly increase the effective diameter.

$$[\text{Equation 5}]\ 0 < CT5 / CG2 < 1$$

In Equation 5, the center distance CG2 between the second and third lenses 112 and 113 is set to be larger than the center thickness CT5 of the fifth lens 115, so that the second lens 112 may be set as a lens having a concave light source-side surface and a minimum effective diameter. In addition, the effective diameter of the third lens 113 may be increased compared to the effective diameter of the second lens 112.

$$[\text{Equation 6}]\ 0 < CG1 / CG4 < 1.5$$

In Equation 6, the center distance CG1 between the first and second lenses 111 and 112 and the center distance CG4 between the fourth and fifth lenses 114 and 115 are set, so that the center distance between the spherical lenses and the center distance between the aspherical lenses may be set. Preferably, 0.5 < CG1 / CG4 < 1 may be satisfied.

$$[\text{Equation 7}]\ 0 < CG2 / CG4 < 1$$

In Equation 7, the center distance CG2 between the second and third lenses 112 and 113 is set to be larger than the center distance CG4 between the fourth and fifth lenses 114 and 115, so that the center distance between the aspherical lenses on the light source side may be reduced by the center distance between the spherical lenses on the object side. Preferably, 0.2 < CG2 / CG4 < 0.8 may be satisfied.

$$[\text{Equation 8}]\ 0.5 < CG2 / (CT1+CG1+CT2) < 1.5$$

In Equation 8, the center distance CG2 between the second and third lenses 112 and 113 may be set to be greater than the optical axis distance between the object-side surface of the first lens 111 and the light source-side surface of the second lens 112. Accordingly, the effective diameter of the object-side surface of the first lens 111 may be set to the maximum, and the second lens 112 may be set as a lens having a concave light source-side surface and a minimum effective diameter. Preferably, 1 < CG2 / (CT1+CG1+CT2) < 1.5 may be satisfied.

## [Equation 10] $1.70 < n1$

n1 is the refractive index of the d-line of the first lens 111. In Equation 10, by setting the refractive index of the first lens 111 high, the factor affecting the reduction of the third aberration (Seidel aberration) of the optical system may be adjusted, and the aberration that may occur when the TTL is somewhat longer may be reduced. Equation 10 preferably satisfies: $1.75 < n1 < 2.1$. If it is designed to be lower than the lower limit of Equation 10, the performance of reducing aberration may be obtained, and since the refractive power of the first lens is weakened, light cannot be collected efficiently, and the performance of the optical system may be degraded. If it is designed to be higher than the upper limit of Equation 10, there is a disadvantage in that it becomes difficult to obtain materials. In addition, if the refractive index of the first lens 111 is designed to be lower than the lower limit of Equation 4, the radius of curvature of the first and second lenses may be increased in order to increase the refractive power of the first and second lenses.

## [Equation 10-1] $1.7 < Aver(n1{:}n5) < 1.8$

Aver(n1:n5) is the average of the refractive index values of the first to fifth lenses at the d-line. If Equation 10-1 is satisfied, the optical system 110 can suppress the influence of TTL.

## [Equation 10-2] $GMn\_Aver < GLn\_Aver$

GLn_Aver is the average of the refractive index values of the d-line of the spherical glass lenses, and GMn_Aver is the average of the refractive index values of the d-line of the aspherical glass lenses. The spherical lens is a non-injection-molded glass lens, and the aspherical lens is a glass lens of a glass mold. The spherical lenses with high refractive index are positioned on the object side of the aspherical lens, which can increase color dispersion.

## [Equation 11] $0 < n1/n3 < 1.5$

n1 and n3 are the refractive indices of the d-line of the first and third lenses 111 and 113. In Equation 11, the difference in the refractive indices of the first lens 111 and the third lens 113 is reduced, thereby preventing the reduction of color dispersion by the lenses made of glass. Preferably, Equation 11 may satisfy: $1 < n1/n3 < 1.3$.

## [Equation 12] $1 < n3/n4 < 1.5$

n3 and n4 are the refractive indices of the d-line of the third and fourth lenses 113 and 114. In Equation 12, by setting the refractive index of the third lens 113 higher than the refractive index of the fourth lens 114, the color dispersion by the spherical material lenses and the color dispersion by the aspherical lenses may be controlled. Preferably, Equation 12 may satisfy: $1 < n3/n4 < 1.2$.

## [Equation 13] $(v4*n4) < (v1*n1)$

n1 and n4 are the refractive indices of the d-line of the first and fourth lenses 111 and 114, and v1 and v4 are the Abbe numbers of the first and fourth lenses. In Equation 13, the product of the refractive index and the Abbe number of the first and fourth lenses 111 and 114 is set to be greater than the product of the refractive index and the Abbe number of the fourth lens 114, so that the color dispersion by the lenses of spherical material and the color dispersion by the aspherical lenses may be controlled.

## [Equation 14] $SD < TD$

SD is the optical axis distance from the aperture stop ST to the surface of the light source 116, and TD is the optical axis distance from the object-side surface of the first lens 111 to the sensor-side surface of the fifth lens 115. When the optical system satisfies Equation 14, the aperture stop ST may be positioned between two different lenses.

## [Equation 14-1] $CA11/2 < (CTn+CTn\text{-}1) < CA11$

CTn is the center thickness of the n-th lens adjacent to the light source 116, CTn-1 represents the center thickness of the n-1th lens, and CA11 is the effective diameter of the first lens. In Equation 14-1, the sum of the center thicknesses of the n-th lens and the n-1th lens adjacent to the light source 116 may be set to control the light path emitted. The n-th lens may be the fifth lens, and the n-1th lens may be the fourth lens.

$$[\text{Equation 14-2}]\ 10\ \text{mm} < (CTn+CTn\text{-}1) < TTL/3$$

TTL is the optical axis distance from the center of the object-side surface of the first lens 111 to the surface of the light source 116. In Equation 14-2, the optical axis distance between the optical filter 155 and the light source 116 may be set to less than 1/3 of the total optical axis length (TTL). Accordingly, the problem of the emission angle shifting at low and high temperatures compared to room temperature may be minimized. Preferably, 10 mm < (CTn+CTn-1) < TTL/3 may be satisfied.

$$[\text{Equation 15}]\ CAn2/2 < CTn$$

CAn2 is the effective diameter on the light source side of the n-th lens, and CTn is the center thickness of the n-th lens. If Equation 15 is satisfied, the effective diameter of the n-th lens may be set not to be large compared to the center thickness of the n-th lens.

$$[\text{Equation 16}]\ CA52/2 < CG2 < CA11$$

CA52 is the effective diameter on the light source side of the fifth lens, CG2 is the center distance between the second and third lenses, and CA11 is the effective diameter on the object-side surface of the first lens. If Equation 16 is satisfied, the center distance between the second and third lenses may be increased and the effective diameter of the fifth lens may be set not to increase.

$$[\text{Equation 17}]\ CA11/2 < CG1+CG2$$

In Equation 17, the effective diameter on the object-side surface of the first lens, the center distance between the first and second lenses, and the center distance between the second and third lenses may be set, and if this is satisfied, the number of lenses of the spherical lenses may be reduced.

$$[\text{Equation 18}]\ 1 < CA11\,/\,CA21 < 5$$

CA21 means the effective diameter of the third surface S3 of the second lens 112. When Equation 18 is satisfied, the optical system 110 can control the light to be emitted and can set the factor affecting the aberration, and preferably, 1 < CA11 / CA21 < 2.5 may be satisfied.

$$[\text{Equation 19}]\ 0 < CA22\,/\,CA31 < 1.5$$

CA22 means the effective diameter of the fourth surface S4 of the second lens 112, and CA31 means the effective diameter of the fifth surface S5 of the third lens 113. When Equation 19 is satisfied, the optical system 110 can control the path of the emitted light and can set the light source-side surface of the second lens 112 to a concave shape. Preferably, Equation 19 may satisfy: 0.5 < CA22 / CA31 < 1.

$$[\text{Equation 20}]\ 0.5 < CA42\,/\,CA51 < 2$$

CA42 means the effective diameter of the eighth surface S8 of the fourth lens 114, and CA51 means the effective diameter of the ninth surface S9 of the fifth lens 115. When Equation 20 is satisfied, the optical system 110 can set the light path that is emitted through the fourth lens 114 and the fifth lens 115. Equation 20 may preferably satisfy: 1 < CA42 / CA51 < 1.5.

$$[\text{Equation 21}]\ 1 < CA11\,/\,CA51 < 5$$

When the optical system 110 satisfies Equation 21, the light path may be set by increasing the amount of light emitted from the first lens, the spherical lens, and the light path from the last lens, the aspherical lens. Equation 21 preferably satisfies: 1 < CA11 / CA51 < 2.5.

$$[\text{Equation 22}]\ 1 < CG2 / (CT2+CT3) < 3$$

If Equation 22 is satisfied, the concave curvature radius of the light source-side surface of the second lens 112 may be set, and the light path between the second and third lenses 112 and 113 may be set. Preferably, 1 < CG2 / (CT2+CT3) < 2 may be satisfied.

$$[\text{Equation 23}]\ 0 < CG4 / (CT4+CT5) < 1$$

CG4 is the center distance between the fourth and fifth lenses, and CT4 and CT5 are the center thicknesses of the fourth and fifth lenses. If Equation 23 is satisfied, the radius of curvature of the light source-side surface of the fourth lens 114 may be reduced, and the light path may be set according to the center distance between the fourth and fifth lenses 114 and 115. Preferably, 0 < CG4 / (CT4+CT5) < 0.7 may be satisfied.

$$[\text{Equation 24}]\ 1 < CG\_Max / CG4 < 4$$

CG_Max means the maximum center distance between lenses in the optical system. If Equation 24 is satisfied, the maximum center distance between lenses may be positioned closer to the object side than the center distance between the fourth lens 114 and the fifth lens 115, thereby suppressing an increase in the size of the fourth lens 114. Preferably, 1.5 < CG_Max / CG4 < 3 may be satisfied.

$$[\text{Equation 25}]\ 1 < CT5 / BFL < 4$$

BFL is the optical axis distance from the center of the light source-side surface of the last lens to the light source 116. In other words, BFL is the optical axis distance from the center of the light source-side surface of the fifth lens 115 to the light source 116. When Equation 25 is satisfied, the emitted light may be transmitted to the entire region of the fourth lens 104 by the fifth lens 115. Preferably, 1 < CT5 / BFL < 2 may be satisfied.

$$[\text{Equation 26}]\ 0 < CG3 / CT5 < 1.5$$

When Equation 26 is satisfied, the effective diameter of the fifth lens 115 may be adjusted. Preferably, 0.1 < CG3 / CT5 < 0.6 may be satisfied.

$$[\text{Equation 27}]\ 0 < CG4 / CT5 < 1$$

If Equation 27 is satisfied, the effective diameter of the fifth lens 115 may be adjusted and the aberration characteristics of the light traveling through it may be improved. Preferably, 0.2 < CG4 / CT5 < 0.7 may be satisfied.

$$[\text{Equation 28}]\ 0 < |L5R2| / CT5 < 5$$

L5R2 is the radius of curvature of the light source-side surface of the fifth lens. If Equation 28 is satisfied, the refractive power of the fifth lens 115 may be controlled and the optical performance may be improved.

$$[\text{Equation 29}]\ 0 < |L5R2| / L5R1 < 5$$

L5R1 is the radius of curvature of the object-side surface of the fifth lens. If Equation 29 is satisfied, the refractive power of the fifth lens 115 may be controlled and the optical performance may be improved.

$$[\text{Equation 30}]\ 0 < L1R1 / L1R2 < 5$$

L1R1 is the radius of curvature of the object-side surface of the first lens, and L1R2 is the radius of curvature of the light source-side surface of the first lens. If Equation 30 is satisfied, the refractive power of the first lens 111 may be controlled and the optical performance may be improved.

$$[\text{Equation 31}]\ 500 < |L2R1| / L2R2$$

L2R1 is the radius of curvature of the object-side surface of the second lens, and L2R2 is the radius of curvature of the light source-side surface of the second lens. If Equation 31 is satisfied, the refractive power of the second lens 112 may be controlled and the optical performance may be improved, and the effective diameter of the light source-side lenses of the second lens 112 may be adjusted. If the object-side surface of the second lens 112 is made flat, lens processing may be easy.

$$[\text{Equation 32}]\ 0 < CT\_Max / CG\_Max < 2$$

In Equation 32, the maximum center thickness CT_Max among the lenses and the maximum distance CG_Max between adjacent lenses may be set. If Equation 32 is satisfied, the optical system may have good optical performance at the focal length of the set field of view and can reduce TTL. Preferably, 0 < CT_Max / CG_Max < 1 may be satisfied.

$$[\text{Equation 33}]\ 0 < \Sigma CT / \Sigma CG < 2$$

$\Sigma$ CT is the sum of the center thicknesses of the lenses, and $\Sigma$CG is the sum of the distances between adjacent lenses. If Equation 33 is satisfied, the optical system may have good optical performance at the focal length of the set field of view and can reduce TTL. Preferably, 1 < $\Sigma$CT / $\Sigma$CG < 1.5 may be satisfied.

$$[\text{Equation 34}]\ 5 < \Sigma \text{Index} < 15$$

$\Sigma$ Index means the sum of the refractive indices of each of the plurality of lenses at the d-line. If Equation 34 is satisfied, TTL may be controlled in an optical system 110 in which an aspherical lens and a spherical material lens are mixed. Also, if the number of spherical material lenses is greater than the number of aspherical material lenses, the sum of TTL and refractive indices may be set. Equation 34 may preferably satisfy: 5 < $\Sigma$Index < 10.

$$[\text{Equation 35}]\ 10 < \Sigma \text{Abbe} / \Sigma \text{Index} < 50$$

$\Sigma$ Abbe means the sum of the Abbe numbers of each of the plurality of lenses. If Equation 35 is satisfied, the optical system 110 may have improved aberration characteristics and resolution. Equation 35 sets the Abbes sum and the sum of the refractive indices of the lenses to control the optical characteristics, and may preferably satisfy: 10 < $\Sigma$Abb / $\Sigma$Index < 30.

$$[\text{Equation 36}]\ 50 < \Sigma CT*n < 150$$

$\Sigma$ CT is the sum of the center thicknesses of multiple lenses, and n is the number of lenses of the optical system. If Equation 36 is satisfied, TTL may be controlled. Preferably, 80 < $\Sigma$CT*n < 130 may be satisfied.

$$[\text{Equation 37}]\ 0 < \Sigma CT / \Sigma ET < 2$$

$\Sigma$ ET is the sum of the edge thicknesses of the effective regions of the lenses. If Equation 37 is satisfied, the optical system may have good optical performance at the focal length at the set field of view, and can reduce the TTL. Equation 37 preferably satisfies: 0.5 < $\Sigma$CT / LET < 1.5.

$$[\text{Equation 38}]\ 1 < CA11 / CA\_Min < 5$$

CA_Min means the minimum effective diameter among the object-side surfaces and the light source-side surfaces of the lenses. When Equation 38 is satisfied, the optical system can provide a slimmer module while controlling incident light and maintaining optical performance. Equation 38 preferably satisfies: 1 < CA11 / CA_Min < 3. Here, CA11 may be the maximum effective diameter, and the light source-side surface of the second lens 112 may be the minimum effective diameter.

$$[\text{Equation 38-1}] \ 1 < CA\_Max / CA\_Min < 5$$

CA_Max means the maximum effective diameter among the object-side surfaces and the light source-side surfaces of the lenses. If Equation 39 is satisfied, the optical system can set a size for a slim and compact structure while maintaining optical performance. Equation 39 may preferably satisfy: 1 < CA_Max / CA_Min < 3.

$$[\text{Equation 39}] \ 0 < CG2 / CA12 < 2$$

CG2 is a center distance between the second and third lenses, and CA12 is an effective diameter of the light source-side surface of the first lens. If Equation 39 is satisfied, the incident light of the spherical lenses may be controlled. Equation 39 may preferably satisfy: 0 < CG2 / CA12 < 1.

$$[\text{Equation 40}] \ 1 < CA\_Max / CA\_Aver < 3$$

CA_Aver represents an average of the effective diameters of the object-side surfaces and the light source-side surfaces of the lenses. If Equation 40 is satisfied, the optical system can set a slim and compact sensor device while maintaining optical performance. Equation 40 preferably satisfies: 1 < CA_Max / CA_Aver < 2.

$$[\text{Equation 41}] \ 0.1 < CA\_Min / CA\_Aver < 2$$

If Equation 41 is satisfied, the optical system can maintain optical performance and set a slim and compact sensor device. Equation 41 preferably satisfies: 0.5 < CA_Min / CA_Aver < 1.

$$[\text{Equation 42}] \ 1 < CA\_Max / (2{*}LsH) < 6$$

Equation 42 may be set to the maximum effective diameter CA_Max and the diagonal length (2*LsH) of the light source, and if this is satisfied, the optical system can maintain good optical performance and set a slim and compact sensor device. Equation 42 preferably satisfies: 3 < CA_Max / (2*LsH) < 4.5.

$$[\text{Equation 42-1}] \ 1 < TD / CA\_Max < 4$$

TD is the optical axis distance from the center of the object-side surface of the first lens to the center of the light source-side surface of the last lens. If Equation 42-1 is satisfied, the total optical axis distance and the maximum effective diameter of the lenses may be set, so that the size for good optical performance may be set. Equation 42-1 preferably satisfies: 1 < TD / CA_Max < 3.

$$[\text{Equation 43}] \ 0 < F / |L5R2| < 1$$

F is the effective focal length of the optical system, and L5S2 is the radius of curvature of the light source-side surface of the fifth lens. If Equation 43 is satisfied, the effective focal length and the radius of curvature of the light source-side surface of the last aspherical lens may be set, so that the influence on optical system reduction, for example, TTL, may be controlled. Equation 43 preferably satisfies: 0 < F / IL5R21 < 0.5.

$$[\text{Equation 44}] \ 0 < F / L1R1 < 1$$

In Equation 44, the effective focal length of the optical system and the radius of curvature of the object-side surface of the first lens are set, so that the influence on the emitted light and the TTL may be controlled. Equation 44 preferably satisfies: 0 < F / L1R1 < 0.5.

$$[\text{Equation 45}] \ 0 < EPD / |L5R2| < 1$$

EPD means the size (mm) of the entrance pupil diameter of the optical system 110, and L5R2 means the radius of curvature of the light source-side surface of the fifth lens. When the optical system 110 according to the embodiment satisfies Equation 45, the optical system 110 can control the incident light. Preferably, the following condition may satisfy: 0 < EPD / IL5R21 < 0.5.

$$[Equation\ 46]\ 0 < EPD / L1R1 < 1$$

In Equation 46, the size of the entrance pupil diameter of the optical system 110 and the radius of curvature of the object-side surface of the first lens may be set, and when these are satisfied, the optical system 110 can control the emitted light. Preferably, the following condition may satisfy: 0 < EPD / L1R1 < 0.5.

$$[Equation\ 47]\ 0 < |F1 / F2| < 10$$

F1 is the focal length of the first lens, and F2 is the focal length of the second lens. When Equation 47 is satisfied, the refractive power of the first and second lenses may be controlled, and the TTL and effective focal length (EFL) may be affected. Preferably, 0 < | F1 / F2 | < 2 may be satisfied.

$$[Equation\ 48]\ 0 < |F1| / F < 10$$

In Equation 48, the focal length of the first lens and the effective focal length of the optical system may be set, and the refractive power of the first lens can be controlled.

$$[Equation\ 49]\ 0 < |F1/F5| < 10$$

In Equation 49, the focal lengths of the first and fifth lenses can be set, and the refractive powers of the first and fifth lenses can be controlled. Preferably, 0 < | F1/F5 | < 5 may be satisfied.

$$[Equation\ 49\text{-}1]\ F5 < |F1| < F3$$

$$[Equation\ 49\text{-}2]\ F3 < F4$$

$$[Equation\ 49\text{-}3]\ 2* |F2| < F4$$

In Equations 49-1 to 49-3, F1, F2, F3, F4, and F5 are the focal lengths of the first to fifth lenses, and the focal length of the spherical lens to the focal length of the last aspherical lens may be adjusted to guide light to the effective region of the aspherical lens.

Here, F1 is -10 mm or less, for example, in the range of -10 mm to -30 mm. F2 is -5 mm or less, for example, in the range of -5 mm to -20 mm. F3 is 15 mm or more, for example, in the range of 15 mm to 30 mm. F4 is 16 mm or more, for example, in the range of 16 mm to 40 mm. F5 is 5 mm or more, for example, in the range of 5 mm to 17 mm. The balance of each focal length of each of the above lenses may suppress the difference in the focus position due to temperature change. Accordingly, the optical characteristics of the lenses can be suppressed from deteriorating due to temperature change. The aperture stop ST is disposed on the object-side surface of the third lens 113. The focal length of the lens disposed on the light source-side surface more than the aperture stop ST and closest to the aperture stop ST is greater than 0. In the embodiment of the present invention, the focal length F3 of the third lens 113 should be designed to be greater than 0. In this case, the third lens 113 collects light, so that the effective diameters of the fourth to fifth lenses, which are lenses arranged closer to the light source than the third lens 113, can be prevented from increasing, and the TTL can be prevented from becoming longer, so that miniaturization of the transmitting optical system is possible. In this case, a wide-angle optical system may be provided at an FOV exceeding 100 degrees, for example, 110 to 130 degrees.

$$[Equation\ 50]\ Po2 * Po3 < 0$$

Po2 is the refractive power value of the second lens, and Po3 is the refractive power value of the third lens. In other words, the refractive powers of the second and third lenses have opposite refractive powers, so that aberrations can be improved, and light can be effectively guided by an aspherical lens. When the following condition satisfies: Po2 * Po3 > 0, the effect of improving chromatic aberration in the two lenses does not appear significantly.

$$[\text{Equation 51}]\ 20\ \text{mm} < TTL < 60\ \text{mm}$$

TTL means to the distance (mm) from the center of the first surface S1 of the first lens 1 1 1 to the imaging surface of the light source 116 in the optical axis Lz. In Equation 51, by setting the TTL to be greater than 20 mm and less than 60 mm, an optical system for a vehicle can be provided. Equation 51 preferably satisfies the following condition: 30 mm < TTL < 55 mm or TD < TTL.

$$[\text{Equation 52}]\ 2\ \text{mm} < LsH < 20\ \text{mm}$$

Equation 52 can set the diagonal size (2*LsH) of the light source 116 and provide an optical system having a vehicle sensor size. Equation 52 preferably satisfies: 2 mm < LsH < 5 mm.

$$[\text{Equation 53}]\ 1.5\ \text{mm} < BFL < 7\ \text{mm}$$

In Equation 53, the BFL is set to be greater than 1.5 mm and less than 7 mm, thereby securing the installation space of the cover glass 153, improving the assemblability of components through the distance between the light source 116 and the last lens, and improving the reliability of the j oint. Equation 53 preferably satisfies: 5mm < BFL < 7mm. If the BFL is less than the range of Equation 53, some light emitted from the light source may not be emitted, which may cause a decrease in resolution. If the BFL exceeds the range of Equation 53, stray light may be emitted, which may deteriorate the aberration characteristics of the optical system.

$$[\text{Equation 54}]\ 1\text{mm} < F < 10\text{mm}$$

Equation 54 can set the total focal length (F) to suit the vehicle optical system. Equation 54 may satisfy: 1mm < F < 5mm.

$$[\text{Equation 55}]\ 100\ \text{degrees} < FOV$$

In Equation 55, FOV means the field of view (Degree) of the optical system 110, and can provide a vehicle optical system having a FOV exceeding 100 degrees. The FOV may preferably satisfy: 110 degrees $\leq$ FOV $\leq$ 130 degrees. In Equation 55, the range of the vehicle optical system can be set by the field of view. The length of the light source in the horizontal direction is based on 6.80 mm $\pm$ 0.5 mm. In addition, if Equation 55 is satisfied, when the temperature changes from room temperature to high temperature, the change rate of the effective focal length and the change rate of the field of view may be set to 5% or less, for example, 0 to 5%. In addition, even if two or more aspherical lenses are mixed with spherical lenses and used in the optical system 110, the deterioration of the optical characteristics can be prevented through temperature compensation and aberration correction by the aspherical lens made of glass.

$$[\text{Equation 56}]\ 1 < TTL\ /\ CA\_Max < 7$$

In Equation 56, CA_Max means the largest effective diameter (mm) among the object-side and light source-side surfaces of the plurality of lenses, and TTL means the distance (mm) from the vertex of the first surface S1 of the first lens to the upper surface of the light source 116 in the optical axis Lz. Equation 56 sets the relationship between the total optical axis length of the optical system and the maximum effective diameter, thereby providing an improved vehicle optical system. Equation 56 preferably satisfies: 1 < TTL / CA_Max < 3.

$$[\text{Equation 57}]\ 10 < TTL\ /\ LsH < 30$$

Equation 57 can set the total optical axis length (TTL) of the optical system and the diagonal length (LsH) from the optical axis of the light source 116. When the optical system 110 according to the embodiment satisfies the Equation 57, the optical system 110 may have a TTL for applying the vehicle light source 116, thereby providing a more improved image quality. The Equation 57 preferably satisfies: 10 < TTL / LsH < 20.

$$[\text{Equation 58}]\ 0 < BFL\ /\ LsH < 3$$

The Equation 58 may set the optical axis distance between the light source 116 and the last lens and the diagonal length from the optical axis of the light source 116. When the optical system 110 according to the embodiment satisfies the Equation 58, the optical system 110 can secure a BFL for applying the size of the vehicle light source 116, set the interval between the last lens and the light source 116, and have good optical characteristics in the FOV. Equation 58 may preferably satisfy: 1 < BFL / LsH < 2.

$$[\text{Equation 59}] \; 1 < TTL / BFL < 15$$

Equation 59 may set the total optical axis length (TTL) of the optical system and the optical axis distance (BFL) between the light source 116 and the last lens. When the optical system 110 according to the embodiment satisfies Equation 59, the optical system 110 may secure BFL. Equation 59 may preferably satisfy: 3 < TTL / BFL < 13.

$$[\text{Equation 60}] \; 10 < TTL / F < 30$$

Equation 60 may set the total focal length (F) and the total optical axis length (TTL) of the optical system 110. Accordingly, an optical system for a driver assistance system can be provided. Equation 60 may preferably satisfy: $10 \leq$ TTL/F < 25 or 12 < TTL/F < 20. When the optical system 110 according to the embodiment satisfies Equation 60, the optical system 110 may have an appropriate focal length in a set TTL range, and provides an optical system that can form an image while maintaining an appropriate focal length even when the temperature changes from low to high. When it is less than the lower limit of Equation 60, it is necessary to increase the refractive power of the lenses, making it difficult to correct spherical aberration or distortion aberration, and when it exceeds the upper limit of Equation 60, the effective diameter or TTL of the lenses becomes long, which may cause a problem in that the imaging lens system becomes large.

$$[\text{Equation 61}] \; 0 < F / BFL < 3$$

Equation 61 may set the total focal length (F) of the optical system 110 and the optical axis distance BFL between the light source 116 and the last lens. When the optical system 110 according to the embodiment satisfies Equation 61, the optical system 110 may have a set field of view and an appropriate focal length, and a vehicle optical system can be provided. In addition, the optical system 110 can minimize the distance between the last lens and the light source 116, so that it may have good optical characteristics in the FOV. Equation 61 may preferably satisfy: 0 < F / BFL < 1.

$$[\text{Equation 62}] \; 0.5 < F / LsH < 1.5$$

Equation 62 may set the total focal length F (mm) of the optical system 110 and the diagonal length LsH from the optical axis of the light source 116. This optical system 110 may have improved aberration characteristics in the size of the vehicle light source 116. Equation 62 may preferably satisfy: 0.7 < F / LsH < 1.

$$[\text{Equation 63}] \; 0.5 < F / EPD < 1.5$$

Equation 63 may set the total focal length F and the entrance pupil diameter of the optical system 110. Accordingly, the overall brightness of the optical system can be controlled. Equation 63 may preferably satisfy: 0.5 < F / EPD < 1.

$$[\text{Equation 64}] \; 0 < EPD / LsH / FOV < 0.2$$

Equation 64 may set the relationship between the EPD, the length of 1/2 of the maximum diagonal length LsH of the image sensor, and the field of view. Accordingly, the overall size and brightness of the optical system can be controlled. Preferably, Equation 64 may satisfy: 0 < EPD / LsH / FOV < 0.1.

$$[\text{Equation 65}] \; 100 < FOV / F\# < 200$$

Equation 65 may set the relationship between the field of view and the F number F# of the optical system. Preferably, Equation 65 may satisfy: 120 < FOV / F# < 170. Here, F# is provided to be 1.2 or less, so as to provide a bright image.

[Equation 66] $50 < (CT\_Max + CG\_Max) * n < 150$

[Equation 67] $800 < (FOV * TTL)/n$

Preferably, Equation 67 may satisfy the following condition: $1000 < (FOV * TTL)/n < 1500$ depending on the field of view and the number of lenses (n).

[Equation 68] $FOV < (TTL * n)$

[Equation 69] $1 < (TD/CA\_Max) * n < 20$

[Equation 70] $0 < (CA52/CA22)/(CA11/CA22) < 1$

In Equations 66 to 70, n is the total number of lenses, and the relationship between the maximum center thickness CT_Max of the lenses, the maximum center distance CG_Max, FOV, TTL, the optical axis distance TD of the lenses, the effective diameter CA52 of the light source-side surface of the fifth lens, the effective diameter of the object-side surface of the first lens, and the effective diameter of the light source-side surface of the second lens can be set according to the total number of lenses. Accordingly, the chromatic aberration, resolution, size, etc. of the optical system having 6 or fewer lenses can be controlled.

The optical system 110 according to the embodiment may satisfy at least one or two or more Equations among Equations 1 to 70. In this case, the optical system 110 may have improved optical characteristics. In detail, when the optical system 110 satisfies at least one of Equations 1 to 35 and/or at least one of Equations 36 to 70, the optical system 110 may have improved resolution and improve aberration and distortion characteristics. In addition, the transmitting optical system 110 can secure a BFL for applying a vehicle light source 116, can compensate for optical characteristic degradation due to temperature change, and can minimize the gap between the last lens and the light source 116, thereby having good optical performance within the FOV. The BFL can be defined as a first BFL for the receiving optical system and a second BFL for the transmitting optical system.

Table 9 shows the items of the Equations described above in the transmitting optical system 110 of the embodiment, including the TTL (mm), BFL, effective focal length F, LsH, effective diameter CA, sum of the center thicknesses of each lens, sum of the center distances between adjacent lenses, sum of Abbe numbers, sum of refractive indices, TD (mm), which is the optical axis distance from the first surface S1 to the tenth surface S10, focal lengths F1, F2, F3, F4, and F5 of each of the first to fifth lenses, FOV, edge thickness ET, F number, etc. of the transmitting optical system 110.

[Table 9]

| Items | Values | Items | Values |
|---|---|---|---|
| F | 3.172 | ET1 | 4.3714 |
| F1 | -16.259 | ET2 | 3.9290 |
| F2 | -10.471 | ET3 | 3.0256 |
| F3 | 25.649 | ET4 | 3.6363 |
| F4 | 28.358 | ET5 | 5.6766 |
| F5 | 12.631 | FOV | 125.374 |
| ΣIndex | 8.854 | EPD | 3.952 |
| ΣAbbe | 159.800 | BFL | 6.125 |
| ΣCT | 23.302 | TD | 44.903 |
| ΣCG | 21.601 | LsH | 3.400 |
| TTL | 51.028 | SD | 26.844 |
| F-number | 0.803 | | |

Table 10 shows the result values for the Equations 1 to 35 described above in the transmitting optical system 110 of the embodiment. Referring to Table 10, it can be seen that the transmitting optical system 110 satisfies at least one, two or more, or three or more of the Equations 1 to 35. Accordingly, the transmitting optical system 110 may have good optical performance within the FOV and may have excellent optical characteristics.

[Table 10]

| | Equations | Values |
|---|---|---|
| 1 | 0<CT1/CT2<3 | 1.731 |
| 2 | 5 < CA11/CT1 < 15 | 9.269 |
| 3 | 0 < CT5 / CT4 < 3 | 1.323 |
| 4 | 0 < CT5 / (CT1+CT2) < 3 | 1.999 |
| 5 | 0 < CT5 / CG2 < 1 | 0.837 |
| 6 | 0 < CG1 / CG4 < 1.5 | 0.710 |
| 7 | 0<CG2/CG4<1 | 0.397 |
| 8 | 0.5 < CG2 / (CT1+CG1+CT2) < 1.5 | 1.023 |
| 9 | 5 < TTL/CT_AVER < 25 | 10.949 |
| 10 | 1.70 < n1 | 1.808 |
| 11 | 0 < n1/n3 <1.5 | 1.014 |
| 12 | 0 < n3/n4 <1.5 | 1.071 |
| 13 | (v3*n3) < (v1*n1) | Satisfaction |
| 14 | SD < TD | Satisfaction |
| 15 | CAn2/2 < CTn | Satisfaction |
| 16 | CA5/2 < CG2 < CA11 | Satisfaction |
| 17 | CA11/2 < CG1+CG2 | Satisfaction |
| 18 | 1 < CA11 / CA21 < 5 | 1.702 |
| 19 | 0 < CA22 / CA31 < 1.5 | 0.726 |
| 20 | 0.5 < CA42 / CA51 < 2 | 1.235 |
| 21 | 1 < CA11/CA52 < 5 | 1.746 |
| 22 | 1 < CG2 / (CT2+CT3) < 3 | 1.555 |
| 23 | 0 < CG4 /(CT4+CT5) < 1 | 0.270 |
| 24 | 1 < CG_Max / CG4 < 4 | 2.520 |
| 25 | 1 < CT5 / BFL < 4 | 1.339 |
| 26 | 0 < CG3 / CT5 < 1.5 | 0.296 |
| 27 | 0 < CG4 / CT5 < 1 | 0.474 |
| 28 | 0 < IL5R21 / CT5 < 5 | 2.567 |
| 29 | 0 < IL5R21 / L5R1 < 5 | 1.789 |
| 30 | 0 < L1R1/L1R2 < 3 | 3.136 |
| 31 | 500 < |L2R1| / L2R2 | Satisfaction |
| 32 | 0 < CT_Max / CG_Max < 2 | 0.837 |
| 33 | 0<∑CT/∑CG<2 | 1.079 |
| 34 | 5 < ∑Index <15 | 8.854 |
| 35 | 10 < ∑Abbe / ∑Index <50 | 18.048 |

Table 11 shows the result values for the Equations 36 to 70 described above in the optical system 110 of the embodiment. Referring to Table 11, it can be seen that the optical system 110 satisfies at least one, two or more, or three or more of the Equations 36 to 70. Accordingly, the optical system 110 may have good optical performance within the FOV and may have excellent optical characteristics.

[Table 11]

| | Equations | Values |
|---|---|---|
| 36 | $50 < \sum CT*n < 159$ | 116.511 |
| 37 | $0 < \Sigma CT / \Sigma ET < 2$ | 1.129 |
| 38 | $1 < CA11 / CA\_Min < 5$ | 2.024 |
| 39 | $1 < CG2 / CA12 < 5$ | 0.649 |
| 40 | $1 < CA\_Max / CA\_Aver < 3$ | 1.497 |
| 41 | $0.1 < CA\_Min / CA\_Aver < 2$ | 0.747 |
| 42 | $1 < CA\_Max / (2*LsH) < 6$ | 3.544 |
| 43 | $0 < F / |L5R2| < 1$ | 0.151 |
| 44 | $0 < F / L1R1 < 1$ | 0.120 |
| 45 | $0 < EPD / IL5R21 < 1$ | 0.188 |
| 46 | $0 < EPD / L1R1 < 1$ | 0.150 |
| 47 | $0 < | F1 / F2 | < 10$ | 1.553 |
| 48 | $1 < | F1 | / F < 10$ | 5.126 |
| 49 | $0 < |F1 / F5| < 10$ | 1.287 |
| 50 | $Po2 * Po3 < 0$ | 0.573 |
| 51 | $20 < TTL < 60$ | 51.028 |
| 52 | $2 < LsH < 20$ | 3.400 |
| 53 | $1.5 < BFL < 7$ | 6.125 |
| 54 | $1 < F < 10$ | 3.172 |
| 55 | $100 < FOV$ | 125.374 |
| 56 | $1 < TTL / CA\_Max < 7$ | 2.117 |
| 57 | $10 < TTL / LsH < 30$ | 15.008 |
| 58 | $0 < BFL / LsH < 3$ | 1.801 |
| 59 | $1 < TTL / BFL < 15$ | 8.331 |
| 60 | $10 < TTL / F < 30$ | 16.087 |
| 61 | $0 < F / BFL < 3$ | 0.518 |
| 62 | $0.5 < F / LsH < 1.5$ | 0.933 |
| 63 | $0.5 < F / EPD < 1.5$ | 0.803 |
| 64 | $0 < EPD/LsH/FOV < 0.2$ | 0.009 |
| 65 | $100 < FOV / F\# < 200$ | 156.216 |
| 66 | $50 < (CT\,Max+CG\,Max)*n < 150$ | 90.009 |
| 67 | $800 < (FOV*TTL)/n$ | 1279.508 |
| 68 | $FOV < (TTL*n)$ | Satisfaction |
| 69 | $1 < (TD / CA\_Max) *n < 20$ | 9.316 |
| 70 | $0 < (CA52/CA22) / (CA11/CA21) < 1$ | 0.681 |

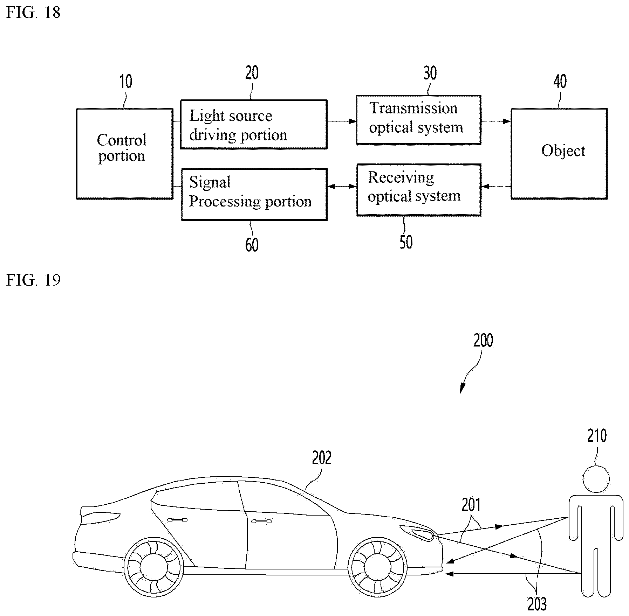

FIG. 18 is a block diagram of a sensor system having a transmitting optical system according to an embodiment of the invention. Referring to FIG. 18, the sensor device includes a control portion 10, a light source driving portion 20, a transmission optical system 30, a receiving optical system 50 disclosed above, and a signal processing portion 60. The control portion 10 controls the transmission and reception of signals, and can be linked to devices related to communication services such as autonomous driving modules, artificial intelligence modules, drones, robots, augmented reality devices, virtual phenomenon devices, and 5G and 6G based on the transmitted/received signals.

The light source driving portion 20 supplies power to a light source included in the transmission optical system 30 to drive it. The light source generates a laser beam in the form of a linear light source or a point light source. The light source driving portion 20 can adjust or vary the driving current supplied to the light source according to driving environment information. The driving environment information can include terrain information of a driving section, traffic congestion information, weather, etc. The wavelength of the laser beam generated from the light source may be in the range of 890 nm to 960 nm or in the range of 940 nm $\pm$ 10 nm. As another example, the wavelength of the laser beam may be 1550 nm $\pm$ 10 nm. The laser light source may be implemented as an InGaAs/GaAs-based semiconductor diode laser and may emit a high-power laser beam. The light source may include a single emitter and/or multiple emitters.

The transmitting optical system 30 transmits the laser beam generated from the light source to an object 40 through a lens portion and a diffuser, and the light reflected from the object 40 is received by the receiving optical system 50. The receiving optical system 50 may be composed of a plurality of optical sensors, and the optical sensor converts the received light into an electrical signal using a photodiode. That is, the sensing portion is arranged in a matrix type to convert light received from an object scanned in each of the horizontal and vertical directions into current. The signal processing portion 60 converts the output of the receiving optical system 50 into voltage, amplifies it, and then converts the amplified signal into a digital signal using an analog-to-digital converter. The signal processing portion 60 analyzes digital data using a TOF (Time of Flight) algorithm or a phase-shift algorithm to detect the distance to the object 40 and the shape of the object.

The control portion 10 can receive vehicle speed information and road condition information through a control unit (e.g., ECU) or a network. The control portion 10 can receive driving environment information through a network. The driving environment information can include terrain information of a driving section, traffic congestion information, weather, etc. The control portion 10 can adjust the gain based on one or more of the vehicle speed, the road surface condition of the road on which the vehicle is driving, and the driving environment information, and can provide sensor data including the distance to the object and the shape information of the object to the free-driving device.

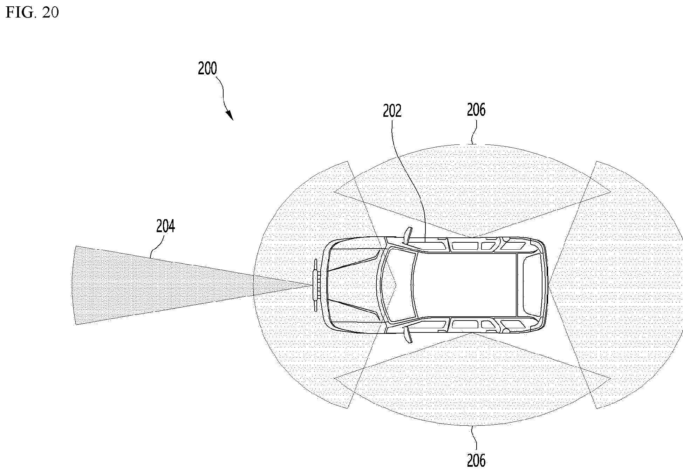

FIG. 19 is a drawing showing an example of measuring an object in a vehicle having a sensor system of the invention, and FIG. 20 is a drawing showing an example of surrounding surveillance in a vehicle having a sensor system of the invention.

Referring to FIGS. 19 and 20, a vehicle 202 having a sensor system includes a transmitting optical system that projects a laser beam 201 generated by a light source toward a target scene, and a receiving optical system that receives light 203 reflected from the target or subject 210. In addition, the sensor system includes a LiDAR system, which typically includes a controller that calculates distance information to the subject 210 from the reflected light, and a device that can scan or provide a specific pattern of light, which may be a static pattern within a desired range and FOV. The transmitting and receiving optical systems are used to convert the received signal light into a measurement value representing a point-by-point three-dimensional map of the surrounding environment within the range and FOV of the LiDAR system.

The receiving optical system and signal processing portion for the LiDAR calculate range information based on the time-of-flight measurements of the light pulses emitted from the light source. In addition, the target plane associated with the specific range is illuminated in the scene, and the known information about the light beam profile based on the specific design of the source and projector system is used to determine position information about the reflecting surface, thereby generating a complete x, y, z, or 3D picture of the scene. In other words, the point-by-point 3D map of the surrounding environment represents a collection of measurement data representing position information from all surfaces reflecting the light from the source to the receiver within the field of view of the LiDAR system. In this way, a 3D representation of the object in the field of view of the LiDAR system is obtained.

Also illustrated is a schematic diagram showing the 2D field of view and range requirements of a typical surround sensing LiDAR system 200 for a vehicle 202. For example, an adaptive cruise control function may require a field of view and range 204 with a narrow field of view compared to a "surround view" field of view and range 206, but with a long field range requirement. In general, the sensor capabilities of an automobile may be enabled by a combination of LiDAR, radar, cameras, and ultrasonic sensors. The combination of these sensor data to generate information about the surrounding environment is often referred to as "sensor fusion." While the present invention describes a LiDAR system in the context of an automobile, where LiDAR is widely used for autonomous or self-driving or driver-assisted vehicles, it should be understood that the embodiments may be applied to any vehicle. Other types of vehicles may include robots, tractors, trucks, airplanes, drones, boats, ships, etc.

Features, structures, effects, etc. described in the embodiments above are included in at least one embodiment of the invention, and are not necessarily limited to only one embodiment. Furthermore, the features, structures, and effects illustrated in each embodiment may be combined or modified with respect to other embodiments by those skilled in the art in the field to which the embodiments belong. Therefore, contents related to these combinations and variations should be construed as being included in the scope of the invention.

In addition, although described based on the embodiments, this is only an example, this invention is not limited, and it will be apparent to those skilled in the art that various modifications and applications not illustrated above are possible without departing from the essential characteristics of this embodiment. For example, each component specifically shown in the embodiment may be modified and implemented. And the differences related to these modifications and applications should be construed as being included in the scope of the invention as defined in the appended claims.

**Claims**

1. A receiving optical system comprising:

   a first lens closest to an object;
   an n-th lens closest to an image sensor (n is 6 or less);
   a plurality of lenses arranged between the first lens and the n-th lens and aligned in an optical axis; and
   an optical filter disposed in one of regions between the plurality of lenses,
   wherein an optical axis distance from the optical filter to a surface of the image sensor is D1,
   wherein an optical axis distance from a sensor-side surface of the n-th lens closest to the image sensor to the surface of the image sensor is BFL, and
   wherein the following Equation satisfies: BFL < D1.

2. The receiving optical system of claim 1, comprising:

   a lens disposed on an object side of the optical filter and an aperture stop disposed between the optical filter and disposed around a periphery of the lens disposed on the object side of the optical filter,
   wherein SD is an optical axis distance from the aperture stop to the surface of the image sensor,
   wherein the following Equation satisfies: 1 < SD / D1 < 1.2.

3. The receiving optical system of claim 1,

   wherein CTn is a center thickness of the n-th lens,
   wherein CTn-1 is a center thickness of the n-1th lens disposed on an object side of the n-th lens,
   wherein TTL is an optical axis distance from a center of an object-side surface of the first lens to the surface of the image sensor, and
   wherein the following Equation satisfies: (CTn+CTn-1) < D1 < TTL/2.

4. The receiving optical system of claim 1,
   wherein the optical filter is a bandpass filter that passes a range of 890 nm to 960 nm.

5. The optical system of any one of claims 1 to 4,
   wherein the first lens includes a convex object-side surface and a concave sensor-side surface on the optical axis.

6. The receiving optical system of claim 5,
   wherein the second lens spaced from the first lens toward the sensor side has a flat object-side surface and a concave sensor-side surface.

7. The receiving optical system of claim 5,

   wherein the third lens spaced from the optical filter toward the object side has a shape in which both sides is convex on the optical axis,
   wherein the fourth lens spaced from the optical filter toward the sensor side has a shape in which both sides is convex on the optical axis.

8. The receiving optical system of claim 5,
   wherein the n-th lens has a convex object-side surface and a convex sensor-side surface on the optical axis.

9. The receiving optical system of any one of claims 1 to 4,

   wherein the first lens has negative refractive power,
   wherein the n-th lens has positive refractive power,
   wherein a number of lenses having positive refractive power among the plurality of lenses is greater than a number of lenses having negative refractive power among the plurality of lenses.

10. The receiving optical system of claim 4,

    wherein an object-side surface of the first lens has a maximum effective diameter among the lenses of the optical system,
    wherein a sensor-side surface of the second lens disposed on a sensor side of the first lens has a minimum effective diameter among the lenses of the optical system,
    wherein the first lens is a spherical lens,
    wherein the n-th lens is a fifth lens and is an aspherical lens.

11. A transmitting optical system comprises:

    a first lens closest to an object;
    an n-th lens closest to a light source (n is 6 or less); and
    a plurality of lenses arranged between the first lens and the n-th lens and aligned in the optical axis,
    wherein the first lens has a meniscus shape convex toward the object side,
    wherein the n-th lens has a shape in which both sides are convex on the optical axis,
    wherein an n-1th lens from the n-th lens to the object side has a shape in which both sides are convex on the optical axis,
    wherein the first lens is made of glass, and an object-side surface and a light source-side surface of the first lens on the optical axis are spherical, and
    wherein the n-th lens is made of glass, and an object-side surface and the light source-side surface of the n-th lens on the optical axis are aspherical.

12. The transmitting optical system of claim 11,
    wherein a second lens disposed on a light source side of the first lens has a flat object-side surface and a concave light source-side surface on the optical axis.

13. The transmitting optical system of claim 12,

    wherein a third lens disposed on a light source side of the second lens has a biconvex shape on the optical axis, and
    wherein a fourth lens disposed on a light source side of the third lens has a biconvex shape on the optical axis,
    wherein the third lens has a spherical shape on both sides on the optical axis,
    wherein the fourth lens has an aspherical shape on both sides on the optical axis.

14. The transmitting optical system of any one of claims 11 to 14,

    wherein the first lens has negative refractive power,
    wherein the n-th lens is a fifth lens and has positive refractive power,
    wherein the plurality of lenses has a number of lenses having positive refractive power greater than a number of lenses having negative refractive power.

15. A Lidar device comprising:

    a receiving optical system having an image sensor, and first to fifth lenses aligned along in a first optical axis from an object toward the image sensor; and
    a transmitting optical system having a light source and sixth to tenth lenses aligned in a second optical axis toward a light source side from the object,
    wherein the first to fifth lenses include a spherical lens and an aspherical lens,
    wherein the sixth to tenth lenses include a spherical lens and an aspherical lens,
    wherein the receiving optical system includes an optical filter arranged between the spherical lens and the aspherical lens,
wherein each of the first lens and the sixth lens has a meniscus shape convex toward the object side,
wherein an object-side surface and a sensor-side surface of the fifth lens has a convex shape and an aspherical shape on the first optical axis,
wherein an object-side surface and a light source-side surface of the tenth lens has a convex shape and an aspherical shape on the second optical axis,
wherein the light source generates light in a range of 890 nm to 960 nm, and
wherein the optical filter transmits light in a range of 890 nm to 960 nm

FIG. 1

FIG. 2

|  | Surface | Radius | CT/CG | Effective radius | Index | Abbe | Focal length |
|---|---|---|---|---|---|---|---|
| Lens1 | S1 | 23.436 | 2.277 | 10.920 | 1.834 | 37.3 | -15.19 |
|  | S2 | 7.737 | 5.079 | 6.918 |  |  |  |
| Lens2 | S1 | Infinity | 1.365 | 6.429 | 1.834 | 37.3 | -9.483 |
|  | S2 | 7.713 | 9.811 | 5.381 |  |  |  |
| Lens3 | S1 | 29.863 | 4.585 | 7.436 | 1.808 | 22.8 | 23.518 |
|  | S2(Stop) | -44.000 | 0.852 | 7.480 |  |  |  |
| BPF | S1 | Infinity | 0.500 | 7.539 |  |  |  |
|  | S2 | Infinity | 0.651 | 7.565 |  |  |  |
| Lens4 | S1 | 19.955 | 4.554 | 7.676 | 1..689 | 31.2 | 27.316 |
|  | S2 | -180.559 | 4.325 | 8.000 |  |  |  |
| Lens5 | S1 | 10.565 | 7.109 | 6.663 | 1.689 | 31.2 | 11.409 |
|  | S2 | -19.565 | 3.435 | 6.450 |  |  |  |
| Cover glass | S1 | Infinity | 0.500 | 4.088 |  |  |  |
|  | S2 | Infinity | 1.855 | 3.935 |  |  |  |
| Image |  |  | 0.000 | 3.021 |  |  |  |

FIG. 3

|  | L4 | | L5 | |
|---|---|---|---|---|
|  | S1 | S2 | S1 | S2 |
| Y | 2.00.E+01 | -1.81.E+02 | 1.06.E+01 | -1.96.E+01 |
| K | 1.19.E+00 | -9.74.E+01 | -9.91.E-01 | -2.66.E+01 |
| A | -1.84.E-04 | -3.58.E-04 | -3.94.E-04 | -4.57.E-04 |
| B | -4.15.E-07 | 2.80.E-06 | -1.13.E-06 | 2.93.E-06 |
| C | -2.27.E-08 | -4.17.E-08 | -6.34.E-08 | -9.92.E-09 |
| D | 2.71.E-10 | 3.19.E-10 | 1.10.E-09 | -6.95.E-11 |
| E | -3.42.E-12 | -1.79.E-12 | -4.87.E-12 |  |

FIG. 4

| d-line 587.562 | | | | |
|---|---|---|---|---|
| Temperature | L1 | L2 | L3 | L4 |
| -40 | 1.834 | 1.834 | 1.808 | 1.689 |
| -30 | 1.834 | 1.834 | 1.808 | 1.689 |
| -20 | 1.834 | 1.834 | 1.808 | 1.689 |
| -10 | 1.834 | 1.834 | 1.808 | 1.689 |
| 0 | 1.834 | 1.834 | 1.808 | 1.689 |
| 10 | 1.834 | 1.834 | 1.808 | 1.689 |
| 20 | 1.834 | 1.834 | 1.808 | 1.689 |
| 30 | 1.834 | 1.834 | 1.808 | 1.689 |
| 40 | 1.834 | 1.834 | 1.808 | 1.689 |
| 50 | 1.834 | 1.834 | 1.808 | 1.689 |
| 60 | 1.834 | 1.834 | 1.808 | 1.689 |
| 70 | 1.834 | 1.834 | 1.808 | 1.689 |
| 80 | 1.834 | 1.834 | 1.808 | 1.689 |
| 90 | 1.835 | 1.835 | 1.808 | 1.689 |

FIG. 5

FIG. 6

FIG. 7

FIG. 8

EP 4 603 886 A1

FIG. 9

EP 4 603 886 A1

58

FIG. 10

FIG. 11

| | Surface | Radius | CT/CG | Effective radius | Index | Abbe | Focal length |
|---|---|---|---|---|---|---|---|
| Lens1 | S1 | 26.413 | 2.600 | 12.050 | 1.834 | 37.300 | -16.259 |
| | S2 | 8.423 | 5.481 | 7.547 | | | |
| Lens2 | S1 | Infinity | 1.502 | 7.082 | 1.834 | 37.300 | -10.471 |
| | S2 | 8.516 | 9.802 | 5.954 | | | |
| Lens3 | S1 | 34.735 | 4.800 | 8.203 | 1.808 | 22.800 | 25.649 |
| | S2(stop) | -44.000 | 2.429 | 8.310 | | | |
| Lens4 | | 23.105 | 6.200 | 8.360 | 1.689 | 31.200 | 28.358 |
| | | -90.741 | 3.890 | 8.900 | | | |
| Lens5 | | 11.769 | 8.200 | 7.350 | 1.689 | 31.200 | 12.631 |
| | | -21.052 | 6.125 | 6.900 | | | |
| Light source | | | | 3.401 | | | |

FIG. 12

| | L4 | | L5 | |
|---|---|---|---|---|
| | S1 | S2 | S1 | S2 |
| Y | 2.31.E+01 | -9.07.E+01 | 1.18.E+01 | -2.11.E+01 |
| K | -4.50.E-01 | 7.17.E+01 | -1.54.E+00 | -2.71.E+01 |
| A | -1.13.E-04 | -3.00.E-04 | -3.08.E-04 | -3.77.E-04 |
| B | -2.62E-07 | 2.30E-06 | -6.50E-07 | 2.86E-06 |
| C | -1.66E-08 | -2.26E-08 | -2.16E-08 | -1.68E-08 |
| D | 2.38E-10 | 1.22E-10 | 3.27E-10 | 4.59E-11 |
| E | -2.21E-12 | -4.50E-13 | -5.83E-13 | |

FIG. 13

| d-line 587.562 | | | |
|---|---|---|---|
| Temperture | L1 | L2 | L3 | L4 |
| -40 | 1.834 | 1.834 | 1.808 | 1.689 |
| -30 | 1.834 | 1.834 | 1.808 | 1.689 |
| -20 | 1.834 | 1.834 | 1.808 | 1.689 |
| -10 | 1.834 | 1.834 | 1.808 | 1.689 |
| 0 | 1.834 | 1.834 | 1.808 | 1.689 |
| 10 | 1.834 | 1.834 | 1.808 | 1.689 |
| 20 | 1.834 | 1.834 | 1.808 | 1.689 |
| 30 | 1.834 | 1.834 | 1.808 | 1.689 |
| 40 | 1.834 | 1.834 | 1.808 | 1.689 |
| 50 | 1.834 | 1.834 | 1.808 | 1.689 |
| 60 | 1.834 | 1.834 | 1.808 | 1.689 |
| 70 | 1.834 | 1.834 | 1.808 | 1.689 |
| 80 | 1.834 | 1.834 | 1.808 | 1.689 |
| 90 | 1.835 | 1.835 | 1.808 | 1.689 |

FIG. 14

FIG. 15

FIG. 16

FIG. 17

FIG. 18

```
    10                20                   30                      40
     |                |                    |                       |
 ┌─────────┐   ┌──────────────┐   ┌──────────────┐         ┌──────────┐
 │ Control │   │ Light source │   │ Transmission │ ┄┄┄>    │          │
 │ portion │───│driving portion│──│optical system│         │  Object  │
 │         │   └──────────────┘   └──────────────┘         │          │
 │         │   ┌──────────────┐   ┌──────────────┐         │          │
 │         │   │   Signal     │<─>│  Receiving   │ <┄┄┄    │          │
 │         │───│Processing port│  │optical system│         │          │
 └─────────┘   └──────────────┘   └──────────────┘         └──────────┘
                      |                  |
                      60                 50
```

FIG. 19

FIG. 20

## INTERNATIONAL SEARCH REPORT

| International application No. |
|---|
| **PCT/KR2023/015767** |

| A. | CLASSIFICATION OF SUBJECT MATTER |
|---|---|

**G02B 13/00**(2006.01)i; **G01S 7/481**(2006.01)i; **G02B 3/00**(2006.01)i; **G02B 13/18**(2006.01)i; **G02B 5/20**(2006.01)i; **G02B 26/02**(2006.01)i

According to International Patent Classification (IPC) or to both national classification and IPC

| B. | FIELDS SEARCHED |
|---|---|

Minimum documentation searched (classification system followed by classification symbols)

G02B 13/00(2006.01); G01S 7/481(2006.01); G02B 13/04(2006.01); G02B 13/18(2006.01); G02B 5/20(2006.01); G02B 7/02(2006.01); G02B 9/34(2006.01); H04N 23/00(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5 렌즈(fifth lens), 밴드 패스 필터(band pass filter), 라이다(LIDAR), 광원(light source), 수신 광학계(receiving optics), 송신 광학계(transmission optics), 구면 렌즈(spherical lens), 비구면 렌즈(aspheric lens)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-038574 A (NALUX CO., LTD.) 22 March 2016 (2016-03-22)<br>See paragraphs [0038]-[0039], [0041] and [0046]-[0050] and figure 1. | 1,3-4,9 |
| Y | | 15 |
| Y | KR 10-2018-0011636 A (LG INNOTEK CO., LTD.) 02 February 2018 (2018-02-02)<br>See paragraphs [0040]-[0053] and [0082]-[0088] and figure 3. | 11,14-15 |
| Y | WO 2021-233737 A1 (JENOPTIK OPTICAL SYSTEMS GMBH) 25 November 2021 (2021-11-25)<br>See page 3, lines 18-25, page 13, lines 1-7 and page 21, lines 10-15 and figures 1 and 32. | 11,14-15 |
| A | KR 10-2021-0138219 A (OPTRONTEC CO., LTD.) 19 November 2021 (2021-11-19)<br>See paragraphs [0034]-[0038] and figure 4. | 1-15 |
| A | KR 10-2017-0098064 A (SAMSUNG ELECTRONICS CO., LTD.) 29 August 2017 (2017-08-29)<br>See paragraph [0098] and figure 1. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 January 2024** | **16 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| JP | 2016-038574 | A | 22 March 2016 | JP | 5884113 | B1 | 15 March 2016 |
| | | | | US | 10365539 | B2 | 30 July 2019 |
| | | | | US | 2016-0320688 | A1 | 03 November 2016 |
| KR | 10-2018-0011636 | A | 02 February 2018 | KR | 10-2593403 | B1 | 25 October 2023 |
| WO | 2021-233737 | A1 | 25 November 2021 | CN | 115917390 | A | 04 April 2023 |
| | | | | CN | 115917390 | B | 10 October 2023 |
| | | | | DE | 102020115494 | B3 | 22 April 2021 |
| | | | | JP | 2023-518123 | A | 27 April 2023 |
| | | | | KR | 10-2023-0006924 | A | 11 January 2023 |
| | | | | KR | 10-2557338 | B1 | 18 July 2023 |
| | | | | US | 11789233 | B2 | 17 October 2023 |
| | | | | US | 2023-0185057 | A1 | 15 June 2023 |
| KR | 10-2021-0138219 | A | 19 November 2021 | KR | 10-2426399 | B1 | 29 July 2022 |
| KR | 10-2017-0098064 | A | 29 August 2017 | KR | 10-2600453 | B1 | 10 November 2023 |
| | | | | US | 2017-0242220 | A1 | 24 August 2017 |
| | | | | US | 9983389 | B2 | 29 May 2018 |

Form PCT/ISA/210 (patent family annex) (July 2022)